(19) **Europäisches Patentamt / European Patent Office / Office européen des brevets**

(11) **EP 4 325 731 A1**

(12) # EUROPEAN PATENT APPLICATION
published in accordance with Art. 153(4) EPC

(43) Date of publication:
**21.02.2024 Bulletin 2024/08**

(21) Application number: **22794449.3**

(22) Date of filing: **28.03.2022**

(51) International Patent Classification (IPC):
**H04B 7/0452** (2017.01)

(52) Cooperative Patent Classification (CPC):
**H04B 7/0452; H04B 7/0456; H04L 5/00**

(86) International application number:
**PCT/CN2022/083305**

(87) International publication number:
**WO 2022/227976 (03.11.2022 Gazette 2022/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.04.2021 CN 202110482373**

(71) Applicant: **Huawei Technologies Co., Ltd.**
**Shenzhen, Guangdong 518129 (CN)**

(72) Inventors:
• **GE, Shibin**
**Shenzhen, Guangdong 518129 (CN)**

• **CHEN, Zhenyuan**
**Shenzhen, Guangdong 518129 (CN)**
• **WANG, Xiaohan**
**Shenzhen, Guangdong 518129 (CN)**
• **YU, Yichuan**
**Shenzhen, Guangdong 518129 (CN)**
• **PANG, Jiyong**
**Shenzhen, Guangdong 518129 (CN)**
• **CAI, Hua**
**Shenzhen, Guangdong 518129 (CN)**

(74) Representative: **Epping - Hermann - Fischer Patentanwaltsgesellschaft mbH**
**Schloßschmidstraße 5**
**80639 München (DE)**

(54) **COMMUNICATION METHOD AND COMMUNICATION DEVICE**

(57)    This application provides a communication method and a communication apparatus. The communication method includes: receiving first information, where the first information indicates first group configuration information and/or second group configuration information, the first group configuration information indicates a correspondence between P reference signal ports and Z layers, and the second group configuration information indicates a correspondence between N frequency domain base vectors and the Z layers; and sending a precoding matrix indicator PMI corresponding to the Z layers, where the PMI is determined based on the first information. According to the communication method, a group configuration relationship between ports and/or frequency domain base vectors and a plurality of layers can be indicated based on partial reciprocity, to obtain accurate downlink channel state information. This implements multi-layer transmission, and improves system spectral efficiency and system transmission performance.

700

Terminal device | Network device

S710. First information, indicating first group configuration information and second group configuration information

S720. Precoding matrix indicator PMI corresponding to Z layers

FIG. 7

EP 4 325 731 A1

**Description**

This application claims priority to Chinese Patent Application No. 202110482373.7, filed with the China National Intellectual Property Administration on April 30, 2021 and entitled "COMMUNICATION METHOD AND COMMUNICATION APPARATUS", which is incorporated herein by reference in its entirety.

**TECHNICAL FIELD**

This application relates to the communication field, and more specifically, to a communication method and a communication apparatus.

**BACKGROUND**

At present, wide application of a massive multiple-input multiple-output (massive multiple-input multiple-output, Massive MIMO) technology plays an important role in improving system spectral efficiency. When the MIMO technology is for sending data, a network device needs to know accurate channel state information (channel state information, CSI) feedback information, and reduce interference between a plurality of users and/or interference between a plurality of signal layers of a same user through precoding.

In massive MIMO, spatial multiplexing may be for performing multi-layer (layer) transmission for a user. In a frequency division duplex (frequency division duplex, FDD) system, to implement multi-layer transmission, a user needs to feed back CSI corresponding to a plurality of layers, and report the CSI to a network device. However, in the FDD system, uplink and downlink channels are not completely reciprocal. Therefore, to implement multi-layer transmission, how the network device obtains accurate downlink channel state information based on partial reciprocity between uplink and downlink channels is an urgent technical problem to be resolved.

**SUMMARY**

This application provides a communication method and a communication apparatus, so that accurate downlink channel state information can be obtained based on partial reciprocity between uplink and downlink channels, thereby implementing multi-layer transmission and improving system transmission performance.

According to a first aspect, a communication method is provided. The method may be performed by a terminal device, or may be performed by a chip or a circuit used for the terminal device. This is not limited in this application. For ease of description, an example in which the method is performed by the terminal device is used for description below.

The method includes: receiving first information, where the first information indicates first group configuration information and/or second group configuration information, the first group configuration information indicates a correspondence between P reference signal ports and Z layers, and the second group configuration information indicates a correspondence between N frequency domain base vectors and the Z layers, where P, N, and Z are all positive integers greater than or equal to 1; and sending a precoding matrix indicator (precoding matrix indicator, PMI) corresponding to the Z layers, where the PMI is determined based on the first information.

It should be understood that, that the PMI is determined based on the first information may be understood as that the PMI is determined based on the ports and/or the frequency domain vectors that correspond to the Z layers and that are indicated by the first message.

According to the solution provided in this application, by receiving the first group configuration information and/or the second group configuration information, the terminal device can learn of the correspondence between the P reference signal ports and/or the N frequency domain base vectors and the Z layers, to specifically determine a precoding matrix indicator of each of the Z layers based on the first group configuration information and/or the second group configuration information. This method not only can reduce unnecessary calculation complexity for some layers and reduce power consumption of the terminal device, but also can obtain accurate channel state information of the Z layers, thereby improving system transmission performance.

According to a second aspect, a communication method is provided. The method may be performed by a network device, or may be performed by a chip or a circuit used for the network device. This is not limited in this application. For ease of description, an example in which the method is performed by the network device is used for description below.

The method includes: sending first information, where the first information indicates first group configuration information and/or second group configuration information, the first group configuration information indicates a correspondence between P reference signal ports and Z layers, and the second group configuration information indicates a correspondence between N frequency domain base vectors and the Z layers, where P, N, and Z are all positive integers greater than or equal to 1; and receiving a precoding matrix indicator PMI corresponding to the Z layers, where the PMI is determined based on the first information.

According to the solution provided in this application, by sending the first group configuration information and/or the second group configuration information, the network device can learn of the correspondence between the P reference signal ports and/or the N frequency domain base vectors and the Z layers, to specifically determine a precoding matrix indicator of each of the Z layers based on the first group configuration information and/or the second group configuration information. This method not only can reduce unnecessary calculation complexity for some layers and reduce power consumption of the terminal device, but also can obtain accurate channel state information of the Z layers, thereby improving system transmission performance.

With reference to the first aspect or the second aspect, in some implementations, each of the Z layers corresponds to one or more of the P reference signal ports.

For example, in this implementation, two layers may be used as an example. The first group configuration information may indicate a correspondence between 16 CSI-RS ports and the two layers. To be specific, a first layer corresponds to a port 1 to a port 8, and a second layer corresponds to a port 9 to a port 16; a first layer corresponds to a port 1 to a port 4, and a second layer corresponds to a port 9 and a port 10; or the like. According to this implementation, ports corresponding to the first layer and the second layer are completely different, and the two layers have respective dedicated port group configuration information. The terminal device may specifically calculate a precoding matrix indicator PMI based on dedicated ports corresponding to the first layer and the second layer, to improve system running efficiency and transmission performance.

Optionally, the first layer corresponds to the port 1 to the port 10, and the second layer corresponds to the port 5 to the port 16. According to this implementation, the first layer and the second layer have respective dedicated port group configuration information. For example, the port 1 to the port 4 correspond to only the first layer, and the port 11 to the port 16 correspond to only the second layer. In addition, the first layer and the second layer have common port group configuration information, for example, the port 5 to the port 10. The terminal device may specifically calculate the precoding matrix indicator PMI based on dedicated ports corresponding to the first layer and the second layer, to reduce terminal power consumption. In addition, channel state information of the two layers can be accurately obtained based on a common port corresponding to the first layer and the second layer, to improve system running efficiency and transmission performance.

Optionally, both the first layer and the second layer correspond to the port 1 to the port 16. According to this implementation, the first layer and the second layer have only common port group configuration information. The terminal device may calculate the precoding matrix indicator PMI based on a common port corresponding to the first layer and the second layer without distinction, thereby improving system transmission performance.

For example, in this implementation, three layers may be used as an example. The first group configuration information further indicates a correspondence between 16 CSI-RS ports and the three layers. To be specific, a first layer corresponds to a port 1 to a port 5, a second layer corresponds to a port 6 to a port 12, and a third layer corresponds to a port 13 to a port 16; a first layer corresponds to a port 1 to a port 3, a second layer corresponds to a port 6 to a port 10, and a third layer corresponds to a port 12 to a port 15; or the like. According to this implementation, ports corresponding to the first layer, the second layer, and the third layer are completely different, and the three layers have respective dedicated port group configuration information. The terminal device may specifically calculate a precoding matrix indicator PMI based on dedicated ports corresponding to the first layer, the second layer, and the third layer, to improve system running efficiency and transmission performance.

Optionally, the first layer corresponds to the port 1 to the port 7, the second layer corresponds to the port 5, the port 6, the port 8 to the port 11, and the port 12, and the third layer corresponds to the port 6, the port 7, and the port 12 to the port 16. According to this implementation, the first layer, the second layer, and the third layer have respective dedicated port group configuration information. For example, the port 1 to the port 4 correspond to only the first layer, the port 8 to the port 11 correspond to only the second layer, and the port 13 to the port 16 correspond to only the third layer. In addition, the first layer, the second layer, and the third layer have common port group configuration information, for example, the port 6. The terminal device may specifically calculate the precoding matrix indicator PMI based on dedicated ports corresponding to the first layer, the second layer, and the third layer, to reduce terminal power consumption. In addition, channel state information of the three layers can be accurately obtained based on a common port corresponding to the first layer, the second layer, and the third layer, to improve system running efficiency and transmission performance.

Particularly, in this implementation, relative to the third layer, the port 5 may also be understood as port group configuration information dedicated to the first layer and the second layer; relative to the second layer, the port 7 may also be understood as port group configuration information dedicated to the first layer and the third layer; and relative to the first layer, the port 12 may also be understood as port group configuration information dedicated to the second layer and the third layer.

Optionally, the first layer, the second layer, and the third layer all correspond to the port 1 to the port 16. According to this implementation, the first layer, the second layer, and the third layer have only common port group configuration information. The terminal device may calculate the precoding matrix indicator PMI based on a common port corresponding to the first layer, the second layer, and the third layer without distinction, thereby improving system transmission performance.

It should be noted that, in the foregoing specific implementations, a quantity of transport layers and a quantity of ports corresponding to each layer are not limited.

With reference to the first aspect or the second aspect, in some implementations, ports corresponding to at least two of the Z layers are not completely the same.

For example, in this implementation, three layers may be used as an example. A first layer corresponds to a port 1 to a port 7, a second layer corresponds to the port 1 to the port 6, a port 8 to a port 11, and a port 12, and a third layer corresponds to the port 6, the port 7, and the port 12 to a port 16. According to this implementation, ports corresponding to the three layers are not completely the same.

Optionally, the first layer corresponds to the port 1 to the port 10, and the second layer and the third layer both correspond to the port 6 to the port 16. According to this implementation, ports corresponding to the first layer and the second layer, ports corresponding to the first layer and the third layer, and the like are not completely the same.

Based on the foregoing implementation, the terminal device may specifically calculate the precoding matrix indicator PMI based on dedicated ports corresponding to the three layers, to reduce terminal power consumption. In addition, channel state information of the three layers can be accurately obtained based on a common port corresponding to the first layer, the second layer, and the third layer, to improve system running efficiency and transmission performance.

It should be noted that, in the foregoing specific implementations, a quantity of transport layers and a quantity of ports corresponding to each layer are not limited.

With reference to the first aspect or the second aspect, in some implementations, each of the Z layers corresponds to one or more of the N frequency domain base vectors.

It should be noted that a specific form of the frequency domain base vector may be:

$$W_f(i,n) = e^{\frac{j 2\pi ni}{N_3}}, n = 0, 1, ..., N_3 - 1,$$

where
i is an integer greater than or equal to 0, and $N_3$ is an integer greater than 0.

For example, in this implementation, two layers may be used as an example. The second group configuration information may indicate a correspondence between three frequency domain base vectors and the two layers. To be specific, a first layer corresponds to a frequency domain base vector 1 and a frequency domain base vector 2, and a second layer corresponds to a frequency domain base vector 3; a first layer corresponds to a frequency domain base vector 1, and a second layer corresponds to a frequency domain base vector 3; or the like. According to this implementation, frequency domain base vectors corresponding to the first layer and the second layer are completely different, and the two layers have respective dedicated frequency domain base vector group configuration information. The terminal device may specifically calculate a precoding matrix indicator PMI based on dedicated frequency domain base vectors corresponding to the first layer and the second layer, to improve system running efficiency and transmission performance.

Optionally, the first layer corresponds to the frequency domain base vector 1 and the frequency domain base vector 2, and the second layer corresponds to the frequency domain base vector 2 and the frequency domain base vector 3. According to this implementation, the first layer and the second layer have respective dedicated frequency domain base vector group configuration information. For example, the frequency domain base vector 1 corresponds to only the first layer, and the frequency domain base vector 3 corresponds to only the second layer. In addition, the first layer and the second layer have common frequency domain base vector group configuration information, for example, the frequency domain base vector 2. The terminal device may specifically calculate the precoding matrix indicator PMI based on dedicated frequency domain base vectors corresponding to the first layer and the second layer, to reduce terminal power consumption. In addition, channel state information of the two layers can be accurately obtained based on a common frequency domain base vector corresponding to the first layer and the second layer, to improve system running efficiency and transmission performance.

Optionally, both the first layer and the second layer correspond to the frequency domain base vector 1 to the frequency domain base vector 3. According to this implementation, the first layer and the second layer have only common frequency domain base vector group configuration information. The terminal device may calculate the precoding matrix indicator PMI based on a common frequency domain base vector corresponding to the first layer and the second layer without distinction, thereby improving system transmission performance.

For example, in this implementation, three layers may be used as an example. The second group configuration information further indicates a correspondence between eight frequency domain base vectors and the three layers. To be specific, a first layer corresponds to a frequency domain base vector 1 to a frequency domain base vector 3, a second layer corresponds to a frequency domain base vector 4 to a frequency domain base vector 6, and a third layer corresponds to a frequency domain base vector 7 and a frequency domain base vector 8; a first layer corresponds to a frequency domain base vector 1 and a frequency domain base vector 2, a second layer corresponds to a frequency domain base vector 4 and a frequency domain base vector 5, and a third layer corresponds to a frequency domain base vector 7 and a frequency domain base vector 8; and the like. According to this implementation, frequency domain base vectors corresponding to the first layer, the second layer, and the third layer are completely different, and the three layers have respective dedicated frequency domain base vector group configuration information. The terminal device may specifically calculate a precoding matrix indicator PMI based on dedicated frequency domain base vectors corresponding to the first layer, the second layer, and the third layer, to improve system running efficiency and transmission performance.

Optionally, the first layer corresponds to the frequency domain base vector 1 to the frequency domain base vector 4, the second layer corresponds to the frequency domain base vector 2, the frequency domain base vector 3, the frequency domain base vector 5, and the frequency domain base vector 6, and the third layer corresponds to the frequency domain base vector 3 to the frequency domain base vector 5, the frequency domain base vector 7, and the frequency domain base vector 8. According to this implementation, the first layer, the second layer, and the third layer have respective dedicated frequency domain base vector group configuration information. For example, the frequency domain base vector 1 corresponds to only the first layer, the frequency domain base vector 6 corresponds to only the second layer, and the frequency domain base vector 7 and the frequency domain base vector 8 correspond to only the third layer. In addition, the first layer, the second layer, and the third layer have common port group configuration information, for example, the frequency domain base vector 3. The terminal device may specifically calculate the precoding matrix indicator PMI based on dedicated frequency domain base vectors corresponding to the first layer, the second layer, and the third layer, to reduce terminal power consumption. In addition, channel state information of the three layers can be accurately obtained based on a common frequency domain base vector corresponding to the first layer, the second layer, and the third layer, to improve system running efficiency and transmission performance.

Particularly, in this implementation, relative to the third layer, the frequency domain base vector 2 may also be understood as frequency domain base vector group configuration information dedicated to the first layer and the second layer; relative to the second layer, the frequency domain base vector 4 may also be understood as frequency domain base vector group configuration information dedicated to the first layer and the third layer; and relative to the first layer, the frequency domain base vector 5 may also be understood as frequency domain base vector group configuration information dedicated to the second layer and the third layer.

Optionally, the first layer, the second layer, and the third layer all correspond to the frequency domain base vector 1 to the frequency domain base vector 3. According to this implementation, the first layer, the second layer, and the third layer have only common frequency domain base vector group configuration information. The terminal device may calculate the precoding matrix indicator PMI based on a common frequency domain base vector corresponding to the first layer, the second layer, and the third layer without distinction, thereby improving system transmission performance.

It should be noted that, in the foregoing specific implementations, a quantity of transport layers and a quantity of frequency domain base vectors corresponding to each layer are not limited. With reference to the first aspect or the second aspect, in some implementations, frequency domain base vectors corresponding to at least two of the Z layers are not completely the same.

For example, in this implementation, three layers may be used as an example. A first layer corresponds to a frequency domain base vector 1 to a frequency domain base vector 4, a second layer corresponds to a frequency domain base vector 2, a frequency domain base vector 3, a frequency domain base vector 5, and a frequency domain base vector 6, and a third layer corresponds to the frequency domain base vector 3 to the frequency domain base vector 5, a frequency domain base vector 7, and a frequency domain base vector 8. According to this implementation, frequency domain base vectors corresponding to the three layers are not completely the same.

Optionally, the first layer corresponds to the frequency domain base vector 1 to the frequency domain base vector 6, and both the second layer and the third layer correspond to the frequency domain base vector 4 to the frequency domain base vector 8. According to this implementation, frequency domain base vectors corresponding to the first layer and the second layer, frequency domain base vectors corresponding to the first layer and the third layer, and the like are not completely the same.

Based on the foregoing implementation, the terminal device may calculate, in a targeted manner, the precoding matrix indicator PMI based on dedicated frequency domain base vectors corresponding to the three layers, to reduce terminal power consumption. In addition, channel state information of the three layers can be accurately obtained based on a common frequency domain base vector corresponding to the first layer, the second layer, and the third layer, to improve system running efficiency and transmission performance.

It should be noted that, in the foregoing specific implementations, a quantity of transport layers and a quantity of frequency domain base vectors corresponding to each layer are not limited.

With reference to the first aspect or the second aspect, in some implementations, the first group configuration information and/or the second group configuration information are/is carried in at least one of the following signaling:

radio resource control (radio resource control, RRC), a media access control control element (media access control-control element, MAC CE), or downlink control information (downlink control information, DCI); or the first group configuration information and/or the second group configuration information are/is predefined in a protocol.

With reference to the first aspect or the second aspect, in some implementations, a codebook structure of the PMI that is fed back meets:

$$W = W_1 \tilde{W}_2 \mathbf{W}_f^H \, ,$$

where

$W_1$ is a port selection matrix, $\tilde{W}_2$ is a superposition coefficient matrix, $\mathbf{W}_f$ is a frequency domain base vector matrix, $W_1$ is a port selection matrix specific to each of the Z layers, and $\mathbf{W}_f$ is a frequency domain base vector matrix specific to each of the Z layers.

$\mathbf{W}_f$ is a frequency domain base vector matrix, and a frequency domain base vector therein may be selected from a frequency domain vector set indicated by a base station. For example, the base station indicates/configures N frequency domain vectors to a user. For example, N=2, 4, or 8. User equipment (user equipment, UE) selects Mv frequency domain vectors from the N frequency domain vectors indicated by the base station. For example, Mv = 1, 2, or 4. Generally, N ≥ Mv. For example, when Mv = 1, N = Mv = 1; when Mv ∈ [a, b] (a and b are positive integers), N ≥ Mv, for example, when Mv = 2, N ≥ Mv; when Mv ∈ [c, d] (c and d are positive integers), N = Mv. In addition, there may be no $\mathbf{W}_f$, that is, the codebook structure is changed to $W = W_1 * \tilde{W}_2$. For example, when Mv = 1, there may be no $\mathbf{W}_f$, and the codebook structure changes to $W = W_1 * \tilde{W}_2$.

$W_1$ is a port selection matrix, and the UE may select $K_1$ CSI-RS ports from the P CSI-RS ports by using a combination quantity or a bitmap. For example, in $\mathbf{W}_f$, when Mv = 1, the UE selects the $K_1$ ports by using a bitmap; and when Mv > 1, the UE selects the $K_1$ ports by using a combination quantity.

$\tilde{W}_2$ is a superposition coefficient matrix, and the UE may indicate, by using a bitmap, a non-zero coefficient reported by the UE. For example, Mv = 1, to indicate that a bitmap for reporting a non-zero coefficient is missing. For example, it may be represented as that CSI information reported by the UE does not include bitmap overheads. When Mv > 1, the UE uses a bitmap to indicate a non-zero coefficient reported by the UE. The CSI information reported by the UE includes bitmap overheads.

For example, two layers are used as an example. It is assumed that CSI-RS ports corresponding to a first layer are ports 1 to 10, and CSI-RS ports corresponding to a second layer are ports 8 to 16. In this case, $W_1$ for the first layer is a port selection matrix corresponding to the ports 1 to 10, and $W_1$ for the second layer is a port selection matrix corresponding to the ports 8 to 16. That is, the port selection matrices $W_1$ corresponding to the first layer and the second layer are completely different, and the two layers have respective dedicated port group configuration information.

For example, three layers are used as an example. It is assumed that CSI-RS ports corresponding to a first layer are ports 1 to 8, CSI-RS ports corresponding to a second layer are ports 6 to 12, and CSI-RS ports corresponding to a third layer are ports 10 to 16. In this case, $W_1$ for the first layer is a port selection matrix corresponding to the ports 1 to 8, $W_1$ for the second layer is a port selection matrix corresponding to the ports 6 to 12, and $W_1$ for the third layer is a port selection matrix corresponding to the ports 10 to 16. That is, the port selection matrices $W_1$ corresponding to the first layer, the second layer, and the third layer are completely different, and the three layers have respective dedicated port group configuration information.

Similarly, for the Z layers, $W_1$ indicates that one or more reference signal ports correspond to only one of the Z layers, and is completely different from port selection matrices $W_1$ corresponding to the other Z-1 layers.

For example, two layers are used as an example. It is assumed that a frequency domain base vector matrix for a first layer corresponds to frequency domain base vectors 1 and 2, and a frequency domain base vector matrix for a second layer corresponds to frequency domain base vectors 1 and 3. In this case, $\mathbf{W}_f$ for the first layer is a frequency domain base vector matrix corresponding to the frequency domain base vectors 1 and 2, and $\mathbf{W}_f$ for the second layer is a frequency domain base vector matrix corresponding to the frequency domain base vectors 1 and 3. That is, frequency domain base vector matrices $\mathbf{W}_f$ corresponding to the first layer and the second layer are completely different, and the two layers have respective dedicated frequency domain base vector group configuration information.

For example, three layers are used as an example. It is assumed that a frequency domain base vector matrix for a first layer corresponds to frequency domain base vectors 1 to 3, a frequency domain base vector matrix for a second layer corresponds to frequency domain base vectors 2 to 4, and a frequency domain base vector matrix for a third layer corresponds to frequency domain base vectors 5 and 6. In this case, $\mathbf{W}_f$ for the first layer is a frequency domain base vector matrix corresponding to the frequency domain base vectors 1 to 3, $\mathbf{W}_f$ for the second layer is a frequency domain base vector matrix corresponding to the frequency domain base vectors 2 to 4, and $\mathbf{W}_f$ for the third layer is a frequency domain base vector matrix corresponding to the frequency domain base vectors 5 and 6. That is, the frequency domain base vector matrices $\mathbf{W}_f$ corresponding to the first layer, the second layer, and the third layer are completely different, and the three layers have respective dedicated frequency domain base vector group configuration information.

Similarly, for the Z layers, $\mathbf{W}_f$ indicates that one or more frequency domain base vectors correspond to only one of the Z layers, and is completely different from frequency domain base vector matrices $\mathbf{W}_f$ corresponding to the other Z-1 layers.

With reference to the first aspect or the second aspect, in some implementations, the first group configuration information and/or the second group configuration information are/is determined based on K angle-delay pairs of uplink channel information, and K is a positive integer greater than or equal to 1.

It should be noted that each of the K angle-delay pairs includes one angle vector and one delay vector. The P reference signal ports correspond to the K angle-delay pairs, and a reference signal of each of the P reference signal ports is obtained by precoding the reference signal based on one angle vector and one delay vector. The N frequency domain base vectors correspond to the K angle-delay pairs, and a reference signal of each of the N frequency domain base vectors is obtained by precoding the reference signal based on one angle vector and one delay vector. According to a third aspect, a communication method is provided. The method may be performed by a terminal device, or may be performed by a chip or a circuit used for the terminal device. This is not limited in this application. For ease of description, an example in which the method is performed by the terminal device is used for description below.

The method includes: generating first indication information, where the first indication information indicates quantized information of M jointly normalized weighting coefficient sets, each of the M weighting coefficient sets is determined by using a reference signal, the M weighting coefficient sets are in a one-to-one correspondence with M layers, and M is a positive integer greater than or equal to 2; and sending the first indication information.

According to the solution provided in this application, the terminal device generates the first indication information, to indicate the quantized information of the M jointly normalized weighting coefficient sets corresponding to the M layers, and feeds back the first indication information to a network device, so that a power difference between the M layers can be obtained. In addition, power of the M layers can be effectively controlled based on the power difference between the M layers, thereby improving a system performance gain.

It should be understood that, in the foregoing implementation, joint normalization may mean: All weighting coefficients in the M weighting coefficient sets are normalized by using a weighting coefficient with a maximum modulus value in a weighting coefficient set as a reference. Alternatively, a weighting coefficient with a maximum modulus value in a weighting coefficient set is used as a reference to normalize a weighting coefficient with a maximum modulus value in each of the other M-1 weighting coefficient sets, and then all weighting coefficients in respective weighting coefficient sets are normalized by using a weighting coefficient with a maximum modulus value in the M weighting coefficient sets as a reference. In short, joint normalization is to perform quantization and normalization on the M weighting coefficient sets jointly by using one of the weighting coefficient sets as a reference.

It should be noted that, in joint normalization in this embodiment of this application, a reference weighting coefficient may be a weighting coefficient with a maximum modulus value in a weighting coefficient set corresponding to the reference weighting coefficient, or may be any weighting coefficient in a weighting coefficient set corresponding to the reference weighting coefficient.

It should be further understood that the quantized information in this application may be a specific quantized value, for example, a quantized value of an amplitude or a quantized value of a phase. For example, all weighting coefficients in the M layers are normalized by using a weighting coefficient $C_{12}$ with a maximum modulus value in a first weighting coefficient set corresponding to the first layer as a reference for joint quantization. The reference in this application may be a weighting coefficient with a maximum modulus value, or may be any weighting coefficient in a weighting coefficient set. In this case, the terminal device may finally report quantized values of all the weighting coefficients in the M weighting coefficient sets, including a quantized value of the weighting coefficient $C_{12}$ with the maximum modulus value in the first weighting coefficient set, and the like.

Optionally, the terminal device may alternatively report an index obtained through quantization of a weighting coefficient, for example, location information or identification information of the weighting coefficient. For example, all weighting coefficients in the M layers are normalized by using a weighting coefficient $C_{12}$ with a maximum modulus value in a first weighting coefficient set corresponding to the first layer as a reference for joint quantization. The reference in this application may be a weighting coefficient with a maximum modulus value, or may be any weighting coefficient in a weighting coefficient set. In this case, the terminal device may finally report location information or an index of the weighting coefficient $C_{12}$ with the maximum modulus value in the first weighting coefficient set, and report quantized values of all weighting coefficients except the weighting coefficient $C_{12}$ with the maximum modulus value.

Optionally, as predefined in a protocol, the network device and the terminal device determine in advance that a weighting coefficient in a weighting coefficient set is used as a quantization reference. For example, a weighting coefficient $C_{11}$ in the first weighting coefficient set corresponding to the first layer is used as a joint quantization reference. In this case, after quantization and normalization, the terminal device does not need to report quantized information and/or an index of the weighting coefficient $C_{11}$ again. This implementation can reduce signaling overheads and reduce terminal power consumption.

It should be noted that a quantity of pieces of quantized information reported by the terminal device and reporting are not specifically limited in this application. One or more of the M layers may be reported.

With reference to the third aspect, in some implementations of the third aspect, each of the M weighting coefficient sets includes a plurality of weighting coefficients. All weighting coefficients in the M weighting coefficient sets are normalized based on a first weighting coefficient, to obtain the quantized information of the M jointly normalized weighting coefficient sets, where the first weighting coefficient is a weighting coefficient in an $L^{th}$ weighting coefficient set, the $L^{th}$ weighting coefficient set is any one of the M weighting coefficient sets, and L is a positive integer; and a first message is sent, where the first message indicates the first weighting coefficient. With reference to the third aspect, in some implementations of the third aspect, first normalization is performed on M-1 third weighting coefficients based on a second weighting coefficient, where the second weighting coefficient is a weighting coefficient in a $U^{th}$ weighting coefficient set, the $U^{th}$ weighting coefficient set corresponds to a $u^{th}$ layer, the third weighting coefficient is a weighting coefficient in each of M-1 weighting coefficient sets other than the $U^{th}$ weighting coefficient set in the M weighting coefficient sets, the M-1 weighting coefficient sets are in a one-to-one correspondence with M-1 layers other than the $u^{th}$ layer in the M layers, both U and u are positive integers, and the $u^{th}$ layer belongs to the M layers; second normalization is performed on all weighting coefficients in the $U^{th}$ weighting coefficient set based on the second weighting coefficient, and third normalization is performed on all weighting coefficients in a weighting coefficient set corresponding to the third weighting coefficient; the quantized information of the M jointly normalized weighting coefficient sets is obtained based on the first normalization, the second normalization, and the third normalization; and a second message is sent, where the second message indicates the second weighting coefficient and the M-1 third weighting coefficients. With reference to the third aspect, in some implementations of the third aspect, fourth normalization is performed on M-1 fifth weighting coefficients based on a fourth weighting coefficient, where the fourth weighting coefficient is a weighting coefficient in an $X^{th}$ weighting coefficient set, the $X^{th}$ weighting coefficient set corresponds to an $x^{th}$ layer, the fifth weighting coefficient is a weighting coefficient in each of M-1 weighting coefficient sets other than the $X^{th}$ weighting coefficient set in the M weighting coefficient sets, the M-1 weighting coefficient sets are in a one-to-one correspondence with M-1 layers other than the $x^{th}$ layer in the M layers, both X and x are positive integers, and the $x^{th}$ layer belongs to the M layers; fifth normalization is performed on all weighting coefficients in the $X^{th}$ weighting coefficient set based on the fourth weighting coefficient; sixth normalization and seventh normalization are performed, based on the fourth weighting coefficient and the fifth weighting coefficient respectively, on all weighting coefficients in a weighting coefficient set corresponding to the fifth weighting coefficient; the quantized information of the M jointly normalized weighting coefficient sets is obtained based on the fourth normalization, the fifth normalization, the sixth normalization, and the seventh normalization; and a third message is sent, where the third message indicates the fourth weighting coefficient and the M-1 fifth weighting coefficients.

According to a fourth aspect, a communication method is provided. The method may be performed by a network device, or may be performed by a chip or a circuit used for the network device. This is not limited in this application. For ease of description, an example in which the method is performed by the network device is used for description below.

The method includes: receiving first indication information, where the first indication information indicates quantized information of M jointly normalized weighting coefficient sets, each of the M weighting coefficient sets is determined by using a reference signal, the M weighting coefficient sets are in a one-to-one correspondence with M layers, and M is a positive integer greater than or equal to 2; and determining a power difference between the M layers based on the first indication information.

According to the solution provided in this application, the network device receives the first indication information, to indicate the quantized information of the M jointly normalized weighting coefficient sets corresponding to the M layers, and can determine the power difference between the M layers based on the first indication information, so that power of the M layers can be effectively controlled, and a system performance gain can be improved.

It should be understood that, in the foregoing implementation, joint normalization may mean: All weighting coefficients in the M weighting coefficient sets are normalized by using a weighting coefficient with a maximum modulus value in a weighting coefficient set as a reference. Alternatively, a weighting coefficient with a maximum modulus value in a weighting coefficient set is used as a reference to normalize a weighting coefficient with a maximum modulus value in each of the other M-1 weighting coefficient sets, and then all weighting coefficients in respective weighting coefficient sets are normalized by using a weighting coefficient with a maximum modulus value in the M weighting coefficient sets as a reference. In short, joint normalization is to perform quantization and normalization on the M weighting coefficient sets jointly by using one of the weighting coefficient sets as a reference.

It should be noted that, in joint normalization in this embodiment of this application, a reference weighting coefficient may be a weighting coefficient with a maximum modulus value in a weighting coefficient set corresponding to the reference weighting coefficient, or may be any weighting coefficient in a weighting coefficient set corresponding to the reference weighting coefficient.

It should be further understood that the quantized information in this application may be a specific quantized value, for example, a quantized value of an amplitude or a quantized value of a phase. For example, all weighting coefficients in the M layers are normalized by using a weighting coefficient $C_{12}$ with a maximum modulus value in a first weighting coefficient set corresponding to the first layer as a reference for joint quantization. The reference in this application may be a weighting coefficient with a maximum modulus value, or may be any weighting coefficient in a weighting coefficient set. In this case, the terminal device may finally report quantized values of all the weighting coefficients in the M weighting coefficient sets, including a quantized value of the weighting coefficient $C_{12}$ with the maximum modulus value in the first weighting coefficient set, and the like.

Optionally, the terminal device may alternatively report an index obtained through quantization of a weighting coefficient, for example, location information or identification information of the weighting coefficient. For example, all weighting coefficients in the M layers are normalized by using a weighting coefficient $C_{12}$ with a maximum modulus value in a first weighting coefficient set corresponding to the first layer as a reference for joint quantization. The reference in this application may be a weighting coefficient with a maximum modulus value, or may be any weighting coefficient in a weighting coefficient set. In this case, the terminal device may finally report location information or an index of the weighting coefficient $C_{12}$ with the maximum modulus value in the first weighting coefficient set, and report quantized values of all weighting coefficients except the weighting coefficient $C_{12}$ with the maximum modulus value.

Optionally, as predefined in a protocol, the network device and the terminal device determine in advance that a weighting coefficient in a weighting coefficient set is used as a quantization reference. For example, a weighting coefficient $C_{11}$ in the first weighting coefficient set corresponding to the first layer is used as a joint quantization reference. In this case, after quantization and normalization, the terminal device does not need to report quantized information and/or an index of the weighting coefficient $C_{11}$ again. This implementation can reduce signaling overheads and reduce terminal power consumption.

It should be noted that a quantity of pieces of quantized information reported by the terminal device and reporting are not specifically limited in this application. One or more of the M layers may be reported.

With reference to the fourth aspect, in some implementations of the fourth aspect, each of the M weighting coefficient sets includes a plurality of weighting coefficients. A first message is received, where the first message indicates a first weighting coefficient, the first weighting coefficient is for normalizing all weighting coefficients in the M weighting coefficient sets, the first weighting coefficient is a weighting coefficient in an $L^{th}$ weighting coefficient set, the $L^{th}$ weighting coefficient set is any one of the M weighting coefficient sets, and L is a positive integer.

With reference to the third aspect or the fourth aspect, in some implementations, the first weighting coefficient is a weighting coefficient with a maximum modulus value in the $L^{th}$ weighting coefficient set.

With reference to the third aspect or the fourth aspect, in some implementations of the fourth aspect, the $L^{th}$ weighting coefficient set is determined by a terminal device, or the $L^{th}$ weighting coefficient set is predefined in a protocol.

With reference to the fourth aspect, in some implementations of the fourth aspect, a second message is received, where the second message indicates a second weighting coefficient and M-1 third weighting coefficients, the second weighting coefficient is for performing first normalization on the M-1 third weighting coefficients, the second weighting coefficient is a weighting coefficient in a $U^{th}$ weighting coefficient set, the $U^{th}$ weighting coefficient set corresponds to a $u^{th}$ layer, the third weighting coefficient is a weighting coefficient in each of M-1 weighting coefficient sets other than the $U^{th}$ weighting coefficient set in the M weighting coefficient sets, the M-1 weighting coefficient sets are in a one-to-one correspondence with M-1 layers other than the $u^{th}$ layer in the M layers, both U and u are positive integers, and the $u^{th}$ layer belongs to the M layers; and the second weighting coefficient is further for performing second normalization on all weighting coefficients in the $U^{th}$ weighting coefficient set, the third weighting coefficient is for performing third normalization on all weighting coefficients in a weighting coefficient set corresponding to the third weighting coefficient, and the first normalization, the second normalization, and the third normalization are for obtaining the quantized information of the M jointly normalized weighting coefficient sets.

With reference to the third aspect or the fourth aspect, in some implementations, the second weighting coefficient is a weighting coefficient with a maximum modulus value in the $U^{th}$ weighting coefficient set, and/or the third weighting coefficient is a weighting coefficient with a maximum modulus value in each of the M-1 weighting coefficient sets other than the $U^{th}$ weighting coefficient set in the M weighting coefficient sets.

With reference to the third aspect or the fourth aspect, in some implementations, the $U^{th}$ weighting coefficient set is determined by a terminal device, or the $U^{th}$ weighting coefficient set is predefined in a protocol.

With reference to the fourth aspect, in some implementations of the fourth aspect, a third message is received, where the third message indicates a fourth weighting coefficient and M-1 fifth weighting coefficients, the fourth weighting coefficient is for performing fourth normalization on the M-1 fifth weighting coefficients, the fourth weighting coefficient is a weighting coefficient in an $X^{th}$ weighting coefficient set, the $X^{th}$ weighting coefficient set corresponds to an $x^{th}$ layer, the fifth weighting coefficient is a weighting coefficient in each of M-1 weighting coefficient sets other than the $X^{th}$ weighting coefficient set in the M weighting coefficient sets, the M-1 weighting coefficient sets are in a one-to-one correspondence with M-1 layers other than the $x^{th}$ layer in the M layers, both X and x are positive integers, and the $x^{th}$ layer belongs to the M layers; and the fourth weighting coefficient is further for performing fifth normalization on all weighting coefficients in the $X^{th}$ weighting coefficient set, the fourth weighting coefficient and the fifth weighting coefficient are further respectively for performing sixth normalization and seventh normalization on all weighting coefficients in a weighting coefficient set corresponding to the fifth weighting coefficient, and the four normalization, the fifth normalization, the sixth normalization, and the seventh normalization are for obtaining the quantized information of the M jointly normalized weighting coefficient sets.

With reference to the third aspect or the fourth aspect, in some implementations, the fourth weighting coefficient is a weighting coefficient with a maximum modulus value in the $X^{th}$ weighting coefficient set, and/or the fifth weighting coefficient is a weighting coefficient with a maximum modulus value in each of the M-1 weighting coefficient sets other than the $X^{th}$ weighting coefficient set in the M weighting coefficient sets.

With reference to the third aspect or the fourth aspect, in some implementations, the $X^{th}$ weighting coefficient set is determined by a terminal device, or the $X^{th}$ weighting coefficient set is predefined in a protocol.

With reference to the third aspect or the fourth aspect, in some implementations, the M weighting coefficient sets and K angle-delay pairs corresponding to the M weighting coefficient sets are used by the network device to construct a precoding matrix, where K is a positive integer greater than or equal to 1.

It should be noted that each of the K angle-delay pairs includes one angle vector and one delay vector.

According to a fifth aspect, a communication apparatus is provided, and includes: a transceiver unit, configured to receive first information, where the first information indicates first group configuration information and/or second group configuration information, the first group configuration information indicates a correspondence between P reference signal ports and Z layers, and the second group configuration information indicates a correspondence between N frequency domain base vectors and the Z layers, where P, N, and Z are all positive integers greater than or equal to 1. The transceiver unit is further configured to send a precoding matrix indicator PMI corresponding to the Z layers, where the PMI is determined based on the first information. According to a sixth aspect, a communication apparatus is provided, and includes: a transceiver unit, configured to send first information, where the first information indicates first group configuration information and/or second group configuration information, the first group configuration information indicates a correspondence between P reference signal ports and Z layers, and the second group configuration information indicates a correspondence between N frequency domain base vectors and the Z layers, where P, N, and Z are all positive integers greater than or equal to 1; and a processing unit, configured to receive a precoding matrix indicator PMI corresponding to the Z layers, where the PMI is determined based on the first information.

With reference to the fifth aspect or the sixth aspect, in some implementations, each of the Z layers corresponds to one or more of the P reference signal ports.

For example, in this implementation, two layers may be used as an example. The first group configuration information may indicate a correspondence between 16 CSI-RS ports and the two layers. To be specific, a first layer corresponds to a port 1 to a port 8, and a second layer corresponds to a port 9 to a port 16; a first layer corresponds to a port 1 to a port 4, and a second layer corresponds to a port 9 and a port 10; or the like. According to this implementation, ports corresponding to the first layer and the second layer are completely different, and the two layers have respective dedicated port group configuration information. The terminal device may specifically calculate a precoding matrix indicator PMI based on dedicated ports corresponding to the first layer and the second layer, to improve system running efficiency and transmission performance.

Optionally, the first layer corresponds to the port 1 to the port 10, and the second layer corresponds to the port 5 to the port 16. According to this implementation, the first layer and the second layer have respective dedicated port group configuration information. For example, the port 1 to the port 4 correspond to only the first layer, and the port 11 to the port 16 correspond to only the second layer. In addition, the first layer and the second layer have common port group configuration information, for example, the port 5 to the port 10. The terminal device may specifically calculate the precoding matrix indicator PMI based on dedicated ports corresponding to the first layer and the second layer, to reduce terminal power consumption. In addition, channel state information of the two layers can be accurately obtained based on a common port corresponding to the first layer and the second layer, to improve system running efficiency and transmission performance. Optionally, both the first layer and the second layer correspond to the port 1 to the port 16. According to this implementation, the first layer and the second layer have only common port group configuration information. The terminal device may calculate the precoding matrix indicator PMI based on a common port corresponding to the first layer and the second layer without distinction, thereby improving system transmission performance.

For example, in this implementation, three layers may be used as an example. The first group configuration information further indicates a correspondence between 16 CSI-RS ports and the three layers. To be specific, a first layer corresponds to a port 1 to a port 5, a second layer corresponds to a port 6 to a port 12, and a third layer corresponds to a port 13 to a port 16; a first layer corresponds to a port 1 to a port 3, a second layer corresponds to a port 6 to a port 10, and a third layer corresponds to a port 12 to a port 15; or the like. According to this implementation, ports corresponding to the first layer, the second layer, and the third layer are completely different, and the three layers have respective dedicated port group configuration information. The terminal device may specifically calculate a precoding matrix indicator PMI based on dedicated ports corresponding to the first layer, the second layer, and the third layer, to improve system running efficiency and transmission performance.

Optionally, the first layer corresponds to the port 1 to the port 7, the second layer corresponds to the port 5, the port 6, the port 8 to the port 11, and the port 12, and the third layer corresponds to the port 6, the port 7, and the port 12 to the port 16. According to this implementation, the first layer, the second layer, and the third layer have respective dedicated port group configuration information. For example, the port 1 to the port 4 correspond to only the first layer, the port 8 to the port 11 correspond to only the second layer, and the port 13 to the port 16 correspond to only the third layer. In addition, the first layer, the second layer, and the third layer have common port group configuration information, for example, the port 6. The terminal device may specifically calculate the precoding matrix indicator PMI based on dedicated ports corresponding to the first layer, the second layer, and the third layer, to reduce terminal power consumption. In addition, channel state information of the three layers can be accurately obtained based on a common port corresponding to the first layer, the second layer, and the third layer, to improve system running efficiency and transmission performance.

Particularly, in this implementation, relative to the third layer, the port 5 may also be understood as port group configuration information dedicated to the first layer and the second layer; relative to the second layer, the port 7 may also be understood as port group configuration information dedicated to the first layer and the third layer; and relative to the first layer, the port 12 may also be understood as port group configuration information dedicated to the second layer and the third layer.

Optionally, the first layer, the second layer, and the third layer all correspond to the port 1 to the port 16. According to this implementation, the first layer, the second layer, and the third layer have only common port group configuration information. The terminal device may calculate the precoding matrix indicator PMI based on a common port corresponding to the first layer, the second layer, and the third layer without distinction, thereby improving system transmission performance.

It should be noted that, in the foregoing specific implementations, a quantity of transport layers and a quantity of ports corresponding to each layer are not limited.

With reference to the sixth aspect, in some implementations of the sixth aspect, ports corresponding to at least two of the Z layers are not completely the same.

For example, in this implementation, three layers may be used as an example. A first layer corresponds to a port 1 to a port 7, a second layer corresponds to the port 1 to the port 6, a port 8 to a port 11, and a port 12, and a third layer corresponds to the port 6, the port 7, and the port 12 to a port 16. According to this implementation, ports corresponding to the three layers are not completely the same.

Optionally, the first layer corresponds to the port 1 to the port 10, and the second layer and the third layer both correspond to the port 6 to the port 16. According to this implementation, ports corresponding to the first layer and the second layer, ports corresponding to the first layer and the third layer, and the like are not completely the same.

Based on the foregoing implementation, the terminal device may specifically calculate the precoding matrix indicator PMI based on dedicated ports corresponding to the three layers, to reduce terminal power consumption. In addition, channel state information of the three layers can be accurately obtained based on a common port corresponding to the first layer, the second layer, and the third layer, to improve system running efficiency and transmission performance.

It should be noted that, in the foregoing specific implementations, a quantity of transport layers and a quantity of ports corresponding to each layer are not limited.

With reference to the fifth aspect or the sixth aspect, in some implementations, each of the Z layers corresponds to one or more of the N frequency domain base vectors.

It should be noted that a specific form of the frequency domain base vector may be:

$$W_f(i,n) = e^{\frac{j2\pi ni}{N_3}}, n = 0, 1, ..., N_3 - 1,$$

where
i is an integer greater than or equal to 0, and $N_3$ is an integer greater than 0.

For example, in this implementation, two layers may be used as an example. The second group configuration information may indicate a correspondence between three frequency domain base vectors and the two layers. To be specific, a first layer corresponds to a frequency domain base vector 1 and a frequency domain base vector 2, and a second layer corresponds to a frequency domain base vector 3; a first layer corresponds to a frequency domain base vector 1, and a second layer corresponds to a frequency domain base vector 3; or the like. According to this implementation, frequency domain base vectors corresponding to the first layer and the second layer are completely different, and the two layers have respective dedicated frequency domain base vector group configuration information. The terminal device may specifically calculate a precoding matrix indicator PMI based on dedicated frequency domain base vectors corresponding to the first layer and the second layer, to improve system running efficiency and transmission performance.

Optionally, the first layer corresponds to the frequency domain base vector 1 and the frequency domain base vector 2, and the second layer corresponds to the frequency domain base vector 2 and the frequency domain base vector 3. According to this implementation, the first layer and the second layer have respective dedicated frequency domain base vector group configuration information. For example, the frequency domain base vector 1 corresponds to only the first layer, and the frequency domain base vector 3 corresponds to only the second layer. In addition, the first layer and the second layer have common frequency domain base vector group configuration information, for example, the frequency domain base vector 2. The terminal device may specifically calculate the precoding matrix indicator PMI based on dedicated frequency domain base vectors corresponding to the first layer and the second layer, to reduce terminal power consumption. In addition, channel state information of the two layers can be accurately obtained based on a common frequency domain base vector corresponding to the first layer and the second layer, to improve system running efficiency and transmission performance.

Optionally, both the first layer and the second layer correspond to the frequency domain base vector 1 to the frequency domain base vector 3. According to this implementation, the first layer and the second layer have only common frequency domain base vector group configuration information. The terminal device may calculate the precoding matrix indicator PMI based on a common frequency domain base vector corresponding to the first layer and the second layer without distinction, thereby improving system transmission performance.

For example, in this implementation, three layers may be used as an example. The second group configuration information further indicates a correspondence between eight frequency domain base vectors and the three layers. To be specific, a first layer corresponds to a frequency domain base vector 1 to a frequency domain base vector 3, a second layer corresponds to a frequency domain base vector 4 to a frequency domain base vector 6, and a third layer corresponds to a frequency domain base vector 7 and a frequency domain base vector 8; a first layer corresponds to a frequency domain base vector 1 and a frequency domain base vector 2, a second layer corresponds to a frequency domain base vector 4 and a frequency domain base vector 5, and a third layer corresponds to a frequency domain base vector 7 and a frequency domain base vector 8; and the like. According to this implementation, frequency domain base vectors corresponding to the first layer, the second layer, and the third layer are completely different, and the three layers have respective dedicated frequency domain base vector group configuration information. The terminal device may specifically calculate a precoding matrix indicator PMI based on dedicated frequency domain base vectors corresponding to the first layer, the second layer, and the third layer, to improve system running efficiency and transmission performance.

Optionally, the first layer corresponds to the frequency domain base vector 1 to the frequency domain base vector 4, the second layer corresponds to the frequency domain base vector 2, the frequency domain base vector 3, the frequency domain base vector 5, and the frequency domain base vector 6, and the third layer corresponds to the frequency domain base vector 3 to the frequency domain base vector 5, the frequency domain base vector 7, and the frequency domain base vector 8. According to this implementation, the first layer, the second layer, and the third layer have respective dedicated frequency domain base vector group configuration information. For example, the frequency domain base vector 1 corresponds to only the first layer, the frequency domain base vector 6 corresponds to only the second layer, and the frequency domain base vector 7 and the frequency domain base vector 8 correspond to only the third layer. In addition, the first layer, the second layer, and the third layer have common port group configuration information, for example, the frequency domain base vector 3. The terminal device may specifically calculate the precoding matrix indicator PMI based on dedicated frequency domain base vectors corresponding to the first layer, the second layer, and the third layer, to reduce terminal power consumption. In addition, channel state information of the three layers can be accurately obtained based on a common frequency domain base vector corresponding to the first layer, the second layer, and the third layer, to improve system running efficiency and transmission performance.

Particularly, in this implementation, relative to the third layer, the frequency domain base vector 2 may also be understood as frequency domain base vector group configuration information dedicated to the first layer and the second layer; relative to the second layer, the frequency domain base vector 4 may also be understood as frequency domain base vector group configuration information dedicated to the first layer and the third layer; and relative to the first layer, the frequency domain base vector 5 may also be understood as frequency domain base vector group configuration information dedicated to the second layer and the third layer.

Optionally, the first layer, the second layer, and the third layer all correspond to the frequency domain base vector 1 to the frequency domain base vector 3. According to this implementation, the first layer, the second layer, and the third layer have only common frequency domain base vector group configuration information. The terminal device may calculate the precoding matrix indicator PMI based on a common frequency domain base vector corresponding to the first layer, the second layer, and the third layer without distinction, thereby improving system transmission performance.

It should be noted that, in the foregoing specific implementations, a quantity of transport layers and a quantity of frequency domain base vectors corresponding to each layer are not limited. With reference to the fifth aspect or the sixth aspect, in some implementations, frequency domain base vectors corresponding to at least two of the Z layers are not completely the same.

For example, in this implementation, three layers may be used as an example. A first layer corresponds to a frequency domain base vector 1 to a frequency domain base vector 4, a second layer corresponds to a frequency domain base vector 2, a frequency domain base vector 3, a frequency domain base vector 5, and a frequency domain base vector 6, and a third layer corresponds to the frequency domain base vector 3 to the frequency domain base vector 5, a frequency domain base vector 7, and a frequency domain base vector 8. According to this implementation, frequency domain base vectors corresponding to the three layers are not completely the same.

Optionally, the first layer corresponds to the frequency domain base vector 1 to the frequency domain base vector 6, and both the second layer and the third layer correspond to the frequency domain base vector 4 to the frequency domain base vector 8. According to this implementation, frequency domain base vectors corresponding to the first layer and the second layer, frequency domain base vectors corresponding to the first layer and the third layer, and the like are not completely the same.

Based on the foregoing implementation, the terminal device may specifically calculate the precoding matrix indicator PMI based on dedicated frequency domain base vectors corresponding to the three layers, to reduce terminal power consumption. In addition, channel state information of the three layers can be accurately obtained based on a common frequency domain base vector corresponding to the first layer, the second layer, and the third layer, to improve system running efficiency and transmission performance.

It should be noted that, in the foregoing specific implementations, a quantity of transport layers and a quantity of frequency domain base vectors corresponding to each layer are not limited.

With reference to the fifth aspect or the sixth aspect, in some implementations, the first group configuration information and/or the second group configuration information are/is carried in at least one of the following signaling: radio resource control RRC, a media access control control element MAC CE, or downlink control information DCI; or the first group configuration information and/or the second group configuration information are/is predefined in a protocol. With reference to the fifth aspect or the sixth aspect, in some implementations, a codebook structure of the PMI that is fed back meets:

$$W = W_1 \tilde{W}_2 \mathbf{W}_f^H ,$$

where

$W_1$ is a port selection matrix, $\tilde{W}_2$ is a superposition coefficient matrix, $\mathbf{W}_f$ is a frequency domain base vector matrix, $W_1$ is a port selection matrix specific to each of the Z layers, and $\mathbf{W}_f$ is a frequency domain base vector matrix specific to each of the Z layers.

$\mathbf{W}_f$ is a frequency domain base vector matrix, and a frequency domain base vector therein may be selected from a frequency domain vector set indicated by a base station. For example, the base station indicates/configures N frequency domain vectors to a user. For example, N=2, 4, or 8. UE selects Mv frequency domain vectors from the N frequency domain vectors indicated by the base station. For example, Mv=1, 2, or 4. Generally, N ≥ Mv. For example, when Mv = 1, N = Mv = 1; when Mv ∈ [a, b] (a and b are positive integers), N ≥ Mv, for example, when Mv = 2, N ≥ Mv; when Mv ∈ [c, d] (c and d are positive integers), N = Mv. In addition, there may be no $\mathbf{W}_f$, that is, the codebook structure is changed to $W = W_1 * \tilde{W}_2$. For example, when Mv = 1, there may be no $\mathbf{W}_f$, and the codebook structure changes to $W = W_1 * \tilde{W}_2$.

$W_1$ is a port selection matrix, and the UE may select $K_1$ CSI-RS ports from the P CSI-RS ports by using a combination quantity or a bitmap. For example, in $\mathbf{W}_f$, when Mv = 1, the UE selects the $K_1$ ports by using a bitmap; and when Mv > 1, the UE selects the $K_1$ ports by using a combination quantity.

$\tilde{W}_2$ is a superposition coefficient matrix, and the UE may indicate, by using a bitmap, a non-zero coefficient reported by the UE. For example, Mv = 1, to indicate that a bitmap for reporting a non-zero coefficient is missing. For example, it may be represented as that CSI information reported by the UE does not include bitmap overheads. When Mv > 1, the UE uses a bitmap to indicate a non-zero coefficient reported by the UE. The CSI information reported by the UE includes bitmap overheads.

For example, two layers are used as an example. It is assumed that CSI-RS ports corresponding to a first layer are ports 1 to 10, and CSI-RS ports corresponding to a second layer are ports 8 to 16. In this case, $W_1$ for the first layer is a port selection matrix corresponding to the ports 1 to 10, and $W_1$ for the second layer is a port selection matrix corresponding to the ports 8 to 16. That is, the port selection matrices corresponding to the first layer and the second layer are completely different, and the two layers have respective dedicated port group configuration information.

For example, three layers are used as an example. It is assumed that CSI-RS ports corresponding to a first layer are ports 1 to 8, CSI-RS ports corresponding to a second layer are ports 6 to 12, and CSI-RS ports corresponding to a third layer are ports 10 to 16. In this case, $W_1$ for the first layer is a port selection matrix corresponding to the ports 1 to 8, $W_1$ for the second layer is a port selection matrix corresponding to the ports 6 to 12, and $W_1$ for the third layer is a port selection matrix corresponding to the ports 10 to 16. That is, the port selection matrices $W_1$ corresponding to the first layer, the second layer, and the third layer are completely different, and the three layers have respective dedicated port group configuration information.

Similarly, for the Z layers, $W_1$ indicates that one or more reference signal ports correspond to only one of the Z layers, and is completely different from port selection matrices $W_1$ corresponding to the other Z-1 layers.

For example, two layers are used as an example. It is assumed that a frequency domain base vector matrix for a first layer corresponds to frequency domain base vectors 1 and 2, and a frequency domain base vector matrix for a second layer corresponds to frequency domain base vectors 1 and 3. In this case, $\mathbf{W}_f$ for the first layer is a frequency domain base vector matrix corresponding to the frequency domain base vectors 1 and 2, and $\mathbf{W}_f$ for the second layer is a frequency domain base vector matrix corresponding to the frequency domain base vectors 1 and 3. That is, frequency domain base vector matrices $\mathbf{W}_f$ corresponding to the first layer and the second layer are completely different, and the two layers have respective dedicated frequency domain base vector group configuration information.

For example, three layers are used as an example. It is assumed that a frequency domain base vector matrix for a first layer corresponds to frequency domain base vectors 1 to 3, a frequency domain base vector matrix for a second layer corresponds to frequency domain base vectors 2 to 4, and a frequency domain base vector matrix for a third layer corresponds to frequency domain base vectors 5 and 6. In this case, $\mathbf{W}_f$ for the first layer is a frequency domain base vector matrix corresponding to the frequency domain base vectors 1 to 3, $\mathbf{W}_f$ for the second layer is a frequency domain base vector matrix corresponding to the frequency domain base vectors 2 to 4, and $\mathbf{W}_f$ for the third layer is a frequency domain base vector matrix corresponding to the frequency domain base vectors 5 and 6. That is, the frequency domain base vector matrices $\mathbf{W}_f$ corresponding to the first layer, the second layer, and the third layer are completely different, and the three layers have respective dedicated frequency domain base vector group configuration information.

Similarly, for the Z layers, $\mathbf{W}_f$ indicates that one or more frequency domain base vectors correspond to only one of the Z layers, and is completely different from frequency domain base vector matrices $\mathbf{W}_f$ corresponding to the other Z-1 layers.

With reference to the fifth aspect or the sixth aspect, in some implementations, the first group configuration information and/or the second group configuration information are/is determined based on K angle-delay pairs of uplink channel information, and K is a positive integer greater than or equal to 1.

It should be noted that each of the K angle-delay pairs includes one angle vector and one delay vector. The P reference signal ports correspond to the K angle-delay pairs, and a reference signal of each of the P reference signal ports is obtained by precoding the reference signal based on one angle vector and one delay vector. The N frequency domain base vectors correspond to the K angle-delay pairs, and a reference signal of each of the N frequency domain base vectors is obtained by precoding the reference signal based on one angle vector and one delay vector. According to a seventh aspect, a communication apparatus is provided, and includes: a processing unit, configured to generate first indication information, where the first indication information indicates quantized information of M jointly normalized weighting coefficient sets, each of the M weighting coefficient sets is determined by using a reference signal, the M weighting coefficient sets are in a one-to-one correspondence with M layers, and M is a positive integer greater than or equal to 2; and a transceiver unit, configured to send the first indication information.

It should be understood that, in the foregoing implementation, joint normalization may mean: All weighting coefficients in the M weighting coefficient sets are normalized by using a weighting coefficient with a maximum modulus value in a weighting coefficient set as a reference. Alternatively, a weighting coefficient with a maximum modulus value in a weighting coefficient set is used as a reference to normalize a weighting coefficient with a maximum modulus value in each of the other M-1 weighting coefficient sets, and then all weighting coefficients in respective weighting coefficient sets are normalized by using a weighting coefficient with a maximum modulus value in the M weighting coefficient sets as a reference. In short, joint normalization is to perform quantization and normalization on the M weighting coefficient sets jointly by using one of the weighting coefficient sets as a reference.

It should be noted that, in joint normalization in this embodiment of this application, a reference weighting coefficient may be a weighting coefficient with a maximum modulus value in a weighting coefficient set corresponding to the reference weighting coefficient, or may be any weighting coefficient in a weighting coefficient set corresponding to the reference weighting coefficient.

It should be further understood that the quantized information in this application may be a specific quantized value, for example, a quantized value of an amplitude or a quantized value of a phase. For example, all weighting coefficients in the M layers are normalized by using a weighting coefficient $C_{12}$ with a maximum modulus value in a first weighting coefficient set corresponding to the first layer as a reference for joint quantization. The reference in this application may be a weighting coefficient with a maximum modulus value, or may be any weighting coefficient in a weighting coefficient set. In this case, the terminal device may finally report quantized values of all the weighting coefficients in the M weighting coefficient sets, including a quantized value of the weighting coefficient $C_{12}$ with the maximum modulus value in the first weighting coefficient set, and the like.

Optionally, the terminal device may alternatively report an index obtained through quantization of a weighting coefficient, for example, location information or identification information of the weighting coefficient. For example, all weighting coefficients in the M layers are normalized by using a weighting coefficient $C_{12}$ with a maximum modulus value in a first weighting coefficient set corresponding to the first layer as a reference for joint quantization. The reference in this application may be a weighting coefficient with a maximum modulus value, or may be any weighting coefficient in a weighting coefficient set. In this case, the terminal device may finally report location information or an index of the weighting coefficient $C_{12}$ with the maximum modulus value in the first weighting coefficient set, and report quantized values of all weighting coefficients except the weighting coefficient $C_{12}$ with the maximum modulus value.

Optionally, as predefined in a protocol, the network device and the terminal device determine in advance that a weighting coefficient in a weighting coefficient set is used as a quantization reference. For example, a weighting coefficient $C_{11}$ in the first weighting coefficient set corresponding to the first layer is used as a joint quantization reference. In this case, after quantization and normalization, the terminal device does not need to report quantized information and/or an index of the weighting coefficient $C_{11}$ again. This implementation can reduce signaling overheads and reduce terminal power consumption.

It should be noted that a quantity of pieces of quantized information reported by the terminal device and reporting are not specifically limited in this application. One or more of the M layers may be reported.

With reference to the seventh aspect, in some implementations of the seventh aspect, the processing unit is further configured to normalize all weighting coefficients in the M weighting coefficient sets based on a first weighting coefficient, to obtain the quantized information of the M jointly normalized weighting coefficient sets, where the first weighting coefficient is a weighting coefficient in an $L^{th}$ weighting coefficient set, the $L^{th}$ weighting coefficient set is any one of the M weighting coefficient sets, and L is a positive integer; and the transceiver unit is further configured to send a first message, where the first message indicates the first weighting coefficient.

With reference to the seventh aspect, in some implementations of the seventh aspect, the processing unit is further configured to perform first normalization on M-1 third weighting coefficients based on a second weighting coefficient, where the second weighting coefficient is a weighting coefficient in a $U^{th}$ weighting coefficient set, the $U^{th}$ weighting coefficient set corresponds to a $u^{th}$ layer, the third weighting coefficient is a weighting coefficient in each of M-1 weighting coefficient sets other than the $U^{th}$ weighting coefficient set in the M weighting coefficient sets, the M-1 weighting coefficient sets are in a one-to-one correspondence with M-1 layers other than the $u^{th}$ layer in the M layers, both U and u are positive integers, and the $u^{th}$ layer belongs to the M layers; the processing unit is further configured to perform second normalization on all weighting coefficients in the $U^{th}$ weighting coefficient set based on the second weighting coefficient, and third normalization is performed on all weighting coefficients in a weighting coefficient set corresponding to the third weighting coefficient; the processing unit is further configured to obtain the quantized information of the M jointly normalized weighting coefficient sets based on the first normalization, the second normalization, and the third normalization; and the transceiver unit is further configured to send a second message, where the second message indicates the second weighting coefficient and the M-1 third weighting coefficients.

With reference to the seventh aspect, in some implementations of the seventh aspect, fourth normalization is performed on M-1 fifth weighting coefficients based on a fourth weighting coefficient, where the fourth weighting coefficient is a weighting coefficient in an $X^{th}$ weighting coefficient set, the $X^{th}$ weighting coefficient set corresponds to an $x^{th}$ layer, the fifth weighting coefficient is a weighting coefficient in each of M-1 weighting coefficient sets other than the $X^{th}$ weighting coefficient set in the M weighting coefficient sets, the M-1 weighting coefficient sets are in a one-to-one correspondence with M-1 layers other than the $x^{th}$ layer in the M layers, both X and x are positive integers, and the $x^{th}$ layer belongs to the M layers; fifth normalization is performed on all weighting coefficients in the $X^{th}$ weighting coefficient set based on the fourth weighting coefficient; sixth normalization and seventh normalization are performed, based on the fourth weighting coefficient and the fifth weighting coefficient respectively, on all weighting coefficients in a weighting coefficient set corresponding to the fifth weighting coefficient; the quantized information of the M jointly normalized weighting coefficient sets is obtained based on the fourth normalization, the fifth normalization, the sixth normalization, and the seventh normalization; and a third message is sent, where the third message indicates the fourth weighting coefficient and the M-1 fifth weighting coefficients.

According to an eighth aspect, a communication apparatus is provided, and includes: a transceiver unit, configured to receive first indication information, where the first indication information indicates quantized information of M jointly normalized weighting coefficient sets, each of the M weighting coefficient sets is determined by using a reference signal, the M weighting coefficient sets are in a one-to-one correspondence with M layers, and M is a positive integer greater than or equal to 2; and a processing unit, configured to determine a power difference between the M layers based on the first indication information.

It should be understood that, in the foregoing implementation, joint normalization may mean: All weighting coefficients in the M weighting coefficient sets are normalized by using a weighting coefficient with a maximum modulus value in a weighting coefficient set as a reference. Alternatively, a weighting coefficient with a maximum modulus value in a weighting coefficient set is used as a reference to normalize a weighting coefficient with a maximum modulus value in each of the other M-1 weighting coefficient sets, and then all weighting coefficients in respective weighting coefficient sets are normalized by using a weighting coefficient with a maximum modulus value in the M weighting coefficient sets as a reference. In short, joint normalization is to perform quantization and normalization on the M weighting coefficient sets jointly by using one of the weighting coefficient sets as a reference.

It should be noted that, in joint normalization in this embodiment of this application, a reference weighting coefficient may be a weighting coefficient with a maximum modulus value in a weighting coefficient set corresponding to the reference weighting coefficient, or may be any weighting coefficient in a weighting coefficient set corresponding to the reference weighting coefficient.

It should be further understood that the quantized information in this application may be a specific quantized value, for example, a quantized value of an amplitude or a quantized value of a phase. For example, all weighting coefficients in the M layers are normalized by using a weighting coefficient $C_{12}$ with a maximum modulus value in a first weighting coefficient set corresponding to the first layer as a reference for joint quantization. The reference in this application may be a weighting coefficient with a maximum modulus value, or may be any weighting coefficient in a weighting coefficient set. In this case, the terminal device may finally report quantized values of all the weighting coefficients in the M weighting coefficient sets, including a quantized value of the weighting coefficient $C_{12}$ with the maximum modulus value in the first weighting coefficient set, and the like.

Optionally, the terminal device may alternatively report an index obtained through quantization of a weighting coefficient, for example, location information or identification information of the weighting coefficient. For example, all weighting coefficients in the M layers are normalized by using a weighting coefficient $C_{12}$ with a maximum modulus value in a first weighting coefficient set corresponding to the first layer as a reference for joint quantization. The reference in this application may be a weighting coefficient with a maximum modulus value, or may be any weighting coefficient in a weighting coefficient set. In this case, the terminal device may finally report location information or an index of the weighting coefficient $C_{12}$ with the maximum modulus value in the first weighting coefficient set, and report quantized values of all weighting coefficients except the weighting coefficient $C_{12}$ with the maximum modulus value.

Optionally, as predefined in a protocol, the network device and the terminal device determine in advance that a weighting coefficient in a weighting coefficient set is used as a quantization reference. For example, a weighting coefficient $C_{11}$ in the first weighting coefficient set corresponding to the first layer is used as a joint quantization reference. In this case, after quantization and normalization, the terminal device does not need to report quantized information and/or an index of the weighting coefficient $C_{11}$ again. This implementation can reduce signaling overheads and reduce terminal power consumption.

It should be noted that a quantity of pieces of quantized information reported by the terminal device and reporting are not specifically limited in this application. One or more of the M layers may be reported.

With reference to the eighth aspect, in some implementations of the eighth aspect, the transceiver unit is further configured to receive a first message, where the first message indicates a first weighting coefficient, the first weighting coefficient is for normalizing all weighting coefficients in the M weighting coefficient sets, the first weighting coefficient is a weighting coefficient in an $L^{th}$ weighting coefficient set, the $L^{th}$ weighting coefficient set is any one of the M weighting coefficient sets, and L is a positive integer.

With reference to the seventh aspect or the eighth aspect, in some implementations, the first weighting coefficient is a weighting coefficient with a maximum modulus value in the $L^{th}$ weighting coefficient set.

With reference to the seventh aspect or the eighth aspect, in some implementations, the $L^{th}$ weighting coefficient set is determined by a terminal device, or the $L^{th}$ weighting coefficient set is predefined in a protocol.

With reference to the eighth aspect, in some implementations of the eighth aspect, the transceiver unit is further configured to receive a second message, where the second message indicates a second weighting coefficient and M-1 third weighting coefficients, the second weighting coefficient is for performing first normalization on the M-1 third weighting coefficients, the second weighting coefficient is a weighting coefficient in a $U^{th}$ weighting coefficient set, the $U^{th}$ weighting coefficient set corresponds to a $u^{th}$ layer, the third weighting coefficient is a weighting coefficient in each of M-1 weighting coefficient sets other than the $U^{th}$ weighting coefficient set in the M weighting coefficient sets, the M-1 weighting coefficient sets are in a one-to-one correspondence with M-1 layers other than the $u^{th}$ layer in the M layers, both U and u are positive integers, and the $u^{th}$ layer belongs to the M layers; and the second weighting coefficient is further for performing second normalization on all weighting coefficients in the $U^{th}$ weighting coefficient set, the third weighting coefficient is for performing third normalization on all weighting coefficients in a weighting coefficient set corresponding to the third weighting coefficient, and the first normalization, the second normalization, and the third normalization are for obtaining the quantized information of the M jointly normalized weighting coefficient sets.

With reference to the seventh aspect or the eighth aspect, in some implementations, the second weighting coefficient is a weighting coefficient with a maximum modulus value in the $U^{th}$ weighting coefficient set, and/or the third weighting coefficient is a weighting coefficient with a maximum modulus value in each of the M-1 weighting coefficient sets other than the $U^{th}$ weighting coefficient set in the M weighting coefficient sets.

With reference to the seventh aspect or the eighth aspect, in some implementations, the $U^{th}$ weighting coefficient set is determined by a terminal device, or the $U^{th}$ weighting coefficient set is predefined in a protocol.

With reference to the eighth aspect, in some implementations of the eighth aspect, the transceiver unit is further configured to receive a third message, where the third message indicates a fourth weighting coefficient and M-1 fifth weighting coefficients, the fourth weighting coefficient is for performing fourth normalization on the M-1 fifth weighting coefficients, the fourth weighting coefficient is a weighting coefficient in an $X^{th}$ weighting coefficient set, the $X^{th}$ weighting coefficient set corresponds to an $x^{th}$ layer, the fifth weighting coefficient is a weighting coefficient in each of M-1 weighting coefficient sets other than the $X^{th}$ weighting coefficient set in the M weighting coefficient sets, the M-1 weighting coefficient sets are in a one-to-one correspondence with M-1 layers other than the $x^{th}$ layer in the M layers, both X and x are positive integers, and the $x^{th}$ layer belongs to the M layers; and the fourth weighting coefficient is further for performing fifth normalization on all weighting coefficients in the $X^{th}$ weighting coefficient set, the fourth weighting coefficient and the fifth weighting coefficient are further respectively for performing sixth normalization and seventh normalization on all weighting coefficients in a weighting coefficient set corresponding to the fifth weighting coefficient, and the four normalization, the fifth normalization, the sixth normalization, and the seventh normalization are for obtaining the quantized information of the M jointly normalized weighting coefficient sets.

With reference to the seventh aspect or the eighth aspect, in some implementations, the fourth weighting coefficient is a weighting coefficient with a maximum modulus value in the $X^{th}$ weighting coefficient set, and/or the fifth weighting coefficient is a weighting coefficient with a maximum modulus value in each of the M-1 weighting coefficient sets other than the $X^{th}$ weighting coefficient set in the M weighting coefficient sets.

With reference to the seventh aspect or the eighth aspect, in some implementations, the $X^{th}$ weighting coefficient set is determined by a terminal device, or the $X^{th}$ weighting coefficient set is predefined in a protocol.

With reference to the seventh aspect or the eighth aspect, in some implementations, the M weighting coefficient sets and K angle-delay pairs corresponding to the M weighting coefficient sets are used by the network device to construct a precoding matrix, where K is a positive integer greater than or equal to 1.

It should be noted that each of the K angle-delay pairs includes one angle vector and one delay vector.

According to a ninth aspect, a terminal device is provided. The terminal device includes a processor, and optionally, further includes a memory. The processor is configured to control a transceiver to receive and send a signal. The memory is configured to store a computer program. The processor is configured to invoke the computer program from the memory and run the computer program, so that the terminal device performs the method according to any one of the first aspect or the possible implementations of the first aspect, or the method according to any one of the third aspect or the possible implementations of the third aspect.

Optionally, there are one or more processors, and there are one or more memories.

Optionally, the memory may be integrated with the processor, or the memory and the processor are separately disposed.

Optionally, the terminal device further includes the transceiver, and the transceiver may be specifically a transmitter (transmitter) and a receiver (receiver).

According to a tenth aspect, a network device is provided. The network device includes a processor, and optionally, further includes a memory. The processor is configured to control a transceiver to receive and send a signal. The memory is configured to store a computer program. The processor is configured to invoke the computer program from the memory and run the computer program, so that the network device performs the method according to any one of the second aspect or the possible implementations of the second aspect, or the method according to any one of the fourth aspect or the possible implementations of the fourth aspect.

Optionally, there are one or more processors, and there are one or more memories.

Optionally, the memory may be integrated with the processor, or the memory and the processor are separately disposed.

Optionally, the network device further includes the transceiver, and the transceiver may be specifically a transmitter (transmitter) and a receiver (receiver).

According to an eleventh aspect, a communication apparatus is provided, and includes modules or units configured to implement the method according to any one of the first aspect or the possible implementations of the first aspect, modules or units configured to implement the method according to any one of the second aspect or the possible implementations of the second aspect, modules or units configured to implement the method according to any one of the third aspect or the possible implementations of the third aspect, or modules or units configured to implement the method according to any one of the fourth aspect or the possible implementations of the fourth aspect.

According to a twelfth aspect, a communication system is provided, and includes: a terminal device, configured to perform the method according to any one of the first aspect or the possible implementations of the first aspect, or perform the method according to any one of the third aspect or the possible implementations of the third aspect; and a network device, configured to perform the method according to any one of the second aspect or the possible implementations of the second aspect, or perform the method according to any one of the fourth aspect or the possible implementations of the fourth aspect.

According to a thirteenth aspect, a computer-readable storage medium is provided. The computer-readable storage medium stores a computer program or code. When the computer program or code is run on a computer, the computer is enabled to perform the method according to any one of the first aspect or the possible implementations of the first aspect, the method according to any one of the second aspect or the possible implementations of the second aspect, the method according to any one of the third aspect or the possible implementations of the third aspect, or the method according to any one of the fourth aspect or the possible implementations of the fourth aspect. According to a fourteenth aspect, a chip is provided, and includes at least one processor. The at least one processor is coupled to a memory, the memory is configured to store a computer program, and the processor is configured to invoke the computer program from the memory and run the computer program, so that a device in which the chip system is installed is enabled to perform the method according to any one of the first aspect or the possible implementations of the first aspect or the method according to any one of the third aspect or the possible implementations of the third aspect; or a device in which the chip system is installed is enabled to perform the method according to any one of the second aspect or the possible implementations of the second aspect or the method according to any one of the fourth aspect or the possible implementations of the fourth aspect. The chip may include an input circuit or an interface configured to send information and/or data, and an output circuit or an interface configured to receive information and/or data.

According to a fifteenth aspect, a computer program product is provided. The computer program product includes computer program code. When the computer program code is run by a computer, the method according to any one of the first aspect or the possible implementations of the first aspect or the method according to any one of the third aspect or the possible implementations of the third aspect is implemented. Alternatively, when the computer program code is run by a computer, the method according to any one of the second aspect or the possible implementations of the second aspect or the method according to any one of the fourth aspect or the possible implementations of the fourth aspect is implemented.

## BRIEF DESCRIPTION OF DRAWINGS

FIG. 1 is a schematic diagram of an example of a network architecture of a communication system to which this application is applicable;

FIG. 2 is a schematic diagram of an example of a procedure of obtaining channel state information CSI based on FDD partial reciprocity.

FIG. 3 is a schematic diagram of an example of a communication method to which this application is applicable;

FIG. 4 is a schematic diagram of another example of a communication method to which this application is applicable;

FIG. 5 is a schematic diagram of still another example of a communication method to which this application is applicable;

FIG. 6 is a schematic diagram of still another example of a communication method to which this application is applicable;

FIG. 7 is a schematic diagram of an example of a communication method to which this application is applicable;

FIG. 8 is a schematic diagram of another example of a communication method to which this application is applicable;

FIG. 9 is a schematic diagram of still another example of a communication method to which this application is applicable;

FIG. 10 is a schematic diagram of an example of a communication apparatus to which this application is applicable;

FIG. 11 is a schematic diagram of another example of a communication apparatus to which this application is applicable;

FIG. 12 is a schematic diagram of an example of a terminal device to which this application is applicable; and

FIG. 13 is a schematic diagram of an example of a network device to which this application is applicable.

## DESCRIPTION OF EMBODIMENTS

The following describes technical solutions of this application with reference to the accompanying drawings.

The technical solutions in embodiments of this application may be applied to various communication systems, for example, a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WIMAX) communication system, a future 5G system or new radio (new radio, NR), and may also be extended to a similar wireless communication system, such as wireless fidelity (wireless-fidelity, Wi-Fi) and a cellular system related to the 3rd generation partnership project (3rd generation partnership project, 3GPP). Usually, a conventional communication system supports a limited quantity of connections, and is easy to implement. However, with development of communication technologies, a mobile communication system not only supports conventional communication, but also supports, for example, device to device (device to device, D2D) communication, machine to machine (machine to machine, M2M) communication, machine type communication (machine type communication, MTC), and vehicle to everything (vehicle to everything, V2X) communication such as vehicle to vehicle (vehicle to vehicle, V2V) communication and vehicle to infrastructure (vehicle to infrastructure, V2I) communication, vehicle to pedestrian (vehicle to pedestrian, V2P) communication, and vehicle to network (vehicle to network, V2N) communication.

It should be further understood that the technical solutions in embodiments of this application may be alternatively applied to various communication systems based on a non-orthogonal multiple access technology, for example, a sparse code multiple access (sparse code multiple access, SCMA) system. Certainly, SCMA may also have another name in the communication field. Further, the technical solutions in embodiments of this application may be applied to a multi-carrier transmission system using the non-orthogonal multiple access technology, for example, an orthogonal frequency division multiplexing (orthogonal frequency division multiplexing, OFDM) system, a filter bank multi-carrier (filter bank multi-carrier, FBMC) system, a generalized frequency division multiplexing (generalized frequency division multiplexing, GFDM) system, or a filtered orthogonal frequency division multiplexing (filtered-OFDM, F-OFDM) system using the non-orthogonal multiple access technology.

The technical solutions provided in this application may be further applied to a future communication system, for example, a 6th generation mobile communication system. This is not limited in this application.

In embodiments of this application, a terminal device may be referred to as user equipment (user equipment, UE), an access terminal, a subscriber unit, a subscriber station, a mobile station, a mobile console, a remote station, a remote terminal, a mobile device, a user terminal, a terminal, a wireless communication device, a user agent or user apparatus, a soft terminal, or the like, and includes various handheld devices, vehicle-mounted devices, wearable devices, or computing devices that have a wireless communication function, or other processing devices connected to a wireless modem. The terminal may be a mobile station (mobile station, MS), a subscriber unit (subscriber unit), a cellular phone (cellular phone), a smartphone (smart phone), a wireless data card, a personal digital assistant (personal digital assistant, PDA) computer, a tablet computer, a wireless modem (modem), a handset (handset), a laptop computer (laptop computer), a machine type communication (machine type communication, MTC) terminal, or the like.

The terminal device in embodiments of this application may alternatively be a mobile phone (mobile phone), a computer with a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical (remote medical), a wireless terminal in smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld terminal, a notebook computer, a cordless phone (cordless phone) or a wireless local loop (wireless local loop, WLL) station, a terminal device in a future 5G network, a terminal device in a future evolved public land mobile network (public land mobile network, PLMN), or the like.

In addition, the terminal device may alternatively be a terminal device in an internet of things (internet of things, IoT) system. IoT is an important part in future development of information technologies. A main technical feature of IoT is to connect things to a network by using a communication technology, to implement an intelligent network for human-machine interconnection and thing-thing interconnection. It should be understood that a specific form of the terminal device is not limited in this application.

In addition, the terminal device may further include sensors such as an intelligent printer, a train detector, and a gas station, and main functions include: collecting data (which is a function of some terminal devices), receiving control information and downlink data of a network device, emitting an electromagnetic wave to transmit uplink data to the network device.

In embodiments of this application, the network device may be an apparatus that is deployed in a radio access network and that provides a wireless communication function for the terminal device, and may be a device configured to communicate with the terminal device or a chip of the device.

The network device includes but is not limited to: a radio network controller (radio network controller, RNC), a base station controller (base station controller, BSC), a home base station (for example, a home evolved NodeB, or a home NodeB, HNB), a baseband unit (baseband unit, BBU), an access point (access point, AP) in a wireless fidelity system, a radio relay node, a radio backhaul node, a transmission point (transmission point, TP), or a transmission and reception point (transmission and reception point, TRP), may be a gNB or a transmission point (a TRP or a TP) in a 5G (for example, NR) system, or one antenna panel or a group (including a plurality of antenna panels) of antenna panels of a base station in a 5G system, or may be a network node that forms a gNB or a transmission point, for example, a baseband unit BBU or a distributed unit (distributed unit, DU).

The network device in embodiments of this application may include various forms of macro base stations, micro base stations (also referred to as small cells), relay stations, access points, and the like, and may be a base transceiver station (base transceiver station, BTS) in a global system for mobile communication GSM or a code division multiple access CDMA system, may be a NodeB (nodeB, NB) in a wideband code division multiple access WCDMA system, may be an evolved NodeB (evolved NodeB, eNB or eNodeB) in an LTE system, or may be a radio controller in a cloud radio access network (cloud radio access network, CRAN) scenario. Alternatively, the network device may be a relay station, an access point, a wearable device, a vehicle-mounted device, a wearable device, a network device in a 5G or future network, a network device in a future evolved public land mobile network PLMN, or the like.

In some network deployments, the network device may include a central unit (central unit, CU) and a distributed unit (distributed unit, DU). The network device may further include a radio unit (radio unit, RU) and an active antenna unit (active antenna unit, AAU). The CU implements some functions of the network device, for example, is responsible for processing a non-real-time protocol and a service, and implements functions of a radio resource control (radio resource control, RRC) layer and a packet data convergence protocol (packet data convergence protocol, PDCP) layer. The DU implements some functions of the network device, for example, is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and functions related to an active antenna. Information at the RRC layer is finally changed to information at the PHY layer, or is changed from information at the PHY layer. Therefore, in this architecture, higher layer signaling (for example, RRC layer signaling) may alternatively be considered to be sent by the DU, or sent by the DU and the AAU. It may be understood that the network device may be a CU node, a DU node, or a device including a CU node and a DU node. In addition, the CU may be classified as a network device in an access network RAN, or the CU may be classified as a network device in a core network CN. This is not limited herein.

The network device provides a service for a cell. The terminal device communicates with the cell by using a transmission resource (for example, a frequency domain resource or a spectrum resource) allocated by the network device. The cell may belong to a macro base station (for example, a macro eNB or a macro gNB), or may belong to a base station corresponding to a small cell (small cell). The small cell herein may include a metro cell (metro cell), a micro cell (micro cell), a pico cell (pico cell), a femto cell (femto cell), and the like. These small cells have characteristics of small coverage and low transmit power, and are applicable to providing a high-rate data transmission service.

In embodiments of this application, the network device and the terminal device include a radio resource control (radio resource control, RRC) signaling interaction module, a media access control (media access control, MAC) signaling interaction module, and a physical (physical, PHY) signaling interaction module. The RRC signaling interaction module may be a module that is used by the network device and the terminal device to send and receive RRC signaling. The MAC signaling interaction module may be a module used by the network device and the terminal device to send and receive media access control-control element (media access control-control element, MAC CE) signaling. The PHY signaling and data interaction module may be a module used by the network device and the terminal device to send or receive uplink control signaling or downlink control signaling, and uplink and downlink data or downlink data.

It should be understood that, embodiments of this application may be applicable to an LTE system and a subsequent evolved system such as a 5G system or other wireless communication systems using various radio access technologies, for example, a system using an access technology such as code division multiple access, frequency division multiple access, time division multiple access, orthogonal frequency division multiple access, or single carrier frequency division multiple access, and particularly applicable to a scenario in which channel information needs to be fed back and/or a two-level precoding technology needs to be used, for example, a wireless network using a massive MIMO technology or a wireless network using a distributed antenna technology.

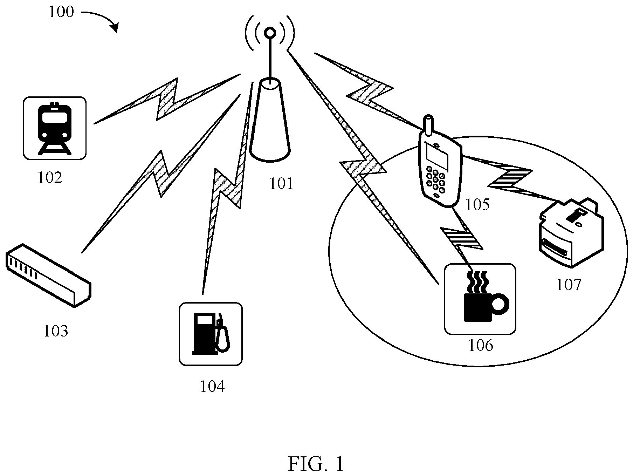

For ease of understanding of embodiments of this application, a communication system to which methods provided in embodiments of this application are applicable is first described in detail with reference to FIG. 1. FIG. 1 is a schematic diagram of a communication system 100 to which a method according to an embodiment of this application is applicable. As shown in the figure, the communication system 100 may include at least one network device, for example, a network device 101 in the 5G system shown in FIG. 1. The communication system 100 may further include at least one terminal device, for example, terminal devices 102 to 107 shown in FIG. 1. The terminal devices 102 to 107 may be mobile or fixed. The network device 101 may communicate with one or more of the terminal devices 102 to 107 through a radio link. Each network device may provide communication coverage for a specific geographical area, and may communicate with a terminal device in the coverage area. For example, the network device may send configuration information to the terminal device, and the terminal device may send uplink data to the network device based on the configuration information. For another example, the network device may send downlink data to the terminal device. Therefore, the network device 101 and the terminal devices 102 to 107 in FIG. 1 form a communication system.

Optionally, the terminal devices may directly communicate with each other. For example, direct communication between terminal devices may be implemented by using a D2D technology or the like. As shown in the figure, direct communication may be performed between the terminal devices 105 and 106 and between the terminal devices 105 and 107 by using the D2D technology. The terminal device 106 and the terminal device 107 may separately or simultaneously communicate with the terminal device 105.

Alternatively, the terminal devices 105 to 107 may separately communicate with the network device 101. For example, direct communication with the network device 101 may be implemented. For example, the terminal devices 105 and 106 in the figure may directly communicate with the network device 101. Alternatively, indirect communication with the network device 101 may be implemented. For example, the terminal device 107 in the figure communicates with the network device 101 through the terminal device 105.

It should be understood that FIG. 1 shows one network device, a plurality of terminal devices, and communication links between communication devices. Optionally, the communication system 100 may include a plurality of network devices, and coverage of each network device may include another quantity of terminal devices, for example, more or fewer terminal devices. This is not limited in this application.

A plurality of antennas may be configured for the foregoing communication devices, for example, the network device 101 and the terminal devices 102 to 107 in FIG. 1. The plurality of antennas may include at least one transmit antenna configured to send a signal and at least one receive antenna configured to receive a signal. In addition, each communication device further additionally includes a transmitter chain and a receiver chain. A person of ordinary skill in the art may understand that both the transmitter chain and the receiver chain may include a plurality of components (for example, a processor, a modulator, a multiplexer, a demodulator, a demultiplexer, or an antenna) related to signal sending and receiving. Therefore, the network device may communicate with the terminal device by using a multi-antenna technology.

Optionally, the communication system 100 may further include other network entities such as a network controller and a mobility management entity. This is not limited in embodiments of this application.

It should be further understood that FIG. 1 is merely a simplified schematic diagram of an example for ease of understanding. The communication system 100 may further include another network device or another terminal device that is not shown in FIG. 1.

For ease of understanding of embodiments of this application, the following briefly describes a processing process of a downlink signal at a physical layer before the downlink signal is sent. It should be understood that the downlink signal processing process described below may be performed by a network device, or may be performed by a chip disposed in the network device. For ease of description, the network device is for uniform use below.

The network device may process a codeword (code word) on a physical channel. The codeword may be a coded bit that is obtained through coding (for example, including channel coding). The codeword is scrambled (scrambling) to generate a scrambled bit, and the scrambled bit is modulated and mapped (modulation mapping) to obtain a modulation symbol. A modulation symbol is mapped to a plurality of layers (layer), or transport layers, through layer mapping (layer mapping). A modulation symbol obtained through layer mapping is precoded (precoding), to obtain a precoded signal. The precoded signal is mapped to a plurality of resource elements (resource elements, REs) through RE mapping. These REs are then transmitted through antenna ports (antenna port) after being orthogonal frequency division multiplexing (orthogonal frequency division multiplexing, OFDM) modulated.

It should be understood that the foregoing described downlink signal processing process is merely an example for description, and should not constitute any limitation on this application. For a specific downlink signal processing process, refer to a conventional technology. For brevity, detailed descriptions of the specific process are omitted herein.

It should be further understood that, in embodiments of this application, the network device may first perform uplink channel measurement based on an uplink reference signal to obtain channel information, for example, angle information and delay information, and process the channel information to obtain a downlink signal, for example, precode a downlink signal based on the channel information to obtain a precoded reference signal.

For ease of understanding of embodiments of this application, several terms in this application are first briefly described.

1. Multiple-input multiple-output MIMO technology

The MIMO technology means that a transmitter device and a receiver device respectively use a plurality of transmit antennas and a plurality of receive antennas, and provide a high data transmission rate by using a transmission mode of multi-layer parallel transmission, so that signals are transmitted and received by using the plurality of antennas of the transmitter device and the plurality of antennas of the receiver device, thereby improving communication quality. The technology can make full use of space resources and implement multiple-transmit multiple-receive by using a plurality of antennas. In this way, a system channel capacity can be multiplied without increasing spectrum resources and antenna transmit power.

MIMO can be classified into single-user multiple-input multiple-output (single-user MIMO, SU-MIMO) and multi-user multiple-input multiple-output (multi-user MIMO, MU-MIMO). Massive MIMO is based on a multi-user beamforming principle. Hundreds of antennas are deployed on a transmitter device, and respective beams are modulated for dozens of target receivers. Dozens of signals are simultaneously transmitted on a same frequency resource through spatial signal isolation. Therefore, the massive MIMO technology can make full use of a spatial degree of freedom brought by a large-scale antenna configuration, to improve spectral efficiency.

2. Channel state information CSI

The CSI is channel state information reported by a transmitting end (for example, a terminal device) to a receiving end (for example, a network device), and includes a channel quality indicator (channel quality indicator, CQI), a precoding matrix indicator (precoding matrix indicator, PMI), and a channel matrix rank indicator (rand indicator, RI).

The CQI indicates channel quality, and is used by the network device to provide a reference for determining a modulation and coding scheme. CQI feedback determines the coding and modulation scheme, and the network device implements adaptive modulation coding (adaptive modulation coding, AMC) by determining a value of the CQI. The CQI value can be calculated based on a channel condition, noise, and interference estimation. For example, when the CQI value fed back by the terminal device is larger, the network device selects a higher-order modulation scheme, for example, 64 quadrature amplitude modulation (64 quadrature amplitude modulation, 64QAM). On the contrary, when the CQI value that is fed back is smaller, the network device selects a lower-order modulation scheme, for example, quadrature phase shift keying (quadrature phase shift keying, QPSK), and uses a coding scheme (1/4 code rate) with a larger redundancy degree. Therefore, a system throughput is smaller. When there is only one codeword, the terminal device needs to feed back only one CQI value. When a two-codeword multiple-input multiple-output (multiple-input multiple-output, MIMO) system is used, two CQI values need to be fed back.

A value of the RI describes a maximum quantity of unrelated data transmission channels of a spatial channel between the terminal device and the network device, and indicates a quantity of layers of data that can be simultaneously transmitted by the network device to the terminal. A larger RI indicates a larger quantity of layers of data that can be simultaneously transmitted. A rank of the spatial channel is constantly changing, and the value of the RI determines adaptation of a selected spatial rank in a layer mapping mode, that is, adaptation of layer mapping. A rank identifier of the terminal device is fed back by using uplink/downlink control information.

The PMI indicates a precoding matrix. The network device may select, based on the PMI, a precoding matrix for precoding data. The PMI determines a correspondence between a layer of data layer and an antenna port. In codebook-based closed-loop spatial multiplexing and closed-loop transmit diversity modes, if a quantity of layers and a quantity of antenna ports are determined, a set of available codebooks for precoding is determined. The network device selects a precoding matrix with optimal performance based on the PMI fed back by the terminal device. Selection of the PMI is usually related to a channel matrix between the network device and the terminal. If a precoding matrix represented by the PMI has a higher matching degree with the channel matrix, multi-user interference can be better suppressed when the network device selects, based on the PMI, the precoding matrix to precode data.

Usually, the terminal device may measure a reference signal sent by the network device, to obtain CSI, and feed back the CSI to the network device, so that the network device performs link adaptation for subsequent data transmission.

3. Channel reciprocity

In some communication modes, for example, in a time division duplex TDD mode, uplink and downlink channels are for transmitting signals on different time domain resources and a same frequency domain resource. In short time (for example, coherence time of channel propagation), it may be considered that channel fading experienced by the signals on the uplink and downlink channels is the same. This is reciprocity between the uplink and downlink channels. Based on the reciprocity between the uplink and downlink channels, the network device may measure the uplink channel based on an uplink reference signal such as a sounding reference signal (sounding reference signal, SRS), and may estimate the downlink channel based on the uplink channel, to determine a precoding matrix for downlink transmission.

However, in some other communication modes, for example, in a frequency division duplex (frequency division duplex, FDD) mode, because a frequency band spacing between an uplink channel and a downlink channel is far greater than coherence bandwidth, the uplink and downlink channels do not have complete reciprocity, and determining, based on the uplink channel, a precoding matrix for downlink transmission may not adapt to the downlink channel. However, the uplink and downlink channels in the FDD mode still have partial reciprocity, for example, angle reciprocity and delay reciprocity. In other words, in the FDD mode, the uplink and downlink channels have reciprocity in terms of a delay and an angle. Therefore, an angle and a delay may also be referred to as reciprocity parameters.

When a signal is transmitted on a radio channel, the signal may arrive at a receive antenna through a plurality of paths from a transmit antenna. Frequency selective fading caused by a multipath delay is a change of a frequency domain channel. The delay may be transmission time of a radio signal on different transmission paths, is determined by a distance and a speed, and is irrelevant to frequency domain of the radio signal. When a signal is transmitted on different transmission paths, different transmission delays exist due to different distances. Because physical locations of the network device and the terminal device are fixed, multipath distribution of uplink and downlink channels is the same in terms of a delay. Therefore, the uplink and downlink channels may be considered to have a delay, or may be reciprocal, in the FDD mode. That is, in the FDD mode, the uplink and downlink channels have reciprocity in terms of a delay.

In addition, the angle may be an angle of arrival (angle of arrival, AOA) of a signal that arrives at a receive antenna through a radio channel, or may be an angle of departure (angle of departure, AOD) of a signal that is transmitted by a transmit antenna. In embodiments of this application, the angle may be an angle of arrival at which an uplink signal arrives at the network device, or may be an angle of departure at which the network device transmits a downlink signal. Because transmission paths of uplink and downlink channels on different frequencies are reciprocal, an angle of arrival of the uplink reference signal and an angle of departure of a downlink reference signal may be considered to be the same, or in other words, reciprocal. Therefore, in the FDD mode, the uplink and downlink channels have reciprocity in terms of an angle.

In embodiments of this application, each angle may be represented by one angle vector, and one or more angle vectors may be loaded to the downlink reference signal. It may be understood that the downlink reference signal is precoded based on the one or more angle vectors. Similarly, each delay may be represented by one delay vector, and one or more delay vectors may be loaded to the downlink reference signal. It may be understood that the downlink reference signal is precoded based on the one or more delay vectors. Therefore, in embodiments of this application, an angle vector may represent an angle, and a delay vector may represent a delay. Each angle vector may be combined with a delay vector described below to obtain an angle-delay pair. In other words, one angle-delay pair may include one angle vector and one delay vector.

4. Precoding technology

When a channel status is known, a sending device (for example, a network device) may process a to-be-sent signal based on a precoding matrix that matches the channel status, so that a precoded to-be-sent signal adapts to a channel, and a receiving device (for example, a terminal device) eliminates inter-channel impact with less complexity. Therefore, received signal quality (for example, a signal to interference plus noise ratio (signal to interference plus noise ratio, SINR)) is improved through precoding processing on the to-be-sent signal. Therefore, by using the precoding technology, a sending device and a plurality of receiving devices can perform transmission on a same time-frequency resource, that is, multi-user multiple-input multiple-output (multiple user multiple input multiple output, MU-MIMO) is implemented.

It should be understood that the related descriptions of the precoding technology are merely an example for ease of understanding, and are not intended to limit the protection scope of embodiments of this application. In a specific implementation process, the sending device may alternatively perform precoding in another manner. For example, when channel information (for example, a channel matrix) cannot be learned of, precoding is performed by using a preset precoding matrix or weighting processing manner. For brevity, specific content thereof is not described in this specification again.

In embodiments of this application, the network device may predict a status of an unknown channel based on a known channel, and further process a to-be-sent signal by using a precoding matrix that matches the predicted channel status, so that a precoded to-be-sent signal adapts to the channel.

5. Reference signal (reference signal, RS) and reference signal resource

The reference signal may also be referred to as a pilot (pilot), a reference sequence, or the like. In embodiments of this application, the reference signal may be a reference signal for channel measurement. For example, the reference signal may be a channel state information reference signal (channel state information reference signal, CSI-RS), a sounding reference signal (sounding reference signal, SRS), a demodulation reference signal (demodulation reference signal, DMRS), a phase tracking reference signal (phase tracking reference signal, PTRS), a tracking reference signal (tracking reference signal, TRS), a synchronization signal/physical broadcast channel block (synchronization signal/PBCH block, SSB), or the like. It should be understood that the reference signals listed above are merely examples, and should not constitute any limitation on this application. This application does not exclude a possibility of defining another reference signal in a future protocol to implement a same or similar function.

The precoded reference signal may be a reference signal obtained by precoding a reference signal. The precoding may specifically include beamforming (beam forming) and/or phase rotation. For example, the beamforming may be implemented by precoding a downlink reference signal based on one or more angle vectors, and the phase rotation may be implemented by precoding a downlink reference signal based on one or more delay vectors.

In embodiments of this application, for ease of differentiation and description, a reference signal obtained through precoding, for example, beamforming and/or phase rotation, is referred to as a precoded reference signal, and a reference signal that is not precoded is referred to as a reference signal for short.

In embodiments of this application, precoding the downlink reference signal based on the one or more angle vectors may also be referred to as loading the one or more angle vectors to the downlink reference signal, to implement beamforming. Precoding the downlink reference signal based on the one or more delay vectors may also be referred to as loading the one or more delay vectors to the downlink reference signal, to implement phase rotation.

The reference signal resource may be for configuring a transmission attribute of the reference signal, for example, a time-frequency resource location, a port mapping relationship, a power factor, and a scrambling code. A transmitter device may send the reference signal based on the reference signal resource, and a receiver device may receive the reference signal based on the reference signal resource. One reference signal resource may include one or more resource blocks (resource blocks, RBs). The reference signal resource may include a CSI-RS resource (CSI-RS resource) and an SRS resource (SRS resource). To distinguish between different reference signal resources, each reference signal resource may correspond to one reference signal resource identifier, for example, a CSI-RS resource indicator (CSI-RS resource indicator, CRI) or an SRS resource index (SRS resource index, SRI).

A resource index of the reference signal may be a CSI-RS resource indicator (CSI-RS resource indicator, CRI) or an SSB resource indicator (SSB Resource Indicator, SSBRI). The SSBRI may also be referred to as an SSB index (SSB index). It should be understood that the foregoing examples are merely examples, and should not constitute any limitation on this application. This application does not exclude a possibility of defining another reference signal in a future protocol to implement a same or similar function.

It should be understood that the reference signal and the corresponding reference signal resource listed above are merely examples for description, and should not constitute any limitation on this application. This application does not exclude a possibility of defining another reference signal in a future protocol to implement a same or similar function.

6. Port (port)

The port may also be referred to as an antenna port (antenna port). One antenna port may be one physical antenna, or may be a weighted combination of a plurality of physical antennas. In embodiments of this application, the port may include a transmit antenna port, a reference signal port, and a receive port.

The transmit antenna port may be understood as a virtual antenna identified by the receiving device. Optionally, the port may be a transmit antenna port. For example, a reference signal of each transmit antenna port may be a reference signal that is not precoded. The transmit antenna port may be an actual independent transmit unit (transceiver unit, TxRU).

Optionally, the port may alternatively be a port obtained through beamforming. For example, a reference signal of each port may be a precoded reference signal obtained by precoding the reference signal based on an angle vector. It may be understood that, if beamforming is performed on the reference signal, a port quantity may be a quantity of ports for precoding the reference signal. The quantity of ports for precoding the reference signal may be less than a quantity of transmit antenna ports.

Optionally, the port may alternatively be a port obtained through phase rotation. For example, a reference signal of each port may be a precoded reference signal that is obtained by precoding the reference signal based on a delay vector and that is sent through a transmit antenna port. The port may also be referred to as a port of the precoded reference signal.

Optionally, the port may alternatively be a port obtained through beamforming and phase rotation. For example, a reference signal of each port may be a precoded reference signal obtained by precoding the reference signal based on an angle vector and a delay vector. The port may also be referred to as a port of the precoded reference signal.

The reference signal of each port may be transmitted by using one or more frequency domain units. In embodiments described below, when a transmit antenna port is involved, the quantity of transmit antenna ports may be a quantity of ports using which spatial precoding is not performed, that is, an actual quantity of independent transmission units. When a port is involved, in different embodiments, the port may be a transmit antenna port, or may be a port of a precoded reference signal. A specific meaning expressed by the port may be determined according to a specific embodiment. For ease of differentiation, the port of the precoded reference signal is referred to as a reference signal port below.

The receive antenna port may be understood as a receive antenna of a receiving device. For example, in downlink transmission, the receive port may be a receive antenna of the terminal device.

7. Angle vector

The angle vector may also be referred to as a spatial domain vector, a beam (beam) vector, or the like. The angle vector may be understood as a precoding vector for performing beamforming (beam forming) on a reference signal. A transmitted reference signal may have specific spatial directivity through beamforming. Therefore, a process of precoding the reference signal based on the angle vector may also be considered as a space domain (or spatial domain) precoding process. The angle vector may be a vector whose length is T. T may represent a quantity of transmit antenna ports, T>1, and T is an integer. An angle vector whose length is T includes T spatial domain weights (or weights), and the T weights may be for weighting the T transmit antenna ports, so that reference signals transmitted by the T transmit antenna ports have specific spatial directivity, to implement beamforming.

Precoding the reference signal based on different angle vectors is equivalent to performing beamforming on a transmit antenna port based on different angle vectors, so that a transmitted reference signal has different spatial directivity.

Optionally, the angle vector is a discrete Fourier transform (discrete fourier transform, DFT) vector. The DFT vector may be a vector in a DFT matrix.

Optionally, the angle vector is a conjugate transpose vector of a DFT vector. The DFT conjugate transpose vector may be a column vector in a conjugate transpose matrix of a DFT matrix. Optionally, the angle vector is an oversampled DFT vector. The oversampled DFT vector may be a vector in an oversampled DFT matrix.

In a possible design, the angle vector may be, for example, a two-dimensional (2 dimensions, 2D)-DFT vector $\mathbf{v}_{l,m}$ defined in a type II (type II) codebook in the 3rd generation partnership project (3rd generation partnership project, 3GPP) technical specification (technical specification, TS) 38.214 release 15 (release 15, R15) or R16. In other words, the angle vector may be a 2D-DFT vector or an oversampled 2D-DFT vector.

It should be understood that the foregoing examples of specific forms of the angle vector are merely examples, and should not constitute any limitation on this application. For example, the delay vector may also be obtained from a DFT matrix. A specific form of the delay vector is not limited in this application.

It should be further understood that the angle vector is a form provided in this application for representing an angle. The angle vector is named only for ease of distinguishing from the delay vector, and should not constitute any limitation on this application. This application does not exclude a possibility of defining another name in a future protocol to represent a same or similar meaning.

If a real downlink channel is denoted as V, V may be represented as a matrix whose dimension is R×T. R is a quantity of receive antenna ports, T is a quantity of transmit antenna ports, and both R and T are positive integers. In downlink transmission, a precoded reference signal obtained by precoding a reference signal based on the angle vector may be transmitted to a terminal device through a downlink channel. Therefore, a channel measured by the terminal device based on the received precoded reference signal is equivalent to a channel to which the angle vector is loaded. For example, an angle vector $\mathbf{a}_k$ is loaded to a downlink channel $\mathbf{V}$, which may be represented as $\mathbf{V}\mathbf{a}_k$. In other words, the angle vector is loaded to the reference signal, that is, the angle vector is loaded to the channel.

8. Delay vector

The delay vector may also be referred to as a frequency domain vector. The delay vector is a vector indicating a change rule of a channel in frequency domain. As mentioned above, a multipath delay causes frequency selective fading. It can be learned from Fourier transform that a time delay of a signal in time domain may be equivalent to a phase gradient in frequency domain.

Because a phase change of a channel in each frequency domain unit is related to a delay, a change rule of a phase of the channel in each frequency domain unit may be represented by a delay vector. In other words, the delay vector may be for representing a delay characteristic of the channel. The delay vector may be a vector whose length is N. N may represent a quantity of frequency domain units for carrying a reference signal, where N>1 and N is an integer. The delay vector whose length is N includes N frequency domain weights (or weights for short), and the N weights may be respectively for performing phase rotation on the N frequency domain units. A frequency selection characteristic caused by a multipath delay may be pre-compensated by precoding reference signals carried in the N frequency domain units. Therefore, a process of precoding the reference signal based on the delay vector may be considered as a frequency domain precoding process.

Precoding the reference signal based on different delay vectors is equivalent to performing phase rotation on each frequency domain unit of a channel based on different delay vectors. In addition, a same frequency domain unit may have different angles of phase rotation.

Optionally, the delay vector is a DFT vector. The DFT vector may be a vector in a DFT matrix. For example, the delay vector may be represented as $\mathbf{b}_k$, where

$$\mathbf{b}_k = \begin{bmatrix} e^{-j2\pi f_1 \tau_k} \\ e^{-j2\pi f_2 \tau_k} \\ \vdots \\ e^{-j2\pi f_N \tau_k} \end{bmatrix}.$$

$k$=1, 2, ..., or K; K may represent a quantity of delay vectors; and $f_1$, $f_2$, ..., and $f_N$ respectively represent carrier frequencies of the 1st, the 2nd, ..., and an Nth frequency domain units. Optionally, the delay vector is a conjugate transpose vector of a DFT vector. The DFT conjugate transpose vector may be a column vector in a conjugate transpose matrix of a DFT matrix. Optionally, the delay vector is an oversampled DFT vector. The oversampled DFT vector may be a vector in an oversampled DFT matrix.

It should be understood that the foregoing examples of specific forms of the delay vector are merely examples, and should not constitute any limitation on this application. For example, the delay vector may also be obtained from a DFT matrix. A specific form of the delay vector is not limited in this application.

It should be further understood that the delay vector is a form provided in this application for representing a delay. The delay vector is named only for ease of distinguishing from the angle vector, and should not constitute any limitation on this application. This application does not exclude a possibility of defining another name in a future protocol to represent a same or similar meaning.

In downlink transmission, a reference signal is precoded based on the delay vector, and a precoded reference signal may be transmitted to a terminal device through a downlink channel. Therefore, a channel measured by the terminal device based on the received precoded reference signal is equivalent to a channel to which the delay vector is loaded. In other words, the delay vector is loaded to the reference signal, that is, the delay vector is loaded to the channel. Specifically, a plurality of weights in the delay vector are respectively loaded to a plurality of frequency domain units of a channel, and each weight is loaded to one frequency domain unit.

For example, the frequency domain unit is a resource block (resource block, RB). If the reference signal is precoded based on the delay vector whose length is N, the N weights in the delay vector may be respectively loaded to reference signals carried on N RBs, that is, N elements in the delay vector are respectively loaded to the N RBs. An nth element in the delay vector $\mathbf{b}_k$ is loaded onto a channel $\mathbf{V}_n$ on an nth RB, which, for example, may be represented as $\mathbf{V}_n e^{j2\pi f n \tau k}$.

It should be understood that, a manner of precoding the reference signal based on the delay vector is similar to a processing manner of spatial domain precoding, except that a spatial domain vector (or the angle vector) is replaced with the delay vector.

It should be noted that frequency domain precoding performed on the reference signal based on the delay vector may be performed before resource mapping, or may be performed after resource mapping. This is not limited in this application.

9. Angle-delay pair

The angle-delay pair may be a combination of an angle vector and a delay vector. Each angle-delay pair may include one angle vector and one delay vector. Angle vectors and/or delay vectors included in any two angle-delay pairs are different. In other words, each angle-delay pair may be uniquely determined by one angle vector and one delay vector.

It should be understood that the angle-delay pair may be understood as a representation form of a space-frequency basic unit determined by one angle vector and one delay vector, but the angle-delay pair is not necessarily a unique representation form. For example, the angle-delay pair may also be represented as a space-frequency component matrix, a space-frequency component vector, or the like described below.

10. Frequency domain unit

The frequency domain unit is a unit of a frequency domain resource, and indicates different frequency domain resource granularities. The frequency domain unit may include, for example, but is not limited to a subband (subband), a resource block (RB), a resource block group (resource block group, RBG), and a precoding resource block group (precoding resource block group, PRG). In embodiments of this application, the network device may determine, based on feedback of the terminal device, a precoding matrix corresponding to each frequency domain unit.

11. Pilot density is a ratio of a resource element (resource element, RE) occupied by a reference signal of each port, for example, a precoding reference signal in this application, to a total quantity of RBs occupied by the reference signal in bandwidth. For example, if a pilot density of a reference signal of a port is 1, it may indicate that, in the bandwidth occupied by the reference signal of the port, each RB has an RE for carrying the reference signal of the port. For another example, if a pilot density of the reference signal of a port is 0.5, it may indicate that, in the bandwidth occupied by the reference signal of the port, one RB in every two RBs includes an RE for carrying the reference signal of the port, in other words, one RB is separated between adj acent RBs for carrying the reference signal of the port.

12. Space-frequency component matrix

A space-frequency component matrix may be determined by using one angle-delay pair. In other words, a space-frequency component matrix may be uniquely determined by using one angle vector and one delay vector. A space-frequency component matrix and an angle-delay pair can be converted to each other.

A space-frequency component matrix may be determined by, for example, a product of an angle vector and a conjugate transpose of a delay vector, for example, $\mathbf{a}(\theta_k) \times \mathbf{b}(\tau_l)^H$. A dimension of the space-frequency component matrix may be $T \times N$. T may represent a quantity of transmit antenna ports, T>1, and T is an integer. N may represent a quantity of frequency domain units for carrying a reference signal, N>1, and N is an integer.

It should be understood that the space-frequency component matrix may be understood as a representation form of a space-frequency basic unit determined by one angle vector and one delay vector. For example, the space-frequency basic unit may also be represented as a space-frequency component vector, and the space-frequency component vector is determined by, for example, a Kronecker (Kronecker) product of an angle vector and a delay vector.

It should be further understood that a specific form of the space-frequency basic unit is not limited in this application. Based on a same concept, various possible forms determined by a person skilled in the art based on one angle vector and one delay vector should fall within the protection scope of this application. In addition, if definitions of the angle vector and the delay vector are different from those listed above, operation relationships between the space-frequency component matrix and the angle vector and between the space-frequency component matrix and the delay vector, and operation relationships between the space-frequency component vector and the angle vector and between the space-frequency component vector and the delay vector may also be different. The operation relationships between the space-frequency component matrix and the angle vector and between the space-frequency component matrix and the delay vector, and the operation relationships between the space-frequency component vector and the angle vector and between the space-frequency component vector and the delay vector are not limited in this application.

13. Space-frequency matrix

In embodiments of this application, the space-frequency matrix is an intermediate quantity for determining a precoding matrix. The space-frequency matrix may be determined based on a receive port, or may be determined based on a transport layer. As described above, the space-frequency matrix may be determined by a weighted sum of one or more angle-delay pairs. Therefore, a dimension of the space-frequency matrix may also be $N \times T$.

If the space-frequency matrix is determined based on a receive port, the space-frequency matrix may be referred to as a space-frequency matrix corresponding to the receive port. The space-frequency matrix corresponding to the receive port may be for constructing a downlink channel matrix of each frequency domain unit, so that a precoding matrix corresponding to each frequency domain unit can be determined. A channel matrix corresponding to a frequency domain unit may be, for example, a conjugate transpose of a matrix constructed by using column vectors that correspond to a same frequency domain unit and that are in space-frequency matrices corresponding to all receive ports. For example, $n^{th}$ column vectors in the space-frequency matrices corresponding to all receive ports are extracted, and a matrix whose dimension is $T \times R$ may be obtained through arrangement from left to right in an order of the receive ports, where R represents a quantity of receive ports, R≥1, and R is an integer. After conjugate transpose processing is performed on the matrix, a channel matrix $V^{(n)}$ of an $n^{th}$ frequency domain unit may be obtained. A relationship between the channel matrix and the space-frequency matrix is described in detail below, and detailed descriptions of the relationship between the channel matrix and the space-frequency matrix is omitted herein.

If the space-frequency matrix is determined based on a transport layer, the space-frequency matrix may be referred to as a space-frequency matrix corresponding to the transport layer. The space-frequency matrix corresponding to the transport layer may be directly for determining a precoding matrix corresponding to each frequency domain unit. For example, a precoding matrix corresponding to a frequency domain unit may be constructed by using column vectors that correspond to a same frequency domain unit and that are in space-frequency matrices corresponding to all transport layers. For example, $n^{th}$ column vectors in the space-frequency matrices corresponding to all transport layers are extracted, and a matrix whose dimension is $T \times Z$ may be obtained through arrangement from left to right in an order of the transport layers, where Z represents a quantity of the transport layers, Z≥1, and Z is an integer. The matrix may be used as a precoding matrix $\mathbf{W}^{(n)}$ of an $n^{th}$ frequency domain unit.

It should be noted that a precoding matrix determined by using a channel measurement method provided in embodiments of this application may be a precoding matrix directly for downlink data transmission, or may be a final precoding matrix for downlink data transmission that is obtained by using some beamforming methods, such as zero forcing (zero forcing, ZF), a minimum mean squared error (minimum mean-squared error, MMSE), and a maximum signal-to-leakage-plus-noise ratio (signal-to-leakage-plus-noise ratio, SLNR). This is not limited in this application. The precoding matrix involved below may be a precoding matrix determined based on the channel measurement method provided in this application.

A relationship among the space-frequency matrix, the downlink channel matrix, and the precoding matrix is briefly described.

The space-frequency matrix is an intermediate quantity that can be for constructing a precoding matrix and is proposed based on frequency domain continuity of a channel. The space-frequency matrix $\mathbf{H}$ may meet: $\mathbf{H} = \mathbf{SCF}^H$, where S represents a matrix constructed by one or more (for example, K, where K is a positive integer) angle vectors, for example, $\mathbf{S} = [\mathbf{a}(\theta_1)\ \mathbf{a}(\theta_2)\ \cdots\ \mathbf{a}(\theta_K)]$, $\mathbf{F}$ represents a matrix constructed by one or more (for example, L, where L is a positive integer) delay vectors, for example, $\mathbf{F} = [\mathbf{b}(\tau_1)\ \mathbf{b}(\tau_2)\ \cdots\ \mathbf{b}(\tau_I)]$, and $\mathbf{C}$ represents a coefficient matrix formed by weighting coefficients corresponding to each of the K angle vectors and each of the L delay vectors. Each element in C may represent a weighting coefficient of a corresponding angle vector pair.

In the FDD mode, due to reciprocity between uplink and downlink channels in terms of a delay and an angle, a space-frequency matrix $\mathbf{H}_{UL}$ obtained by measuring the uplink channel may be represented as $\mathbf{H}_{UL} = \mathbf{SC}_{UL}\mathbf{F}^H$, and a space-frequency matrix $\mathbf{H}_{DL}$ obtained by measuring the downlink channel may be represented as $\mathbf{H}_{DL} = \mathbf{SC}_{DL}\mathbf{F}^H$. Therefore, in embodiments of this application, a coefficient matrix $\mathbf{C}_{DL}$ corresponding to a downlink channel is determined and fed back through downlink channel measurement, to determine a precoding matrix that adapts to the downlink channel.

S corresponds to spatial domain information, and physically corresponds to an angle of arrival/an angle of departure of the network device. S may represent a matrix constructed by one or more angle vectors. F corresponds to frequency domain information, and physically corresponds to a multipath delay of a multipath signal arriving at the network device. F may represent a matrix constructed by one or more delay vectors. C may represent a weighting coefficient corresponding to one angle vector and one delay vector. $\mathbf{C}_{UL}$ indicates a coefficient matrix corresponding to the uplink channel. A superscript H represents a conjugate transpose, for example, $\mathbf{F}^H$ represents a conjugate transpose of the matrix (or vector) F.

As described above, the space-frequency component matrix is defined as being determined by $\mathbf{a}(\theta_k) \times \mathbf{b}(\tau_l)^H$. Therefore, it may be determined that a dimension of the space-frequency matrix $\mathbf{H}_{DL}$ is: Quantity of transmit antenna ports $\times$ Quantity of frequency domain units. For example, a dimension of a space-frequency matrix corresponding to the downlink channel is T$\times$N. In the following embodiments, unless otherwise specified, the space-frequency matrix is the matrix $\mathbf{H}_{DL}$ whose dimension is T$\times$N described above.

However, this is not necessarily a space-frequency matrix determined by a real channel. Usually, a dimension of a channel matrix is defined as: Quantity of receive ports $\times$ Quantity of transmit ports. For example, a dimension of the downlink channel is R $\times$ T. A dimension of a space-frequency matrix determined by the channel matrix is N$\times$T, which is exactly opposite to the dimension T $\times$ N of the space-frequency matrix $\mathbf{H}_{DL}$. Therefore, in embodiments of this application, the real channel may be a conjugate transpose of the channel matrix determined by the foregoing space-frequency matrix $\mathbf{H}_{DL}$. In other words, a downlink channel matrix determined by the space-frequency matrix $\mathbf{H}_{DL}$ may be a conjugate transpose of the real channel. Further, the precoding matrix may be determined based on the space-frequency matrix $\mathbf{H}_{DL}$. The precoding matrix of the $n^{th}$ frequency domain unit may be constructed by the $n^{th}$ column vectors in the space-frequency matrices corresponding to the transport layers.

For example, singular value decomposition (singular value decomposition, SVD) is performed on the channel matrix. A conjugate transpose of a precoding matrix may be obtained by performing SVD on a channel matrix V. However, if SVD is performed on the conjugate transpose of the channel matrix, in other words, if SVD is performed on $\mathbf{V}^H$, the precoding matrix may be exactly obtained. Therefore, in embodiments of this application, the precoding matrix corresponding to each frequency domain unit may be directly determined and obtained based on the space-frequency matrix $\mathbf{H}_{DL}$ determined based on the conjugate transpose of the real channel.

Then, a relationship between the space-frequency matrix and the downlink channel matrix is understood with reference to the foregoing formula $\mathbf{H}_{UL} = \mathbf{SC}_{UL}\mathbf{F}^H$.

$\mathbf{S}^H\mathbf{H}_{DL} = \mathbf{C}_{DL}\mathbf{F}^H$ can be obtained by deforming $\mathbf{H}_{DL} = \mathbf{SC}_{DL}\mathbf{F}^H$, and $(\mathbf{H}_{DL}{}^H\mathbf{S})^H = \mathbf{C}_{DL}\mathbf{F}^H$ can be further obtained through deformation. Therefore, the coefficient matrix $\mathbf{C}_{DL} = (\mathbf{H}_{DL}{}^H\mathbf{S})^H \mathbf{F}$ can be obtained, where $\mathbf{H}_{DL}{}^H$ is the space-frequency matrix determined by the real channel, and $\mathbf{H}_{DL}{}^H\mathbf{S}$ is a real channel obtained through spatial precoding. Each element in the coefficient matrix $\mathbf{C}_{DL}$ may be determined by multiplying a row in $(\mathbf{H}_{DL}{}^H\mathbf{S})^H$ by a column in $\mathbf{F}$. In other words, each element in the matrix coefficient $\mathbf{C}_{DL}$ may be obtained by multiplying a row in a conjugate transpose $(\mathbf{H}_{DL}{}^H\mathbf{S})^H$ of the real channel $\mathbf{H}_{DL}{}^H\mathbf{S}$ by a column in $\mathbf{F}$, or may be obtained by multiplying a conjugate transpose of a column in the real channel $\mathbf{H}_{DL}{}^H\mathbf{S}$ by a column in $\mathbf{F}$.

Therefore, in embodiments of this application, the space-frequency matrix $\mathbf{H}_{DL}$ determined based on a weighting coefficient of each angle-delay pair fed back by the terminal device may be obtained by the conjugate transpose of the real channel. On the contrary, the space-frequency matrix in embodiments of this application may alternatively be obtained by the conjugate transpose (that is, $V^H$) of the real channel **V.**

It should be understood that a relationship between the real channel and the space-frequency matrix $H_{DL}$ is not fixed. Different definitions of the space-frequency matrix and the space-frequency component matrix may change the relationship between the real channel and the space-frequency matrix $H_{DL}$. For example, the space-frequency matrix $H_{DL}$ may be obtained by the conjugate transpose of the real channel, or may be obtained by a transpose of the real channel.

When the space-frequency matrix and the space-frequency component matrix are defined differently, operations performed by the network device when the delay and the angle are loaded are also different, and operations performed by the terminal device when the terminal device performs channel measurement and feedback correspondingly change. However, this is merely implementation behavior of the terminal device and the network device, and should not constitute any limitation on this application. For ease of understanding, embodiments of this application show a case in which a space-frequency matrix is obtained by a conjugate transpose of a real channel. A definition of the channel matrix, a dimension of the space-frequency matrix and a definition thereof, and a conversion relationship between the channel matrix and the space-frequency matrix are not limited in this application. Similarly, a conversion relationship between the space-frequency matrix and the precoding matrix is not limited in this application.

For ease of understanding of embodiments of this application, the following descriptions are provided.

1. For ease of understanding, the following briefly describes main parameters in this application. P is a quantity of angle-delay pairs used by the network device to precode a reference signal, that is, a quantity of ports of precoded reference signals sent by the network device by using a transmit antenna in one polarization direction, where P is a positive integer.

Z is a quantity of transport layers, where Z is a positive integer.

N is a quantity of frequency domain units for carrying a reference signal, where N is a positive integer.

K is a quantity of angle-delay pairs, where K>1 and K is an integer.

J is a quantity of polarization directions of a transmit antenna, where J is a positive integer.

F is a frequency domain weight matrix, which may be represented as a matrix whose dimension is $N \times K$ in embodiments of this application.

S is a spatial domain weight matrix, which may be represented as a matrix whose dimension is $T \times K$ in embodiments of this application.

C is a coefficient matrix, which may be represented as a diagonal matrix whose dimension is $K \times K$ in embodiments of this application.

2. In embodiments of this application, for ease of description, when numbering is involved, sequence numbers may be consecutively numbered from 1. For example, N frequency domain units may include the 1st frequency domain unit to an Nth frequency domain unit, K angle-delay pairs may include the 1st angle-delay pair to a Kth angle-delay pair, and P reference signal ports may include the 1st reference signal port to a Pth reference signal port. Certainly, specific implementation is not limited thereto. For example, the sequence numbers may alternatively be consecutively numbered from 0. For example, N frequency domain units may include the 0th frequency domain unit to an (N-1)th frequency domain unit, K angle-delay pairs may include the 0th angle-delay pair to a (K-1)th angle-delay pair, and P reference signal ports may include the 0th reference signal port to a (P-1)th reference signal port. For brevity, examples are not listed herein. It should be understood that the foregoing descriptions are all settings for ease of describing the technical solutions provided in embodiments of this application, but are not intended to limit the scope of this application.

3. In this application, matrix and vector transformation is designed in a plurality of places. For ease of understanding, a uniform description is provided herein. A superscript T represents a transpose. For example, $A^T$ represents a transpose of a matrix (or vector) A. A superscript * represents a conjugate. For example, $A^*$ represents a conjugate of the matrix (or the vector) **A**. A superscript H represents a conjugate transpose. For example, $A^H$ represents a conjugate transpose of the matrix (or the vector) **A**. For brevity, descriptions of same or similar cases are omitted below.

4. In the following embodiments, an example in which both the angle vector and the delay vector are column vectors is used to describe embodiments provided in this application. However, this should not constitute any limitation on this application. Based on a same concept, a person skilled in the art may further think of more other possible representation forms.

5. In this application, "indicate" may include direct indication and indirect indication. When a piece of indication information indicates A, the indication information may directly indicate A or indirectly indicate A, but it does not indicate that the indication information definitely carries A. Information indicated by indication information is referred to as to-be-indicated information. In a specific implementation process, there are a plurality of manners of indicating the to-be-indicated information, for example, but not limited to, the following manners: The to-be-indicated information is directly indicated, for example, the to-be-indicated information or an index of the to-be-indicated information is indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent. In addition, a common part of all pieces of information may further be identified and indicated in a unified manner, to reduce indication overheads caused by separately indicating same information. For example, a person skilled in the art should understand that the precoding matrix includes precoding vectors, and the precoding vectors in the precoding matrix may have a same part in terms of composition or other attributes.

Furthermore, specific indication manners may alternatively be various existing indication manners, for example, but not limited to, the foregoing indication manners and various combinations thereof. For details of the various indication manners, refer to the conventional technology. The details are not described in this specification. It can be learned from the foregoing descriptions that, for example, when a plurality of pieces of information of a same type need to be indicated, different information may be indicated in different manners. In a specific implementation process, a required indication manner may be selected based on a specific requirement. The selected indication manner is not limited in embodiments of this application. In this way, the indication manner in embodiments of this application should be understood as covering various methods that can enable a to-be-indicated party to learn of to-be-indicated information.

In addition, the to-be-indicated information may have another equivalent form. For example, a row vector may be represented as a column vector, a matrix may be represented by using a transpose matrix of the matrix, or a matrix may be represented as a vector or an array, and the vector or the array may be formed by connecting row vectors or column vectors of the matrix. It should be understood that the technical solutions provided in embodiments of this application cover various forms. For example, some or all features in embodiments of this application should be understood as covering various representation forms of the features.

The to-be-indicated information may be sent as a whole, or may be divided into a plurality of pieces of sub-information for separate sending. In addition, sending periodicities and/or sending occasions of the sub-information may be the same or may be different. A specific sending method is not limited in this application. The sending periodicities and/or the sending occasions of these pieces of sub-information may be predefined, for example, predefined according to a protocol, or may be configured by a transmitter device by sending configuration information to a receiver device. The configuration information may be, for example, but is not limited to, one or a combination of at least two of radio resource control signaling, media access control (media access control, MAC) layer signaling, and physical layer signaling. The radio resource control signaling includes radio resource control (radio resource control, RRC) signaling. The MAC layer signaling includes a MAC control element (control element, CE). The physical layer signaling includes downlink control information (downlink control information, DCI) and the like.

6. Definitions of many features (for example, a Hadamard (Hadamard) product, a Kronecker (Kronecker) product, channel state information CSI, an RB, an angle, and a delay) listed in this application are merely for explaining functions of the features by using examples. For detailed content of the features, refer to a conventional technology.

7. In the following embodiments, the first, the second, and various numeric number are merely differentiation for ease of description, and are not used to limit the scope of embodiments of this application. For example, the terms are used to differentiate between different indication information.

8. In the following embodiments, "pre-obtain" may include indication by the network device by using signaling or predefinition, for example, definition in a protocol. The "predefinition" may be implemented by pre-storing corresponding code or a corresponding table in a device (for example, a terminal device and a network device), or in another manner that may indicate related information. A specific implementation of the "predefinition" is not limited in this application.

9. In embodiments of this application, "store" may be storing something in one or more memories. The one or more memories may be separately disposed, or may be integrated into an encoder, a decoder, a processor, or a communication apparatus. Alternatively, some of the one or more memories may be separately disposed, and some may be integrated into a decoder, a processor, or a communication apparatus. A type of the memory may be a storage medium in any form. This is not limited in this application.

10. In embodiments of this application, "protocol" may be a standard protocol in the communication field, for example, may include an LTE protocol, an NR protocol, and a related protocol applied to a future communication system. This is not limited in this application.

11. "At least one" means one or more, and "a plurality of" means two or more. The term "and/or" is a description of an association relationship between associated objects, and means that there may be three types of relationships. For example, A and/or B may mean that A exists alone, both A and B exist, and B exists alone, where A and B may be in a singular form or a plural form. A character "/" generally indicates an "or" relationship between the associated objects. At least one of the following items (pieces) or a similar expression thereof refers to any combination of these items, including any combination of singular items (pieces) or plural items (pieces). For example, at least one of a, b, and c may represent: a, b, or c, a and b, a and c, b and c, or a, b, and c, where a, b, and c each may be singular or plural.

12. In embodiments of this application, descriptions such as "when...", "in a case of...", and "if" all mean that a device (for example, a terminal device or a network device) performs corresponding processing in an objective case, and are not limited to time, and the device (for example, the terminal device or the network device) is not required to perform a determining action during implementation. This does not mean that there is another limitation.

In a 5G communication system, a massive multiple-input multiple-output technology plays an important role in spectral efficiency of the system. When the MIMO technology is used, when the network device sends data to the terminal device, modulation and coding and signal precoding need to be performed. How the network device sends the data to the terminal device needs to depend on channel state information CSI fed back by the terminal device to the network device, and the CSI plays a great role in system performance.

In a TDD system, because an uplink channel and a downlink channel use same bandwidth, and the uplink channel and the downlink channel have reciprocity, a network device may obtain CSI of the downlink channel by using the uplink channel based on the reciprocity between the uplink channel and the downlink channel, to perform signal precoding.

In an FDD system, a network device may send, by using FDD partial reciprocity, information having reciprocity to a pilot, and a terminal device only needs to feed back information having no reciprocity (for example, information other than an angle and a delay). The network device can obtain, based on the information that is fed back by the terminal device and that does not have reciprocity, complete CSI of a downlink channel by using information that is obtained by using an uplink channel and that has reciprocity.

The network device may estimate some prior information by using uplink channel information, including angle and delay information of the uplink channel. Then, an obtained angle or delay is loaded to a downlink CSI-RS pilot, and the terminal device is indicated to measure and feed back supplementary information that needs to be obtained by the network device. One piece of angle-delay pair information is loaded for each CSI-RS port. The terminal device only needs to perform full-band accumulation on received equivalent channels (pilot signals) of CSI-RS ports, to obtain a complex coefficient of a corresponding angle-delay pair of the downlink channel on each port:

$$C_{DL}^{P} = \sum_{s=1}^{N_{sb}} H_{eq}^{p,s} ,$$

where

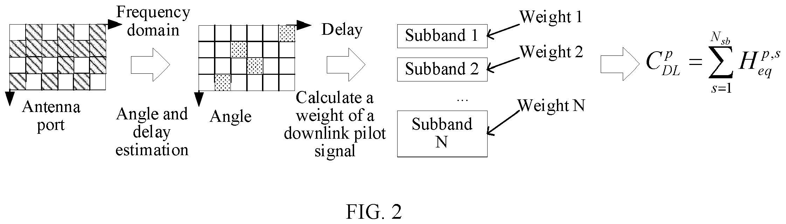

$H_{eq}^{p,s}$ is a channel estimation result of a port p on a subband s. Then, the terminal device reports a calculated complex coefficient matrix of each port to the network device, and the network device may reconstruct a downlink channel or precoding based on the angle and delay information measured by using an uplink pilot and supplementary information fed back by the terminal device. That is, a base station completes downlink channel reconstruction based on a spatial domain information matrix **S** and a frequency domain information matrix **F** that are reciprocal. In the foregoing CSI obtaining solution, only one piece of angle-delay pair information can be loaded for each CSI-RS pilot port. That is, when CSI-RS resources of $P_{CSI-RS}$ ports are configured on a base station side, only $P_{CSI-RS}$ pieces of angle-delay pair information can be loaded. FIG. 2 shows a schematic flowchart of a solution in which a network device obtains CSI based on FDD partial reciprocity. A specific implementation process is described above. For brevity, details are not described herein again.

It should be understood that a codebook of the foregoing CSI obtaining solution based on FDD partial reciprocity may be expressed as:

$$W = W_1 \tilde{W}_2 \mathbf{W}_f^H ,$$

where

$W_1 \in \square^{PCSI-RS \times 2L0}$ is a port selection matrix, each column of $W_1$ has only one non-zero element whose value is 1, and represents that $2L_0$ ports are selected from $P_{CSI-RS}$ ports, and $L_0$ is a quantity of ports selected in one polarization direction. $P_{CSI-RS}$ and $L_0$ may be configured by the base station by using one or more of RRC signaling, a MAC CE signaling, or DCI signaling, or may be directly agreed on in a protocol. This is not specifically limited in this application.

$\tilde{W}_2 \in \square^{2L0 \times 1}$ is a superposition coefficient matrix corresponding to the $2L_0$ CSI-RS ports and selected for UE, $\mathbf{W}_f \in \square^{Nf \times 1}$ is a frequency domain base matrix, $N_f$ is a frequency domain RB resource quantity or a subband quantity, and $W_f$ may indicate a column or several columns of a DFT matrix.

In massive MIMO, spatial multiplexing may be for performing multi-layer (layer) transmission for a user. In an FDD system, to implement multi-layer transmission, a user needs to feed back channel state information CSI corresponding to a plurality of layers. For example, the user determines a most appropriate quantity (Rank) of transport layers based on an indication of the base station and downlink channel quality. For example, there are two most suitable transport layers currently, which are respectively layer1 and layer2. A user needs to separately calculate PMIs corresponding to layer1 and layer2, and calculate a CQI corresponding to a current PMI.

It is found from a test that when spatial multiplexing is for implementing multi-layer transmission for a user, a power difference between layers is large. In the TDD system, a power difference between layers can be obtained by using reciprocity between uplink and downlink channels to implement inter-layer power allocation. However, in the FDD system, there is only reciprocity between angles and delays. In addition, based on a current CSI measurement and feedback method, the UE independently normalizes each layer, and feeds back only one CQI. In other words, the UE normalizes and reports each layer based on a maximum value corresponding to each layer, and power of all layers received by the base station is equal and has no difference. In this case, the base station cannot learn of the inter-layer power difference, and cannot perform inter-layer layer power allocation to obtain a gain.

For example, if a maximum value corresponding to layer1 is 2, and a maximum value corresponding to layer2 is 0.2, values obtained through normalization are both 1. The UE separately reports the normalized values of layer1 and layer2. If power values of layer1 and layer2 received by the base station are the same, the base station cannot learn of an accurate value of each layer, and cannot allocate power.

In addition, when the CSI obtaining solution based on partial reciprocity is for high-rank feedback, angle information and delay information corresponding to each layer further need to be obtained. However, in practice, the angle information and the delay information of each layer may differ. If the base station sends only angle and delay information common to each layer (layer common) to a user, precision of a final PMI is affected, and system performance is affected. To ensure that the information is complete without loss, the base station may combine the angle information and the delay information of each layer, and send combined information to the UE. In this case, because the UE cannot learn which angle information and delay information are specific to layer1 and layer2, the UE can only separately perform searching and calculation at layer1 and layer2, which inevitably increases extra calculation overheads. Therefore, to ensure PMI precision of each layer and reduce calculation complexity, the base station should send angle information and delay information of each layer (layer specific) to the user. However, in a current technology, the UE cannot learn which angle information and delay information are layer specific. Therefore, for the specific information, the UE also performs searching and calculation on each layer like the layer-common angle and delay information, which undoubtedly increases complexity of calculation by the UE.

When an existing CSI obtaining solution is used for high-rank feedback, an inter-layer power difference cannot be learned of and layer specific angle and delay information cannot be supported. In view of this, this application mainly provides a high-rank CSI measurement and feedback method, to implement CSI reporting of an inter-layer power difference, and support separate processing of layer specific angle and delay information, thereby implementing multi-layer transmission and improving system transmission performance.

The following describes in detail a communication method provided in embodiments of this application with reference to the accompanying drawings.

It should be understood that the method provided in embodiments of this application may be applied to a system in which communication is performed by using a multi-antenna technology, for example, the communication system 100 shown in FIG. 1. The communication system may include at least one network device and at least one terminal device. The network device may communicate with the terminal device by using a multi-antenna technology.

It should be understood that, for ease of understanding and description, the following describes in detail the method provided in embodiments of this application by using interaction between the terminal device and the network device as an example. However, this should not constitute any limitation on an execution body of the method provided in this application. For example, the terminal device shown in the following embodiments may be replaced with a component (for example, a circuit, a chip, a chip system, or another functional module that can invoke and execute a program) disposed in the terminal device. The network device shown in the following embodiments may be replaced with a component (for example, a circuit, a chip, a chip system, or another functional module that can invoke and execute a program) disposed in the network device. Any execution body is available provided that a program that records code of the method provided in embodiments of this application can be run, to implement channel measurement according to the method provided in embodiments of this application. For example, the method provided in embodiments of this application may be performed by a terminal device or a network device, or may be a functional module that is in the terminal device or the network device and that can invoke and execute a program.

Without loss of generality, the following describes in detail the channel measurement method provided in embodiments of this application by using interaction between the network device and the terminal device as an example.

In an implementation, the network device may precode a downlink reference signal based on a pre-determined angle vector and a pre-determined delay vector, so that the terminal device estimates and feeds back, based on a received precoded reference signal, a plurality of weighting coefficients corresponding to a plurality of angle-delay pairs. The network device may determine, based on the plurality of angle-delay pairs and the plurality of weighting coefficients fed back by the terminal device, a precoding matrix adapted to a downlink channel.

In another implementation, the network device may precode a downlink reference signal based on a pre-determined delay vector, so that the terminal device estimates and feeds back, based on a received precoded reference signal, a plurality of weighting coefficients corresponding to a plurality of antenna delay pairs. The network device may determine, based on the plurality of antenna delay pairs and the plurality of weighting coefficients fed back by the terminal device, a precoding matrix adapted to a downlink channel.

For ease of understanding, in the following embodiments, a specific process in which the terminal device performs channel measurement and feedback based on a precoded reference signal received on a receive antenna is described in detail by using a precoded reference signal sent by a transmit antenna in one polarization direction as an example. Then, a transmit antenna in one polarization direction is extended to transmit antennas in a plurality of polarization directions, and one receive antenna is extended to a plurality of receive antennas, to describe in detail a specific process in which the terminal device feeds back P reference signal ports and P corresponding weighting coefficients to the network device. Then, feedback based on a receive antenna is converted into feedback based on a transport layer. This further describes a specific process in which the terminal device feeds back the P reference signal ports and the P corresponding weighting coefficients to the network device based on the transport layer. Finally, a specific process in which the network device determines a precoding matrix is separately described in detail for two cases: feedback based on the receive antenna and feedback based on the received transport layer.

It should be understood that, when the terminal device describes embodiments of this application based on one polarization direction, the polarization direction may be any one of one or more polarization directions of a transmit antenna configured by the network device. In other words, for a precoded reference signal transmitted by a transmit antenna in any polarization direction, the terminal device may perform channel measurement according to the method provided in embodiments of this application, or the network device may determine a precoding matrix according to the method provided in embodiments of this application.

It should be further understood that, when the terminal device describes embodiments of this application based on one receive antenna, the receive antenna may be any one of one or more receive antennas configured by the terminal device. In other words, for a precoded reference signal received by any receive antenna, the terminal device may perform channel measurement according to the method provided in embodiments of this application, or the network device may determine a precoding matrix according to the method provided in embodiments of this application.

It should be further understood that a quantity J of polarization directions of transmit antennas configured by the network device is not limited in this application. For example, there may be one polarization direction, that is, a single polarization direction, or there may be a plurality of polarization directions, for example, dual-polarization directions. A quantity of receive antennas configured by the terminal device is not limited in this application. For example, there may be one or more receive antennas.

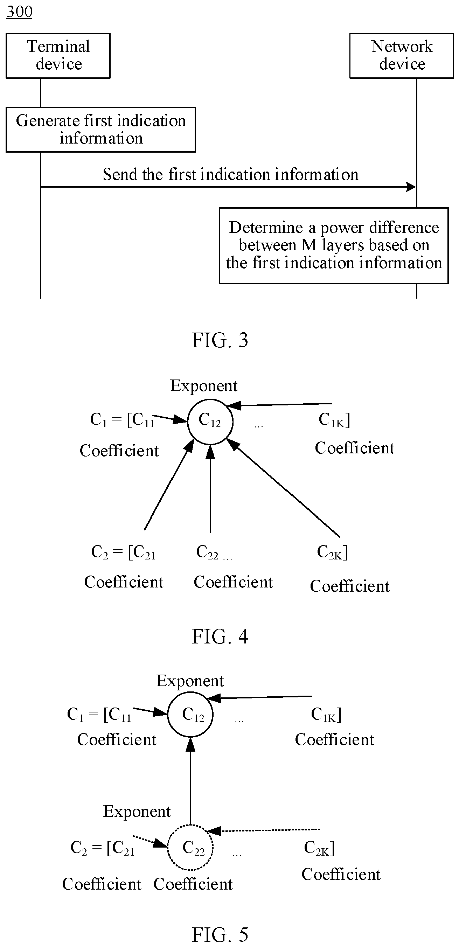

The following FIG. 3 to FIG. 6 show an inter-layer joint feedback quantization method used for high-rank feedback quantization to resolve a problem that a current network device cannot learn of a power difference between a plurality of layers layers. First, a principle of inter-layer joint PMI quantization feedback is described.

To implement multi-layer transmission, the terminal device needs to feed back CSI corresponding to a plurality of layers. In other words, when measuring, calculating, quantizing, and feeding back PMIs of a plurality of layers, the terminal device needs to consider an inter-layer power difference, and perform inter-layer joint PMI quantization feedback. For example, when the terminal device performs rank-4 quantization feedback, it is assumed that before normalization, PMIs corresponding to layer1, layer2, layer3, and layer4 are respectively PMI1, PMI2, PMI3, and PMI4, and eigenvalues corresponding to the PMIs are respectively A1, A2, A3, and A4. In this case, the terminal device needs to first multiply an eigenvalue by a corresponding PMI to obtain A1*PMI1, A2*PMI2, A3*PMI3, and A4*PMI4, and then perform joint quantization on the PMIs obtained through the multiplication. For example:

$$\overline{PMI}1 = \frac{A1*PMI1}{A1*PMI1_i} \quad , \quad \overline{PMI}2 = \frac{A1*PMI2}{A1*PMI1_i} \quad , \quad \overline{PMI}3 = \frac{A1*PMI3}{A1*PMI1_i} \quad ,$$

and

$$\overline{PMI}4 = \frac{A1*PMI4}{A1*PMI1_i} .$$

$PMI1_i$ is a maximum element in modulus values corresponding to PMI1. It should be noted that, linear superposition coefficients corresponding to the layers herein are normalized based on a maximum linear superposition coefficient of layer1. Which layer is selected as a normalization reference is not limited in this application. That is, when inter-layer layer joint quantization feedback is performed for a plurality of layers, layer2 may also be selected to perform linear superposition coefficient normalization. In this case, a denominator of joint PMI quantization is a largest element $PMI2_i$

in modulus values corresponding to PMI2.

According to the foregoing procedure, the terminal device performs inter-layer joint PMI quantization and feedback, so that the inter-layer power difference can be reported. Then, the network device may control inter-layer power based on the inter-layer power difference reported by the terminal device, to improve system performance. According to experiment comparison, a system performance gain is improved when power adjustment is performed based on the inter-layer power difference.

FIG. 3 is a schematic flowchart of a channel measurement method according to an embodiment of this application. An inter-layer joint PMI quantization feedback method 300 is proposed. The following specific steps are included.

S310. A terminal device generates first indication information.

The first indication information indicates quantized information of M jointly normalized weighting coefficient sets, each of the M weighting coefficient sets is determined by using a reference signal, the M weighting coefficient sets are in a one-to-one correspondence with M layers, and M is a positive integer greater than or equal to 2.

It should be understood that, in the foregoing implementation, joint normalization may mean: All weighting coefficients in the M weighting coefficient sets are normalized by using a weighting coefficient with a maximum modulus value in a weighting coefficient set as a reference. Alternatively, a weighting coefficient with a maximum modulus value in a weighting coefficient set is used as a reference to normalize a weighting coefficient with a maximum modulus value in each of the other M-1 weighting coefficient sets, and then all weighting coefficients in respective weighting coefficient sets are normalized by using a weighting coefficient with a maximum modulus value in the M weighting coefficient sets as a reference. In short, joint normalization is to perform quantization and normalization on the M weighting coefficient sets jointly by using one of the weighting coefficient sets as a reference.

It should be noted that, in joint normalization in this embodiment of this application, a reference weighting coefficient may be a weighting coefficient with a maximum modulus value in a weighting coefficient set corresponding to the reference weighting coefficient, may be any weighting coefficient in a weighting coefficient set corresponding to the reference weighting coefficient, or may be a weighting coefficient selected according to a preset rule.

It should be further understood that the quantized information in this application may be a specific value obtain through quantization (which may be referred to as a "quantized value" or a "quantized value"), for example, a quantized value of an amplitude or a quantized value of a phase, or may be indication information (for example, an identifier or an index) indicating a quantized value.

For example, all weighting coefficients in the M layers are normalized by using a weighting coefficient $C_{12}$ with a maximum modulus value in a first weighting coefficient set corresponding to the first layer as a reference for joint quantization. The reference in this application may be a weighting coefficient with a maximum modulus value, or may be any weighting coefficient in a weighting coefficient set. In this case, the terminal device may finally report quantized values (or indication information of quantized values) of all the weighting coefficients in the M weighting coefficient sets, including a quantized value (or indication information of a quantized value) of the weighting coefficient $C_{12}$ with the maximum modulus value in the first weighting coefficient set, and the like.

Optionally, the terminal device may alternatively report an index obtained through quantization of a weighting coefficient, for example, location information or identification information of the weighting coefficient. For example, all weighting coefficients in the M layers are normalized by using a weighting coefficient $C_{12}$ with a maximum modulus value in a first weighting coefficient set corresponding to the first layer as a reference for joint quantization. The reference in this application may be a weighting coefficient with a maximum modulus value, or may be any weighting coefficient in a weighting coefficient set. In this case, the terminal device may finally report location information or an index of the weighting coefficient $C_{12}$ with the maximum modulus value in the first weighting coefficient set, and report quantized values (or index information indicating quantized values) of all weighting coefficients except the weighting coefficient $C_{12}$ with the maximum modulus value.

Optionally, as predefined in a protocol, the network device and the terminal device determine in advance that a weighting coefficient in a weighting coefficient set is used as a quantization reference. For example, a weighting coefficient $C_{11}$ in the first weighting coefficient set corresponding to the first layer is used as a joint quantization reference. In this case, after quantization and normalization, the terminal device does not need to report quantized information and/or an index of the weighting coefficient $C_{11}$ again. This implementation can reduce signaling overheads and reduce terminal power consumption.

It should be noted that a quantity of pieces of quantized information reported by the terminal device and reporting are not specifically limited in this application. One or more of the M layers may be reported.

In a possible implementation, each of the M weighting coefficient sets includes a plurality of weighting coefficients. All weighting coefficients in the M weighting coefficient sets are normalized based on a first weighting coefficient, to obtain the quantized information of the M jointly normalized weighting coefficient sets, where the first weighting coefficient is a weighting coefficient in an $L^{th}$ weighting coefficient set, the $L^{th}$ weighting coefficient set is any one of the M weighting coefficient sets, and L is a positive integer; and a first message is sent, where the first message indicates the first weighting coefficient.

Optionally, the first weighting coefficient is a weighting coefficient with a maximum modulus value in the $L^{th}$ weighting coefficient set.

For example, linear superposition coefficients corresponding to layers are normalized based on a linear superposition coefficient $C_{12}$ with a maximum modulus value corresponding to layer1.

It should be understood that, the $L^{th}$ weighting coefficient set is determined by a terminal device, or the $L^{th}$ weighting coefficient set is predefined in a protocol.

In another possible implementation, first normalization is performed on M-1 third weighting coefficients based on a second weighting coefficient, where the second weighting coefficient is a weighting coefficient in a $U^{th}$ weighting coefficient set, the $U^{th}$ weighting coefficient set corresponds to a $u^{th}$ layer, the third weighting coefficient is a weighting coefficient in each of M-1 weighting coefficient sets other than the $U^{th}$ weighting coefficient set in the M weighting coefficient sets, the M-1 weighting coefficient sets are in a one-to-one correspondence with M-1 layers other than the $u^{th}$ layer in the M layers, both U and u are positive integers, and the $u^{th}$ layer belongs to the M layers. Second normalization is performed on all weighting coefficients in the $U^{th}$ weighting coefficient set based on the second weighting coefficient, third normalization is performed, based on the third weighting coefficient, on all weighting coefficients in a weighting coefficient set corresponding to the third weighting coefficient, and the quantized information of the M jointly normalized weighting coefficient sets is obtained based on the first normalization, the second normalization, and the third normalization. The terminal device sends a second message to the network device. Correspondingly, the network device receives the second message from the terminal device. The second message indicates the second weighting coefficient and the M-1 third weighting coefficients.

Optionally, the second weighting coefficient is a weighting coefficient with a maximum modulus value in the $U^{th}$ weighting coefficient set, and/or the third weighting coefficient is a weighting coefficient with a maximum modulus value in each of the M-1 weighting coefficient sets other than the $U^{th}$ weighting coefficient set in the M weighting coefficient sets.

For example, a linear superposition coefficient with a maximum modulus value corresponding to each layer is normalized based on a linear superposition coefficient with the maximum modulus value corresponding to layer1. In addition, other linear superposition coefficients corresponding to each layer are normalized based on the linear superposition coefficient with the maximum modulus value corresponding to the layer.

It should be understood that, the $U^{th}$ weighting coefficient set is determined by the terminal device, or the $U^{th}$ weighting coefficient set is predefined in a protocol.

In still another possible implementation, fourth normalization is performed on M-1 fifth weighting coefficients based on a fourth weighting coefficient, where the fourth weighting coefficient is a weighting coefficient in an $X^{th}$ weighting coefficient set, the $X^{th}$ weighting coefficient set corresponds to an $x^{th}$ layer, the fifth weighting coefficient is a weighting coefficient in each of M-1 weighting coefficient sets other than the $X^{th}$ weighting coefficient set in the M weighting coefficient sets, the M-1 weighting coefficient sets are in a one-to-one correspondence with M-1 layers other than the $x^{th}$ layer in the M layers, both X and x are positive integers, and the $x^{th}$ layer belongs to the M layers; fifth normalization is performed on all weighting coefficients in the $X^{th}$ weighting coefficient set based on the fourth weighting coefficient; sixth normalization and seventh normalization are performed, based on the fourth weighting coefficient and the fifth weighting coefficient respectively, on all weighting coefficients in a weighting coefficient set corresponding to the fifth weighting coefficient; the quantized information of the M jointly normalized weighting coefficient sets is obtained based on the fourth normalization, the fifth normalization, the sixth normalization, and the seventh normalization; and the terminal device sends a third message to the network device. Correspondingly, the network device receives the third message from the terminal device. The third message indicates the fourth weighting coefficient and the M-1 fifth weighting coefficients.

Optionally, the fourth weighting coefficient is a weighting coefficient with a maximum modulus value in the $X^{th}$ weighting coefficient set, and/or the fifth weighting coefficient is a weighting coefficient with a maximum modulus value in each of the M-1 weighting coefficient sets other than the $X^{th}$ weighting coefficient set in the M weighting coefficient sets.

For example, a linear superposition coefficient with a maximum modulus value corresponding to each layer is normalized based on a linear superposition coefficient with the maximum modulus value corresponding to layer1. In addition, other linear superposition coefficients corresponding to each layer are separately normalized based on the linear superposition coefficient with the maximum modulus value corresponding to layer1 and a linear superposition coefficient with a maximum modulus value corresponding to each layer.

It should be understood that, the $X^{th}$ weighting coefficient set is determined by the terminal device, or the $X^{th}$ weighting coefficient set is predefined in a protocol.

S320. The terminal device sends the first indication information to the network device. Correspondingly, the network device receives the first indication information from the terminal device.

For example, the UE reports an index of the linear superposition coefficient with the maximum modulus value corresponding to layer1, and quantized values of amplitudes and phases of all other linear superposition coefficients obtained through normalization.

For example, the UE reports the index of the linear superposition coefficient with the maximum modulus value corresponding to layer1, linear superposition coefficient with maximum modulus values corresponding to layers other than the layer1 and indexes corresponding to the linear superposition coefficients, and the quantized values of the amplitudes and the phases of all the other linear superposition coefficients obtained through normalization.

S330. The network device determines a power difference between the M layers based on the first indication information.

In this embodiment of this application, a manner of carrying the indication information, the configuration information, and the like may be but is not limited to one or a combination of at least two of radio resource control signaling, media access control MAC layer signaling, and physical PHY layer signaling. The radio resource control signaling includes radio resource control RRC signaling. The MAC layer signaling includes a MAC control element CE. The physical layer signaling includes downlink control information DCI and the like.

For example, the network device delivers a first message list and/or a second message list to the terminal device. The first message list and/or the second message list may be delivered by using UE-specific signaling, for example, configured by using RRC signaling and activated by using MAC-CE signaling, and the first message list is indicated to the terminal device by delivering DCI. A specific implementation is not limited in this application.

**Embodiment 1**

FIG. 4 is a schematic diagram of an example of an inter-layer joint PMI quantization feedback method to which an embodiment of this application is applicable. For example, it is assumed that currently there are two most appropriate transport layers: layer1 and layer2. As shown in FIG. 4, the following formulas (1) and (2) represent linear superposition coefficient matrices corresponding to layer1 and layer2 respectively:

$$\mathbf{C}_1 = \begin{bmatrix} \mathbf{c}_{11}\mathbf{c}_{12}...\mathbf{c}_{1K} \end{bmatrix} \quad (1)$$

$$\mathbf{C}_2 = \begin{bmatrix} \mathbf{c}_{21}\mathbf{c}_{22}...\mathbf{c}_{2K} \end{bmatrix} \quad (2)$$

The matrix $C_1$ and the matrix $C_2$ each have K columns.

It should be noted that quantities of the columns in the linear superposition coefficient matrices corresponding to layer1 and layer2 may be the same or different. This is not limited in this application.

For example, as specified in a protocol, the linear superposition coefficients corresponding to layer1 and layer2 are jointly normalized and then reported. Then, UE normalizes all linear superposition coefficients corresponding to layer1 and layer2 based on a linear superposition coefficient with a maximum modulus value corresponding to layer1. For example, it is determined that an element with a maximum modulus value in the matrix $C_1$ (an example of an $L^{th}$ weighting coefficient) corresponding to layer1 is $C_{12}$ (an example of a first weighting coefficient), and all coefficients in the linear superposition coefficient matrices $C_1$ and $C_2$ corresponding to layer1 and layer2 are divided by $C_{12}$ for quantization. Finally, the UE reports, to a base station, an index (an example of a first message) corresponding to the linear superposition coefficient $C_{12}$ with the maximum modulus value corresponding to layer1, and quantized values (an example of first indication information) of amplitudes and phases of all linear superposition coefficients, except $C_{12}$, obtained through normalization in the linear superposition coefficient matrices $C_1$ and $C_2$ corresponding to layer1 and layer2, namely, $C_{11}$, ..., $C_{1K}$, $C_{21}$, $C_{22}$, ..., $C_{2K}$, and the like. Optionally, quantized information finally reported by the UE may be a specific quantized value, for example, quantized values of amplitudes and phases corresponding to layer1 and layer2. The base station may determine that $C_{12}$ is a quantized reference when obtaining that a quantized value of $C_{12}$ is 1. In this implementation, the UE does not need to report the index corresponding to $C_{12}$.

For example, the index may indicate that $C_{12}$ is the $2^{nd}$ linear superposition coefficient in the linear superposition coefficient matrix $C_1$.

Optionally, the UE may alternatively report an index corresponding to quantized $C_{12}$, for example, port port information location and/or frequency domain vector location information (or location information of spatial domain vectors and frequency domain vectors, or location information of space-frequency vectors) corresponding to $C_{12}$.

Alternatively, as specified by the UE and the base station in advance through protocol predefinition, $C_{12}$ is determined as a quantization reference. In this case, the UE does not need to report quantized information and an index of $C_{12}$, and/or the like again, thereby further reducing signaling overheads and reducing terminal power consumption.

It should be noted that, linear superposition coefficients corresponding to the layers herein are normalized based on a maximum linear superposition coefficient of layer1. Which layer is selected as a normalization reference is not limited in this application. That is, when inter-layer layer joint quantization feedback is performed, layer2 may also be selected to perform linear superposition coefficient normalization. In this case, a denominator of joint PMI quantization is a largest element matrix $C_{2i}$ in the matrix $C_2$.

In conclusion, in comparison with the independent normalization performed on each layer in the PMI coefficient quantization solution, in this embodiment of this application, the linear superposition coefficients corresponding to the layers are normalized based on the linear superposition coefficient with the maximum modulus value corresponding to layer1. In addition, in a coefficient reporting method, compared with a previous method in which only an index is reported for a maximum value corresponding to each layer, in this embodiment of this application, only the index for the maximum value corresponding to layer1 is reported, and quantization results of amplitudes and phases need to be reported for all other coefficients.

In conclusion, as described in this embodiment, the linear superposition coefficients of the layers are normalized based on the linear superposition coefficient with the maximum modulus value corresponding to layer1, so that an inter-layer joint PMI quantization feedback method can be implemented. This ensures that a network device learns of a power difference between a plurality of layers layers, thereby implementing power allocation and obtaining a system gain.

**Embodiment 2**

A difference from Embodiment 1 lies in: In Embodiment 1, the linear superposition coefficients corresponding to the layers are normalized based on the linear superposition coefficient with the maximum modulus value corresponding to layer1, to implement inter-layer joint PMI quantization feedback. In Embodiment 2, a linear superposition coefficient with a maximum modulus value corresponding to each layer is normalized based on a linear superposition coefficient with a maximum modulus value corresponding to layer1, and other linear superposition coefficients of each layer are normalized based on the linear superposition coefficient with the maximum modulus value corresponding to each layer, to implement inter-layer joint PMI quantization feedback. FIG. 5 is a schematic diagram of another example of an inter-layer joint PMI quantization feedback method to which an embodiment of this application is applicable. For example, it is assumed that currently there are two most appropriate transport layers: layer1 and layer2. As shown in FIG. 5, the following formulas (3) and (4) represent linear superposition coefficient matrices corresponding to layer1 and layer2 respectively:

$$\mathbf{C}_1 = \begin{bmatrix} \mathbf{c}_{11}\mathbf{c}_{12}...\mathbf{c}_{1K} \end{bmatrix} \quad (3)$$

$$\mathbf{C}_2 = \begin{bmatrix} \mathbf{c}_{21}\mathbf{c}_{22}...\mathbf{c}_{2K} \end{bmatrix} \quad (4)$$

The matrix $C_1$ and the matrix $C_2$ each have K columns.

It should be noted that quantities of the columns in the linear superposition coefficient matrices corresponding to layer1 and layer2 may be the same or different. This is not limited in this application.

For example, as specified in a protocol, the linear superposition coefficients corresponding to layer1 and layer2 are jointly normalized and then reported. Then, UE normalizes linear superposition coefficients with maximum modulus values corresponding to layer1 and layer2 based on a linear superposition coefficient with a maximum modulus value corresponding to layer1. For example, it is determined that a maximum element in the matrix $C_1$ (an example of a $U^{th}$ weighting coefficient set) corresponding to layer1 (an example of a $u^{th}$ layer) is $C_{12}$ (an example of a second weighting coefficient), and a maximum element in the matrix $C_2$ (one of M-1 weighting coefficient sets) corresponding to layer2 is $C_{22}$ (an example of a third weighting coefficient). A linear superposition coefficient $C_{22}$ with a maximum modulus value corresponding to layer2 is divided by $C_{12}$ for quantization (an example of first normalization). Then, other linear superposition coefficients of each layer are normalized based on a linear superposition coefficient with a maximum modulus value corresponding to the layer. To be specific, all linear superposition coefficients of layer1 are divided by $C_{12}$ for quantization (an example of second normalization), and all linear superposition coefficients of layer2 are divided by $C_{22}$ for quantization (an example of third normalization). Finally, the UE reports, to a base station, an index (an example of a second message) corresponding to the linear superposition coefficient $C_{12}$ with the maximum modulus value corresponding to layer1, an index (an example of the second message) corresponding to a linear superposition coefficient $C_{22}$ with a maximum modulus value corresponding to another layer (layer2) different from layer1, and quantized values (an example of first indication information) of amplitudes and phases of all linear superposition coefficients, except $C_{12}$, obtained through normalization in the linear superposition coefficient matrices $C_1$ and $C_2$ corresponding to layer1 and layer2, namely, $C_{11}$, ..., $C_{1K}$, $C_{21}$, $C_{22}$, ..., $C_{2K}$, and the like.

Optionally, quantized information finally reported by the UE may be a specific quantized value, for example, quantized values of amplitudes and phases corresponding to layer1 and layer2. The base station may determine that $C_{12}$ is a quantized reference when obtaining that a quantized value of $C_{12}$ is 1. In this implementation, the UE does not need to report the index corresponding to $C_{12}$. For example, the index may indicate that $C_{12}$ is the $2^{nd}$ linear superposition coefficient in the linear superposition coefficient matrix $C_1$.

Optionally, the UE may also report indexes corresponding to quantized $C_{12}$ and $C_{22}$, for example, port port information location and/or frequency domain vector location information (or location information of spatial domain vectors and frequency domain vectors, or location information of space-frequency vectors) corresponding to $C_{12}$ and $C_{22}$.

Alternatively, as specified by the UE and the base station in advance through protocol predefinition, $C_{12}$ is used as a quantization reference, and then $C_{12}$ and $C_{22}$ are used as quantization references. In this case, the UE does not need to report indexes of $C_{12}$ and $C_{22}$, and the like again, thereby further reducing signaling overheads and reducing terminal power consumption.

It should be noted that, linear superposition coefficients corresponding to the layers herein are normalized based on a maximum linear superposition coefficient of layer1 . Which layer is selected as a normalization reference is not limited in this application. That is, when inter-layer layer joint quantization feedback is performed, layer2 may also be selected to perform linear superposition coefficient normalization. In this case, a denominator of joint PMI quantization is a largest element matrix $C_{2i}$ in the matrix $C_2$.

In conclusion, in comparison with the independent normalization performed on each layer in the PMI coefficient quantization solution, in this embodiment of this application, linear superposition coefficients with maximum modulus values corresponding to each layer are normalized based on the linear superposition coefficient with the maximum modulus value corresponding to layer1. In addition, in a coefficient reporting method, compared with a previous method in which only an index is reported for a maximum value corresponding to each layer, in this embodiment of this application, in addition to an index for a coefficient with a maximum value corresponding to layer1, an index for a coefficient with a maximum value corresponding to another layer, namely, layer2 further needs to be reported. In addition, except the coefficient with the maximum value corresponding to layer1, quantization results of the amplitudes and the phases need to be reported for all other coefficients.

In conclusion, as described in this embodiment, maximum values of linear superposition coefficients of layers are normalized based on the linear superposition coefficient with the maximum modulus value corresponding to layer1, so that an inter-layer joint PMI quantization feedback method can be implemented. This ensures that a network device learns of a power difference between a plurality of layers layers, thereby implementing power allocation and obtaining a system gain.

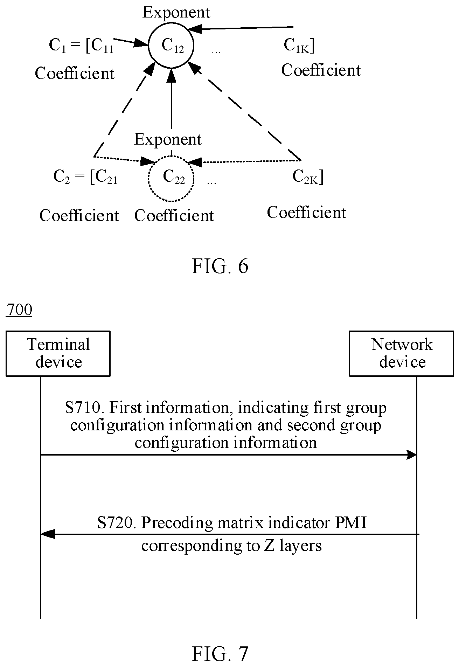

FIG. 6 is a schematic diagram of still another example of an inter-layer joint PMI quantization feedback method to which an embodiment of this application is applicable. For example, it is assumed that currently there are two most appropriate transport layers: layer1 and layer2. As shown in FIG. 6, the following formulas (5) and (6) represent linear superposition coefficient matrices corresponding to layer1 and layer2 respectively:

$$\mathbf{C}_1 = \begin{bmatrix} \mathbf{c}_{11} \mathbf{c}_{12} \dots \mathbf{c}_{1K} \end{bmatrix} \quad (5)$$

$$\mathbf{C}_2 = \begin{bmatrix} \mathbf{c}_{21} \mathbf{c}_{22} \dots \mathbf{c}_{2K} \end{bmatrix} \quad (6)$$

The matrix $C_1$ and the matrix $C_2$ each have K columns.

It should be noted that quantities of the columns in the linear superposition coefficient matrices corresponding to layer1 and layer2 may be the same or different. This is not limited in this application.

For example, as specified in a protocol, the linear superposition coefficients corresponding to layer1 and layer2 are jointly normalized and then reported. Then, UE normalizes linear superposition coefficients with maximum modulus values corresponding to layer1 and layer2 based on a linear superposition coefficient with a maximum modulus value corresponding to layer1. For example, it is determined that a maximum element in the matrix $C_1$ (an example of an $X^{th}$ weighting coefficient set) corresponding to layer1 (an example of an $x^{th}$ layer) is $C_{12}$ (an example of a fourth weighting coefficient), and a maximum element in the matrix $C_2$ (one of M-1 weighting coefficient sets) corresponding to layer2 is $C_{22}$ (an example of a fifth weighting coefficient). A linear superposition coefficient $C_{22}$ with a maximum modulus value corresponding to layer2 is divided by $C_{12}$ for quantization (an example of fourth normalization). Then, other linear superposition coefficients of each layer are separately normalized based on a linear superposition coefficient with a maximum modulus value corresponding to layer1 and a linear superposition coefficient with a maximum modulus value corresponding to each layer. To be specific, all linear superposition coefficients of layer1 are divided by $C_{12}$ for quantization (an example of fifth normalization), and all linear superposition coefficients of layer2 are separately divided by $C_{12}$ and $C_{22}$ for quantization (examples of sixth normalization and seventh normalization). Finally, the UE reports, to a base station, an index (an example of the second message) corresponding to the linear superposition coefficient $C_{12}$ with the maximum modulus value corresponding to layer1, an index (an example of the second message) corresponding to a linear superposition coefficient $C_{22}$ with a maximum modulus value corresponding to another layer (layer2) different from layer1, and quantized values (an example of first indication information) of amplitudes and phases of all linear

superposition coefficients, except $C_{12}$, obtained through normalization in the linear superposition coefficient matrices $C_1$ and $C_2$ corresponding to layer1 and layer2, namely, $C_{11}$, ..., $C_{1K}$, $C_{21}$, $C_{22}$, ..., $C_{2K}$, and the like

Optionally, quantized information finally reported by the UE may be a specific quantized value, for example, quantized values of amplitudes and phases corresponding to layer1 and layer2. The base station may determine that $C_{12}$ is a quantized reference when obtaining that a quantized value of $C_{12}$ is 1. In this implementation, the UE does not need to report the index corresponding to $C_{12}$. For example, the index may indicate that $C_{12}$ is the $2^{nd}$ linear superposition coefficient in the linear superposition coefficient matrix $C_1$.

Optionally, the UE may also report indexes corresponding to quantized $C_{12}$ and $C_{22}$, for example, port port information location and/or frequency domain vector location information (or location information of spatial domain vectors and frequency domain vectors, or location information of space-frequency vectors) corresponding to $C_{12}$ and $C_{22}$.

Alternatively, as specified by the UE and the base station in advance through protocol predefinition, $C_{12}$ is used as a quantization reference, and then $C_{12}$ and $C_{22}$ are used as quantization references. In this case, the UE does not need to report indexes of $C_{12}$ and $C_{22}$, and the like again, thereby further reducing signaling overheads and reducing terminal power consumption.

It should be noted that, linear superposition coefficients corresponding to the layers herein are normalized based on a maximum linear superposition coefficient of layer1 . Which layer is selected as a normalization reference is not limited in this application. That is, when inter-layer layer joint quantization feedback is performed, layer2 may also be selected to perform linear superposition coefficient normalization. In this case, a denominator of joint PMI quantization is a largest element matrix $C_{2i}$ in the matrix $C_2$.

In conclusion, in comparison with the independent normalization performed on each layer in the PMI coefficient quantization solution, in this embodiment of this application, linear superposition coefficients with maximum modulus values corresponding to each layer are normalized based on the linear superposition coefficient with the maximum modulus value corresponding to layer1. In addition, in a coefficient reporting method, compared with a previous method in which only an index is reported for a maximum value corresponding to each layer, in this embodiment of this application, in addition to an index for a coefficient with a maximum value corresponding to layer1, an index for a coefficient with a maximum value corresponding to another layer, namely, layer2 further needs to be reported. In addition, except the coefficient with the maximum value corresponding to layer1, quantization results of the amplitudes and the phases need to be reported for all other coefficients.

In conclusion, as described in this embodiment, maximum values of linear superposition coefficients of layers are normalized based on the linear superposition coefficient with the maximum modulus value corresponding to layer1, so that an inter-layer joint PMI quantization feedback method can be implemented. This ensures that a network device learns of a power difference between a plurality of layers layers, thereby implementing power allocation and obtaining a system gain.

It should be understood that the three joint normalization implementation solutions provided in FIG. 4 to FIG. 6 are merely examples for description, and should not constitute any limitation on this application. In addition, the foregoing specific implementations are described by using two layers as an example. The solutions in this application are also applicable to joint quantization and transmission of more layers. This is not specifically limited in this application.

The following FIG. 7 to FIG. 9 are a layer-specific angle and delay information indication method provided for high-rank feedback quantization to resolve a problem that a terminal device currently cannot learn which angle and delay information in a plurality of layers layers is layer specific. First, a layer-specific angle and delay information indication principle is described. Layer-specific angle and delay information is indicated, so that the layer-specific angle and delay information can be sent, and complexity of layer searching and calculation by the terminal device can be reduced. A basic procedure of layer-specific angle and delay information indication is as follows:

Step 1: A network device groups angle-delay of a plurality of layers (for example, layer! and layer2) into a layer-common group and a layer-specific group.

For example, the layer-common group represents common angle and delay information of layer1 and layer2, and the layer-specific group represents angle and delay information specific to layer1 and layer2, and is for further distinguishing between angle and delay information of layer1 and angle and delay information of layer2.

Step 2: The network device sends explicit/implicit signaling to the terminal device, to further indicate a grouping status of angle-delay pairs for layer1 and layer2.

Step 3: The terminal device performs PMI calculation and reporting for different layers based on different angle-delay pairs and an explicit/implicit indication sent by the network device.

According to the foregoing procedure, the network device may send the layer-specific angle and delay information, to ensure PMI precision of each layer. The terminal device may learn of a correspondence between the angle and delay information and each layer, and process the information accordingly. This avoids searching and calculating all angle and delay information of each layer, thereby reducing complexity of calculating the angle and delay information of the layer by the terminal device, and reducing overheads.

FIG. 7 is a schematic flowchart of a communication method according to an embodiment of this application.

As shown in FIG. 7, specific steps 700 include the following steps.

S710. A network device sends first information to a terminal device. Correspondingly, the terminal device receives the first information from the network device.

The first information indicates first group configuration information and/or second group configuration information, the first group configuration information indicates a mapping relationship between P reference signal ports and Z layers, and the second group configuration information indicates a mapping relationship between N frequency domain base vectors and the Z layers, where P, N, and Z are all positive integers greater than or equal to 1.

In a possible implementation, each of the Z layers corresponds to one or more of the P reference signal ports.

For example, in this implementation, two layers may be used as an example. The first group configuration information may indicate a correspondence between 16 CSI-RS ports and the two layers. To be specific, a first layer corresponds to a port 1 to a port 8, and a second layer corresponds to a port 9 to a port 16; a first layer corresponds to a port 1 to a port 4, and a second layer corresponds to a port 9 and a port 10; or the like. According to this implementation, ports corresponding to the first layer and the second layer are completely different, and the two layers have respective dedicated port group configuration information. The terminal device may specifically calculate a precoding matrix indicator PMI based on dedicated ports corresponding to the first layer and the second layer, to improve system running efficiency and transmission performance.

Optionally, the first layer corresponds to the port 1 to the port 10, and the second layer corresponds to the port 5 to the port 16. According to this implementation, the first layer and the second layer have respective dedicated port group configuration information. For example, the port 1 to the port 4 correspond to only the first layer, and the port 11 to the port 16 correspond to only the second layer. In addition, the first layer and the second layer have common port group configuration information, for example, the port 5 to the port 10. The terminal device may specifically calculate the precoding matrix indicator PMI based on dedicated ports corresponding to the first layer and the second layer, to reduce terminal power consumption. In addition, channel state information of the two layers can be accurately obtained based on a common port corresponding to the first layer and the second layer, to improve system running efficiency and transmission performance. Optionally, both the first layer and the second layer correspond to the port 1 to the port 16. According to this implementation, the first layer and the second layer have only common port group configuration information. The terminal device may calculate the precoding matrix indicator PMI based on a common port corresponding to the first layer and the second layer without distinction, thereby improving system transmission performance.

For example, in this implementation, three layers may be used as an example. The first group configuration information further indicates a correspondence between 16 CSI-RS ports and the three layers. To be specific, a first layer corresponds to a port 1 to a port 5, a second layer corresponds to a port 6 to a port 12, and a third layer corresponds to a port 13 to a port 16; a first layer corresponds to a port 1 to a port 3, a second layer corresponds to a port 6 to a port 10, and a third layer corresponds to a port 12 to a port 15; or the like. According to this implementation, ports corresponding to the first layer, the second layer, and the third layer are completely different, and the three layers have respective dedicated port group configuration information. The terminal device may specifically calculate a precoding matrix indicator PMI based on dedicated ports corresponding to the first layer, the second layer, and the third layer, to improve system running efficiency and transmission performance.

Optionally, the first layer corresponds to the port 1 to the port 7, the second layer corresponds to the port 5, the port 6, the port 8 to the port 11, and the port 12, and the third layer corresponds to the port 6, the port 7, and the port 12 to the port 16. According to this implementation, the first layer, the second layer, and the third layer have respective dedicated port group configuration information. For example, the port 1 to the port 4 correspond to only the first layer, the port 8 to the port 11 correspond to only the second layer, and the port 13 to the port 16 correspond to only the third layer. In addition, the first layer, the second layer, and the third layer have common port group configuration information, for example, the port 6. The terminal device may specifically calculate the precoding matrix indicator PMI based on dedicated ports corresponding to the first layer, the second layer, and the third layer, to reduce terminal power consumption. In addition, channel state information of the three layers can be accurately obtained based on a common port corresponding to the first layer, the second layer, and the third layer, to improve system running efficiency and transmission performance.

Particularly, in this implementation, relative to the third layer, the port 5 may also be understood as port group configuration information dedicated to the first layer and the second layer; relative to the second layer, the port 7 may also be understood as port group configuration information dedicated to the first layer and the third layer; and relative to the first layer, the port 12 may also be understood as port group configuration information dedicated to the second layer and the third layer.

Optionally, the first layer, the second layer, and the third layer all correspond to the port 1 to the port 16. According to this implementation, the first layer, the second layer, and the third layer have only common port group configuration information. The terminal device may calculate the precoding matrix indicator PMI based on a common port corresponding to the first layer, the second layer, and the third layer without distinction, thereby improving system transmission performance.

It should be noted that, in the foregoing specific implementations, a quantity of transport layers and a quantity of ports corresponding to each layer are not limited.

As an example rather than a limitation, in the foregoing implementations, ports corresponding to at least two of the Z layers are not completely the same.

For example, in this implementation, three layers may be used as an example. A first layer corresponds to a port 1 to a port 7, a second layer corresponds to the port 1 to the port 6, a port 8 to a port 11, and a port 12, and a third layer corresponds to the port 6, the port 7, and the port 12 to a port 16. According to this implementation, ports corresponding to the three layers are not completely the same.

Optionally, the first layer corresponds to the port 1 to the port 10, and the second layer and the third layer both correspond to the port 6 to the port 16. According to this implementation, ports corresponding to the first layer and the second layer, ports corresponding to the first layer and the third layer, and the like are not completely the same.

Based on the foregoing implementation, the terminal device may specifically calculate the precoding matrix indicator PMI based on dedicated ports corresponding to the three layers, to reduce terminal power consumption. In addition, channel state information of the three layers can be accurately obtained based on a common port corresponding to the first layer, the second layer, and the third layer, to improve system running efficiency and transmission performance.

It should be noted that, in the foregoing specific implementations, a quantity of transport layers and a quantity of ports corresponding to each layer are not limited.

In another possible implementation, each of the Z layers corresponds to one or more of the R frequency domain base vectors.

It should be noted that a specific form of the frequency domain base vector may be:

$$W_f(i,n) = e^{\frac{j2\pi ni}{N_3}}, n = 0, 1, ..., N_3 - 1,$$

where

i is an integer greater than or equal to 0, and $N_3$ is an integer greater than 0.

For example, in this implementation, two layers may be used as an example. The second group configuration information may indicate a correspondence between three frequency domain base vectors and the two layers. To be specific, a first layer corresponds to a frequency domain base vector 1 and a frequency domain base vector 2, and a second layer corresponds to a frequency domain base vector 3; a first layer corresponds to a frequency domain base vector 1, and a second layer corresponds to a frequency domain base vector 3; or the like. According to this implementation, frequency domain base vectors corresponding to the first layer and the second layer are completely different, and the two layers have respective dedicated frequency domain base vector group configuration information. The terminal device may specifically calculate a precoding matrix indicator PMI based on dedicated frequency domain base vectors corresponding to the first layer and the second layer, to improve system running efficiency and transmission performance.

Optionally, the first layer corresponds to the frequency domain base vector 1 and the frequency domain base vector 2, and the second layer corresponds to the frequency domain base vector 2 and the frequency domain base vector 3. According to this implementation, the first layer and the second layer have respective dedicated frequency domain base vector group configuration information. For example, the frequency domain base vector 1 corresponds to only the first layer, and the frequency domain base vector 3 corresponds to only the second layer. In addition, the first layer and the second layer have common frequency domain base vector group configuration information, for example, the frequency domain base vector 2. The terminal device may specifically calculate the precoding matrix indicator PMI based on dedicated frequency domain base vectors corresponding to the first layer and the second layer, to reduce terminal power consumption. In addition, channel state information of the two layers can be accurately obtained based on a common frequency domain base vector corresponding to the first layer and the second layer, to improve system running efficiency and transmission performance.

Optionally, both the first layer and the second layer correspond to the frequency domain base vector 1 to the frequency domain base vector 3. According to this implementation, the first layer and the second layer have only common frequency domain base vector group configuration information. The terminal device may calculate the precoding matrix indicator PMI based on a common frequency domain base vector corresponding to the first layer and the second layer without distinction, thereby improving system transmission performance.

For example, in this implementation, three layers may be used as an example. The first group configuration information further indicates a correspondence between eight frequency domain base vectors and the three layers. To be specific, a first layer corresponds to a frequency domain base vector 1 to a frequency domain base vector 3, a second layer corresponds to a frequency domain base vector 4 to a frequency domain base vector 6, and a third layer corresponds to a frequency domain base vector 7 and a frequency domain base vector 8; a first layer corresponds to a frequency domain base vector 1 and a frequency domain base vector 2, a second layer corresponds to a frequency domain base vector 4 and a frequency domain base vector 5, and a third layer corresponds to a frequency domain base vector 7 and a frequency domain base vector 8; and the like. According to this implementation, frequency domain base vectors corresponding to the first layer, the second layer, and the third layer are completely different, and the three layers have respective dedicated frequency domain base vector group configuration information. The terminal device may specifically calculate a precoding matrix indicator PMI based on dedicated frequency domain base vectors corresponding to the first layer, the second layer, and the third layer, to improve system running efficiency and transmission performance.

Optionally, the first layer corresponds to the frequency domain base vector 1 to the frequency domain base vector 4, the second layer corresponds to the frequency domain base vector 2, the frequency domain base vector 3, the frequency domain base vector 5, and the frequency domain base vector 6, and the third layer corresponds to the frequency domain base vector 3 to the frequency domain base vector 5, the frequency domain base vector 7, and the frequency domain base vector 8. According to this implementation, the first layer, the second layer, and the third layer have respective dedicated frequency domain base vector group configuration information. For example, the frequency domain base vector 1 corresponds to only the first layer, the frequency domain base vector 6 corresponds to only the second layer, and the frequency domain base vector 7 and the frequency domain base vector 8 correspond to only the third layer. In addition, the first layer, the second layer, and the third layer have common port group configuration information, for example, the frequency domain base vector 3. The terminal device may specifically calculate the precoding matrix indicator PMI based on dedicated frequency domain base vectors corresponding to the first layer, the second layer, and the third layer, to reduce terminal power consumption. In addition, channel state information of the three layers can be accurately obtained based on a common frequency domain base vector corresponding to the first layer, the second layer, and the third layer, to improve system running efficiency and transmission performance.

Particularly, in this implementation, relative to the third layer, the frequency domain base vector 2 may also be understood as frequency domain base vector group configuration information dedicated to the first layer and the second layer; relative to the second layer, the frequency domain base vector 4 may also be understood as frequency domain base vector group configuration information dedicated to the first layer and the third layer; and relative to the first layer, the frequency domain base vector 5 may also be understood as frequency domain base vector group configuration information dedicated to the second layer and the third layer.

Optionally, the first layer, the second layer, and the third layer all correspond to the frequency domain base vector 1 to the frequency domain base vector 3. According to this implementation, the first layer, the second layer, and the third layer have only common frequency domain base vector group configuration information. The terminal device may calculate the precoding matrix indicator PMI based on a common frequency domain base vector corresponding to the first layer, the second layer, and the third layer without distinction, thereby improving system transmission performance.

It should be noted that, in the foregoing specific implementations, a quantity of transport layers and a quantity of frequency domain base vectors corresponding to each layer are not limited.

As an example rather than a limitation, in the foregoing implementations, frequency domain base vectors corresponding to at least two of the Z layers are not completely the same.

For example, in this implementation, three layers may be used as an example. A first layer corresponds to a frequency domain base vector 1 to a frequency domain base vector 4, a second layer corresponds to a frequency domain base vector 2, a frequency domain base vector 3, a frequency domain base vector 5, and a frequency domain base vector 6, and a third layer corresponds to the frequency domain base vector 3 to the frequency domain base vector 5, a frequency domain base vector 7, and a frequency domain base vector 8. According to this implementation, frequency domain base vectors corresponding to the three layers are not completely the same.

Optionally, the first layer corresponds to the frequency domain base vector 1 to the frequency domain base vector 6, and both the second layer and the third layer correspond to the frequency domain base vector 4 to the frequency domain base vector 8. According to this implementation, frequency domain base vectors corresponding to the first layer and the second layer, frequency domain base vectors corresponding to the first layer and the third layer, and the like are not completely the same.

Based on the foregoing implementation, the terminal device may specifically calculate the precoding matrix indicator PMI based on dedicated frequency domain base vectors corresponding to the three layers, to reduce terminal power consumption. In addition, channel state information of the three layers can be accurately obtained based on a common frequency domain base vector corresponding to the first layer, the second layer, and the third layer, to improve system running efficiency and transmission performance.

It should be noted that, in the foregoing specific implementations, a quantity of transport layers and a quantity of frequency domain base vectors corresponding to each layer are not limited. For example, the first group configuration information and/or the second group configuration information are/is carried in at least one of the following signaling: radio resource control RRC, a media access control control element MAC CE, or downlink control information DCI.

For example, the first group configuration information and/or the second group configuration information are/is predefined in a protocol.

In this embodiment of this application, a codebook structure of the PMI that is fed back meets:

$$W = W_1 \tilde{W}_2 \mathbf{W}_f^H \, ,$$

where

$W_1$ is a port selection matrix, $\tilde{W}_2$ is a superposition coefficient matrix, $\mathbf{W}_f$ is a frequency domain base vector matrix, $W_1$ is a port selection matrix specific to each of the Z layers, and $\mathbf{W}_f$ is a frequency domain base vector matrix specific to each of the Z layers.

$\mathbf{W}_f$ is a frequency domain base vector matrix, and a frequency domain base vector therein may be selected from a frequency domain vector set indicated by a base station. For example, the base station indicates/configures N frequency domain vectors to a user. For example, N=2, 4, or 8. UE selects Mv frequency domain vectors from the N frequency domain vectors indicated by the base station. For example, Mv=1, 2, or 4. Generally, N ≥ Mv. For example, when Mv = 1, N = Mv = 1; when Mv E [a, b] (a and b are positive integers), N ≥ Mv, for example, when Mv = 2, N ≥ Mv; when Mv E [c, d] (c and d are positive integers), N = Mv. In addition, there may be no $\mathbf{W}_f$, that is, the codebook structure is changed to $W = W_1 * \tilde{W}_2$. For example, when Mv = 1, there may be no $\mathbf{W}_f$, and the codebook structure changes to $W = W_1 * \tilde{W}_2$.

$W_1$ is a port selection matrix, and the UE may select $K_1$ CSI-RS ports from the P CSI-RS ports by using a combination quantity or a bitmap. For example, in $\mathbf{W}_f$, when Mv = 1, the UE selects the $K_1$ ports by using a bitmap; and when Mv > 1, the UE selects the $K_1$ ports by using a combination quantity.

$\tilde{W}_2$ is a superposition coefficient matrix, and the UE may indicate, by using a bitmap, a non-zero coefficient reported by the UE. For example, Mv = 1, to indicate that a bitmap for reporting a non-zero coefficient is missing. For example, it may be represented as that CSI information reported by the UE does not include bitmap overheads. When Mv > 1, the UE uses a bitmap to indicate a non-zero coefficient reported by the UE. The CSI information reported by the UE includes bitmap overheads.

For example, two layers are used as an example. It is assumed that CSI-RS ports corresponding to a first layer are ports 1 to 10, and CSI-RS ports corresponding to a second layer are ports 8 to 16. In this case, $W_1$ for the first layer is a port selection matrix corresponding to the ports 1 to 10, and $W_1$ for the second layer is a port selection matrix corresponding to the ports 8 to 16. That is, the port selection matrices $W_1$ corresponding to the first layer and the second layer are completely different, and the two layers have respective dedicated port group configuration information.

For example, three layers are used as an example. It is assumed that CSI-RS ports corresponding to a first layer are ports 1 to 8, CSI-RS ports corresponding to a second layer are ports 6 to 12, and CSI-RS ports corresponding to a third layer are ports 10 to 16. In this case, $W_1$ for the first layer is a port selection matrix corresponding to the ports 1 to 8, $W_1$ for the second layer is a port selection matrix corresponding to the ports 6 to 12, and $W_1$ for the third layer is a port selection matrix corresponding to the ports 10 to 16. That is, the port selection matrices $W_1$ corresponding to the first layer, the second layer, and the third layer are completely different, and the three layers have respective dedicated port group configuration information.

Similarly, for the Z layers, $W_1$ indicates that one or more reference signal ports correspond to only one of the Z layers, and is completely different from port selection matrices $W_1$ corresponding to the other Z-1 layers.

For example, two layers are used as an example. It is assumed that a frequency domain base vector matrix for a first layer corresponds to frequency domain base vectors 1 and 2, and a frequency domain base vector matrix for a second layer corresponds to frequency domain base vectors 1 and 3. In this case, $\mathbf{W}_f$ for the first layer is a frequency domain base vector matrix corresponding to the frequency domain base vectors 1 and 2, and $\mathbf{W}_f$ for the second layer is a frequency domain base vector matrix corresponding to the frequency domain base vectors 1 and 3. That is, frequency domain base vector matrices $\mathbf{W}_f$ corresponding to the first layer and the second layer are completely different, and the two layers have respective dedicated frequency domain base vector group configuration information.

For example, three layers are used as an example. It is assumed that a frequency domain base vector matrix for a first layer corresponds to frequency domain base vectors 1 to 3, a frequency domain base vector matrix for a second layer corresponds to frequency domain base vectors 2 to 4, and a frequency domain base vector matrix for a third layer corresponds to frequency domain base vectors 5 and 6. In this case, $\mathbf{W}_f$ for the first layer is a frequency domain base vector matrix corresponding to the frequency domain base vectors 1 to 3, $\mathbf{W}_f$ for the second layer is a frequency domain base vector matrix corresponding to the frequency domain base vectors 2 to 4, and $\mathbf{W}_f$ for the third layer is a frequency domain base vector matrix corresponding to the frequency domain base vectors 5 and 6. That is, the frequency domain base vector matrices $\mathbf{W}_f$ corresponding to the first layer, the second layer, and the third layer are completely different, and the three layers have respective dedicated frequency domain base vector group configuration information.

Similarly, for the Z layers, $\mathbf{W}_f$ indicates that one or more frequency domain base vectors correspond to only one of the Z layers, and is completely different from frequency domain base vector matrices $\mathbf{W}_f$ corresponding to the other Z-1 layers.

It should be noted that the first group configuration information and/or the second group configuration information are/is determined based on K angle-delay pairs of uplink channel information, and K is a positive integer greater than or equal to 1.

Specifically, each of the K angle-delay pairs includes one angle vector and one delay vector. The P reference signal ports correspond to the K angle-delay pairs, and a reference signal of each of the P reference signal ports is obtained by precoding the reference signal based on one angle vector and one delay vector. The N frequency domain base vectors correspond to the K angle-delay pairs, and a reference signal of each of the N frequency domain base vectors is obtained by precoding the reference signal based on one angle vector and one delay vector.

S720. The terminal device sends a precoding matrix indicator PMI corresponding to the Z layers to the network device. Correspondingly, the network device receives the precoding matrix indicator PMI corresponding to the Z layers from the terminal device.

The precoding matrix indicator PMI is determined based on the first information.

In this embodiment of this application, a manner of carrying the indication information, the configuration information, and the like may be but is not limited to one or a combination of at least two of radio resource control signaling, media access control MAC layer signaling, and physical PHY layer signaling. The radio resource control signaling includes radio resource control RRC signaling. The MAC layer signaling includes a MAC control element CE. The physical layer signaling includes downlink control information DCI and the like.

For example, the network device delivers a first message list and/or a second message list to the terminal device. The first message list and/or the second message list may be delivered by using UE-specific signaling, for example, configured by using RRC signaling and activated by using MAC-CE signaling, and the first message list is indicated to the terminal device by delivering DCI. A specific implementation is not limited in this application.

## Embodiment 3

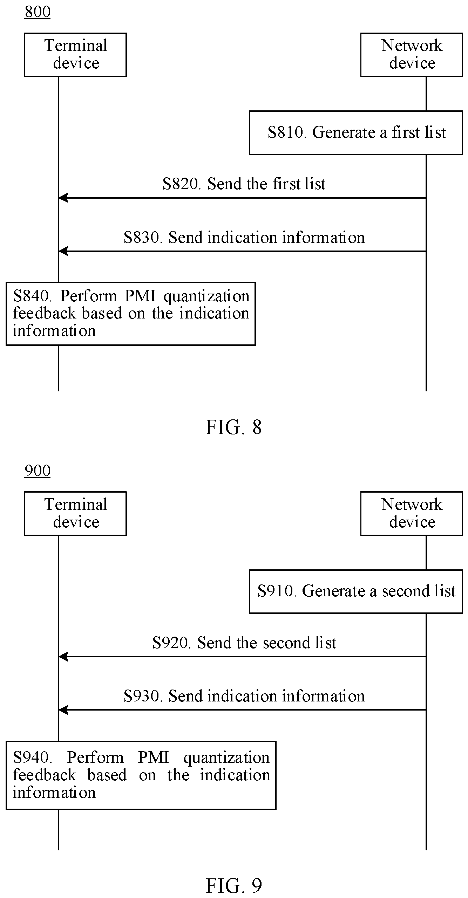

FIG. 8 is a schematic flowchart of a channel measurement method according to an embodiment of this application. A layer-specific angle and delay information indication method 800 based on CSI-RS port grouping is proposed. The following specific steps are included.

S810. A network device generates a first list (an example of first group configuration information). The first list includes at least one piece of group configuration information, and each piece of group configuration information indicates a mapping relationship between a channel state information-reference signal CSI-RS antenna port port and a plurality of data layers.

It should be understood that the first list is determined by the network device based on an uplink channel.

It should be noted that the first list may alternatively be defined in a protocol, to be specific, a correspondence table between a CSI-RS port grouping rule and a layer is added through protocol specification.

In a possible implementation, the network device may configure group configuration information listed in Table 1 and Table 2, that is, configure group information of a plurality of corresponding layers based on port information. Table 1 shows a mapping relationship between a port port and a plurality of layers layers by using a single-polarized 16-port antenna as an example. It should be noted that in a multi-polarized 32-port antenna, a relationship between ports 17 to 32 and a layer layer may be the same as a relationship between ports 1 to 16 and a layer layer. As listed in Table 1: A configuration 1 indicates that ports 1 to 12 correspond to layer1, ports 5 to 16 correspond to layer2, and the ports 5 to 12 correspond to both layer1 and layer2. Correspondingly, in the multi-polarized 32-port antenna, the configuration 1 further indicates that ports 17 to 28 correspond to layer1, ports 21 to 32 correspond to layer2, and the ports 21 to 28 correspond to both layer1 and layer2. A configuration 2 indicates that ports 1 to 16 correspond to both layer1 and layer2. Correspondingly, in the multi-polarized 32-port antenna, the configuration 2 further indicates that ports 17 to 32 correspond to both layer1 and layer2. A configuration 3 indicates that ports 1 to 8 correspond to layer1, and ports 9 to 16 correspond to layer2. Correspondingly, in the multi-polarized 32-port antenna, the configuration 3 further indicates that ports 17 to 24 correspond to layer1 and ports 25 to 32 correspond to layer2. The rest is similar. Optionally, the port may correspond to a port set (or referred to as a port group). For example, for the configuration 1, ports 1 to 4 may correspond to one port set, ports 5 to 12 correspond to another port set, and ports 13 to 16 correspond to still another port set. A correspondence between a layer and a port may also be considered as a correspondence between a layer and a port set.

**Table 1**

| Configuration | Port port | Layer layer |
|---|---|---|
| 1 | 1-4 | [1] |
| | 5-12 | [1, 2] |
| | 13-16 | [2] |

(continued)

| Configuration | Port port | Layer layer |
|---|---|---|
| 2 | 1-16 | [1, 2] |
| 3 | 1-8 | [1] |
| | 9-16 | [2] |
| ... | ... | ... |

It should be understood that the ports 1 to 16 and the ports 17 to 32 are in a correspondence, and correspond to a same layer. It may be understood as that the ports 1 to 16 corresponding to layer1 correspond to a 45-degree direction of the antenna, and the ports 17 to 32 corresponding to layer1 correspond to a negative 45-degree direction of the antenna.

Optionally, the ports 1 to 32 may be directly configured to correspond to different layers, and a correspondence between the ports 1 to 16 and a layer layer may be inconsistent with a correspondence between the ports 17 to 32 and a layer layer. As listed in Table 2: A configuration 1 indicates that ports 1 to 12 and ports 21 to 32 correspond to layer1, and ports 5 to 28 correspond to layer2, where the ports 5 to 12 and 21 to 28 correspond to both layer1 and layer2. A configuration 2 indicates that ports 1 to 32 correspond to layer2, and the ports 1 to 16 correspond to layer1, where the ports 1 to 16 correspond to both layer1 and layer2. A configuration 3 indicates that ports 1 to 8 and 25 to 32 correspond to layer1, and ports 9 to 32 correspond to layer2, where the ports 25 to 32 correspond to both layer1 and layer2.

**Table 2**

| Configuration | Port port | Layer layer |
|---|---|---|
| 1 | 1-4 | [1] |
| | 5-12 | [1, 2] |
| | 13-16 | [2] |
| | 17-20 | [2] |
| | 21-28 | [1, 2] |
| | 29-32 | [1] |
| 2 | 1-16 | [1, 2] |
| | 13-32 | [2] |
| 3 | 1-8 | [1] |
| | 9-16 | [2] |
| | 17-24 | [2] |
| | 25-32 | [1, 2] |
| ... | ... | ... |

Optionally, the network device may determine, based on information about the uplink channel, some of the ports (for example, only the ports 1 to 12 in the configuration 1) for quantization feedback of the data layers layer1 and layer2.

In another possible implementation, a mapping relationship between Z layers and P ports may be configured by using signaling, where both Z and P are positive integers greater than or equal to 1. That is, each layer can be configured with one or more different ports. For example, the specific configuration is as follows:

layer1 port x1, port x2, ..., and port xn;
layer2 port y1, port y2, ..., and port yn;
...; and
layerZ port z1, port z2, ..., and port zn.

For example, the network device may configure group configuration information listed in Table 3 and Table 4, that is, configure group information of corresponding ports based on a plurality of layers. Table 3 shows a mapping relationship between a plurality of layers layers and a port port by using a single-polarized 16-port antenna as an example. It should be noted that in a multi-polarized 32-port antenna, a relationship between a layer layer and ports 17 to 32 may be the same as a relationship between a layer layer and ports 1 to 16. As listed in Table 3: A configuration 1 indicates that layer1 corresponds to configuration information of ports 1 to 12, and layer2 corresponds to configuration information of ports 5 to 16, where group configuration information common to layer1 and layer2 corresponds to the ports 5 to 12. Correspondingly, in the multi-polarized 32-port antenna, the configuration 1 further indicates that layer1 corresponds to configuration information of ports 17 to 28, and layer2 corresponds to configuration information of ports 21 to 32, where group configuration information common to layer1 and layer2 corresponds to the ports 21 to 28. A configuration 2 indicates that both layer1 and layer2 correspond to group configuration information of ports 1 to 16. Correspondingly, in the multi-polarized 32-port antenna, the configuration 2 further indicates that both layer1 and layer2 correspond to configuration information of ports 17 to 32. A configuration 3 indicates that layer1 corresponds to configuration information of ports 1 to 8, and layer2 corresponds to configuration information of ports 9 to 16. Correspondingly, in the multi-polarized 32-port antenna, the configuration 3 further indicates that layer1 corresponds to configuration information of ports 17 to 24, and layer2 corresponds to configuration information of ports 25 to 32. The rest is similar.

**Table 3**

| Configuration | Layer layer | Port port |
|---|---|---|
| 1 | [1] | 1-12 |
| | [2] | 5-16 |
| 2 | [1, 2] | 1-16 |
| 3 | [1] | 1-8 |
| | [2] | 9-16 |
| ... | ... | ... |

It should be understood that, in Table 3, a port port group 1 and a port port group 2 are in a correspondence, and correspond to a same layer, that is, two polarization directions are consistent. It may be understood as that the port port group 1 corresponding to layer1 corresponds to a 45-degree direction of the antenna, and the port port group 2 corresponding to layer1 corresponds to a negative 45-degree direction of the antenna.

Optionally, different layers may be directly configured to correspond to the ports 1 to 32, and a correspondence between a layer layer and the ports 1 to 16 may be inconsistent with a correspondence between a layer layer and the ports 17 to 32. As listed in Table 4, a configuration 1 indicates that layer1 corresponds to ports 1 to 12 and ports 20 to 28, and layer2 corresponds to ports 5 to 14 and ports 18 to 32, where layer1 and layer2 correspond to the ports 5 to 12 and the ports 20 to 28. A configuration 2 indicates that both layer1 and layer2 correspond to ports 1 to 32. A configuration 3 indicates that layer1 corresponds to ports 1 to 18, and layer2 corresponds to ports 9 to 32, where both layer1 and layer2 correspond to the ports 9 to 18.

**Table 4**

| Configuration | Layer layer | Port port |
|---|---|---|
| 1 | [1] | 1-12, 20-28 |
| | [2] | 5-14, 18-32 |
| 2 | [1, 2] | 1-32 |
| 3 | [1] | 1-18 |
| | [2] | 9-32 |
| ... | ... | ... |

It should be noted that Table 1 to Table 4 may be notified to the terminal device by using one or a combination of at least two of radio resource control signaling, media access control MAC layer signaling, and physical PHY layer signaling.

It should be understood that Table 1 to Table 4 are merely examples for description, and should not constitute any limitation on this application. In addition, a quantity of pieces of group configuration information in Table 1 to Table 4 is not specifically limited in this application. S820. The network device sends the first list to the terminal device. Correspondingly, the terminal device receives the first list from the network device.

It should be noted that when the first list is defined in a protocol, the network device and the terminal device knows the first list in advance, and the foregoing steps S810 and S820 may be omitted.

S830. The network device sends indication information (an example of first information) to the terminal device. Correspondingly, the terminal device receives the indication information from the network device.

The indication information indicates one of the at least one piece of group configuration information in the first list.

For example, the network device selects a configuration 1 (configure1) to determine a mapping relationship between a port port group and layer1 and/or layer2. The configuration 1 may be the configuration 1 in any one of Table 1 to Table 4, or may be the configuration 1 in any combination of Table 1 to Table 4. This is not limited in this application.

It should be understood that the network device determines the group configuration information based on the uplink channel. To be specific, the network device selects a configuration of a port port group and a layer group based on the uplink channel, and sends configuration indication information to the terminal device.

It should be noted that a method for sending the indication information is not specifically limited in this application. A sending periodicity and/or a sending occasion of the information may be predefined, for example, predefined according to a protocol, or may be configured by the network device by sending configuration information to the terminal device.

The configuration information may be but is not limited to one or a combination of at least two of radio resource control signaling, media access control MAC layer signaling, and physical PHY layer signaling. The radio resource control signaling includes radio resource control RRC signaling. The MAC layer signaling includes a MAC control element (control element, CE). The physical layer signaling includes downlink control information (downlink control information, DCI) and the like.

S840. The terminal device performs PMI quantization feedback based on the indication information.

In this case, the terminal device needs to perform PMI calculation and reporting on layer1 and layer2 according to a rule in the configuration 1 corresponding to the received indication information.

For example, it is assumed that two polarization directions are consistent. A single-polarized 16-port is used as an example. When the network device determines to select a configuration 1 to represent a correspondence between a port port group and a layer group in terms of an angle and a delay, the terminal device only needs to search for and calculate a PMI of layer1 on the ports 1 to 12. Similarly, the terminal device only needs to search for and calculate a PMI of layer2 on the ports 5 to 16.

It should be understood that, in this way, the network device processes information about an angle-delay pair of layer1 and layer2 in a targeted manner, and the terminal device calculates and reports the PMIs of layer1 and layer2 in a targeted manner. This prevents the terminal device from searching for and calculating layer1 and layer2 on all ports, thereby reducing overheads. In addition, this helps the network device obtain accurate channel state information.

It should be noted that a method for calculating and reporting a PMI by the terminal device based on the first list may still use a current technical means, or may use the PMI quantization feedback methods provided in Embodiment 1 and Embodiment 2. This is not specifically limited in this application.

For example, as shown in the following:

layer! :

$$W = W_1 \tilde{W}_2 \mathbf{W}_f^H ,$$

where

$W_1 \in \square^{P1 \times K1}, P_1 \in [1,12]$; and

layer2:

$$W = W_1 \tilde{W}_2 \mathbf{W}_f^H ,$$

where

$W_1 \in \square^{P2 \times K2}, P_2 \in [5,16]$.

For example, it is assumed that there are three currently most appropriate transport layers, which are respectively layer1, layer2, and layer3. The network device sends the first group configuration information, to indicate a correspondence between the 16 CSI-RS ports and the three layers. Specifically, a correspondence between a CSI-RS port and a layer is configured as follows: Layer1 corresponds to the ports 1 to 5, layer 2 corresponds to the ports 4 to 8, and layer3 corresponds to the ports 7 to 16. In this case, a codebook structure using which the terminal device performs PMI calculation based on the group configuration information is as follows:

layer! :

$$W = W_1 \tilde{W}_2 \mathbf{W}_f^H \,,$$

where

$W_1 \in \square^{P1 \times K1}, P_1 \in [1,5]$

layer2:

$$W = W_1 \tilde{W}_2 \mathbf{W}_f^H \,,$$

where

$W_1 \in \square^{P2 \times K2}, P_2 \in [4,8];$ and

layer3 :

$$W = W_1 \tilde{W}_2 \mathbf{W}_f^H \,,$$

where

$W_1 \in \square^{P1 \times K1}, P_3 \in [7,16]$ .

In conclusion, the mapping relationship between the CSI-RS port and the layer is added according to a protocol, and signaling used by the network device to notify the terminal device of the mapping relationship may be added as one or more of RRC, a MAC CE, and DCI. In addition, in this embodiment of this application, the fixed codebook structure $W = W_1 \tilde{W}_2 \mathbf{W}_f^H$ is required for the PMI that is fed back. $W_1 \in \square^{PCSI-RS \times 2L0}$ is a corresponding port selection matrix fed back by the terminal device, $\tilde{W}_2 \in \square^{2L0 \times 1}$ is a superposition coefficient matrix corresponding to a CSI-RS port selected by the terminal device, and $\mathbf{W}_f \in \square^{Nf \times 1}$ is a frequency domain base vector matrix. Specific meanings have been described above. For brevity, details are not described herein again. It should be noted that, in this embodiment of this application, a dimension and an element value of $W_1$ are unique, that is, layer specific.

In conclusion, this embodiment describes the layer-specific angle and delay information indication implemented based on CSI-RS port grouping, so that processing complexity of the terminal device is reduced while precision of each layer is ensured.

## Embodiment 4

FIG. 9 is a schematic flowchart of a channel measurement method according to an embodiment of this application. A layer-specific angle and delay information indication method 900 based on different components in $W_f$ is proposed. A difference from Embodiment 3 lies in: In Embodiment 3, the layer-specific angle and delay information is indicated based on a mapping relationship between a CSI-RS port group and a layer. In Embodiment 4, layer-specific angle and delay information is indicated based on a mapping relationship between different components of a frequency domain base vector matrix and a layer. That is, when a quantity of frequency domain components in $W_f$ is greater than 1, the implementation provided in Embodiment 4 may be used; when the quantity of frequency domain components in $W_f$ is equal to 1, the implementation provided in Embodiment 3 may be used. The following specific steps are included.

S910. A network device generates a second list (an example of second group configuration information).

The secondlist includes at least one piece of group configuration information, and each piece of group configuration information indicates a mapping relationship between components in a frequency domain base matrix $\mathbf{W}_f$ and a plurality of data layers.

It should be understood that the second list is determined by the network device based on an uplink channel.

It should be noted that the second list may alternatively be defined in a protocol, to be specific, a correspondence table between each component in $\mathbf{W}_f$ and a layer is added through protocol specification. In this case, the network device and a terminal device knows the second list in advance, and the foregoing step S810 may be omitted.

In a possible implementation, the network device may configure group configuration information listed in Table 5, that is, configure group information of a plurality of corresponding layers based on a frequency domain base vector. Table 5 shows a mapping relationship between the components in the frequency domain base vector matrix $\mathbf{W}_f$ and a plurality of layers layers. As listed in Table 5, the frequency domain base vector matrix $\mathbf{W}_f$ is divided into three components. A configuration 1 indicates that components, namely, the 1st vector and the 2nd vector, in the frequency domain base vector matrix correspond to layer1, and components, namely, the 1st vector and the 3rd vector, in the frequency domain base vector matrix correspond to layer2, where the components, namely, the 1st vector, in the frequency domain base vector matrix corresponds to both layer1 and layer2. A configuration 2 indicates that components, namely, the 1st vector, the 2nd vector, and the 3rd vector, in the frequency domain base vector matrix all correspond to layer1 and layer2. A configuration 3 indicates that components, namely, the 1st vector and the 2nd vector, in the frequency domain base vector matrix correspond to only layer1, and a component, namely, the 3rd vector, in the frequency domain base vector matrix corresponds to only layer2.

**Table 5**

| Configuration | Component in $W_f$ | Layer layer |
|---|---|---|
| 1 | 1st vector | [1, 2] |
| | 2nd vector | [1] |
| | 3rd vector | [2] |
| 2 | 1st, 2nd, and 3rd vectors | [1, 2] |
| 3 | 1st and 2nd vectors | [1] |
| | 3rd vector | [2] |
| ... | ... | ... |

It should be noted that Table 5 may be notified to the terminal device by using one or a combination of at least two of radio resource control signaling, media access control MAC layer signaling, and physical PHY layer signaling.

Optionally, the network device may determine, based on information about the uplink channel, some of the ports (for example, only the 1st vector and the 2nd vector in the configuration 1) for quantization feedback of the data layers layer1 and layer2.

In another possible implementation, a mapping relationship between Z layers and N frequency domain base vectors may be configured by using signaling, where both Z and N are positive integers greater than or equal to 1. That is, each layer can be configured with one or more different frequency domain base vectors. For example, the specific configuration is as follows:

layer1 frequency x1, frequency x2, ..., and frequency xn;
layer2 frequency y1, frequency y2, ..., and frequency yn;
...; and
layerZ frequency z1, frequency z2, ..., and frequency zn.

For example, the network device may configure group configuration information listed in Table 6, that is, configure group information of corresponding frequency domain base vectors based on a plurality of layers. As shown in Table 6: A configuration 1 indicates that layer1 corresponds to components, namely, the 1st vector and the 2nd vector in the frequency domain base vector matrix, and layer2 corresponds to components, namely, the 2nd vector and the 3rd vector in the frequency domain base vector matrix. A configuration 2 indicates that both layer1 and layer2 correspond to components, namely, the 1st vector, the 2nd vector, and the 3rd vector in the frequency domain base vector matrix. A configuration 3 indicates that layer1 corresponds to components, namely, the 1st vector and the 2nd vector in the frequency domain base vector matrix, and layer2 corresponds to a component, namely, the 3rd vector in the frequency domain base vector matrix.

**Table 6**

| Configuration | Layer layer | Component in $W_\varepsilon$ |
|---|---|---|
| 1 | [1] | 1st vector and 2nd vector |
| | [2] | 2nd vector and 3rd vector |
| 2 | [1, 2] | 1st, 2nd, and 3rd vectors |
| 3 | [1] | 1st and 2nd vectors |
| | [2] | 3rd vector |
| ... | ... | ... |

It should be understood that Table 5 and Table 6 are merely examples for description, and should not constitute any limitation on this application. In addition, a quantity of pieces of group configuration information in Table 5 and Table 6 is not specifically limited in this application. S920. The network device sends the second list to the terminal device. Correspondingly, the terminal device receives the second list from the network device.

It should be noted that when the second list is defined in a protocol, the network device and the terminal device knows the second list in advance, and the foregoing steps S910 and S920 may be omitted.

S930. The network device sends indication information (an example of first information) to the terminal device. Correspondingly, the terminal device receives the indication information from the network device.

The indication information indicates one of the at least one piece of group configuration information in the second list.

For example, the network device selects a configuration 1 (configure1) to determine a mapping relationship between a group in the frequency domain base vector matrix $\mathbf{W}_f$ and layer1 and/or layer2. The configuration 1 may be the configuration 1 in any one of Table 5 and Table 6, or may be the configuration 1 in any combination of Table 1 and Table 6. This is not limited in this application.

It should be understood that the network device determines the group configuration information based on the uplink channel. To be specific, the network device selects a configuration of a group in the frequency domain base vector matrix $\mathbf{W}_f$ and a layer group based on the uplink channel, and sends configuration indication information to the terminal device.

It should be noted that a method for sending the indication information is not specifically limited in this application. A sending periodicity and/or a sending occasion of the information may be predefined, for example, predefined according to a protocol, or may be configured by the network device by sending configuration information to the terminal device.

The configuration information may be but is not limited to one or a combination of at least two of radio resource control signaling, media access control MAC layer signaling, and physical PHY layer signaling. The radio resource control signaling includes radio resource control RRC signaling. The MAC layer signaling includes a MAC control element (control element, CE). The physical layer signaling includes downlink control information (downlink control information, DCI) and the like.

S940. The terminal device performs PMI quantization feedback based on the indication information.

In this case, the terminal device needs to perform PMI calculation and reporting on layer1 and layer2 according to a rule in the configuration 1 corresponding to the received indication information.

For example, when the network device determines to select the configuration 1 in Table 6 to represent a correspondence between a group in the frequency domain base vector matrix $\mathbf{W}_f$ and a layer group in terms of an angle and a delay, the terminal device only needs to search for and calculate a PMI of layer1 in a frequency domain base vector matrix including the 1st vector and the 2nd vector. Similarly, the terminal device only needs to search for and calculate a PMI of layer2 in a frequency domain base vector matrix including the 2nd vector and the 3rd vector.

It should be understood that, in this way, the network device processes information about an angle-delay pair in a targeted manner, and the terminal device calculates and reports the PMIs of layer1 and layer2 in a targeted manner. This prevents the terminal device from searching for and calculating layer1 and layer2 in all frequency domain base vector matrices, thereby reducing overheads. In addition, this helps the network device obtain accurate channel state information. It should be noted that a method for calculating and reporting a PMI by the terminal device based on the first list may still use a current technical means, or may use the PMI quantization feedback methods provided in Embodiment 1 and Embodiment 2. This is not specifically limited in this application.

For example, as shown in the following:

layer! :

$$W = W_1 \tilde{W}_2 \mathbf{W}_f^H ,$$

where

$W_f \in \square^{N3 \times Mv1}$, $M_{V1} \in [1, 2]$ ; and

layer2:

$$W = W_1 \tilde{W}_2 \mathbf{W}_f^H ,$$

where

$\mathbf{W}_f \in \square^{N3 \times Mv2}$, $M_{V2} \in [1,3]$.

For example, it is assumed that there are three currently most appropriate transport layers, which are respectively layer1, layer2, and layer3. The network device sends the second group configuration information, to indicate a correspondence between five frequency domain base vectors and the three layers. Specifically, a correspondence between a frequency domain base vector and a layer is configured as follows: Layer1 corresponds to frequency domain base vectors 1 to 3, layer corresponds to frequency domain base vectors 2 to 4, and layer3 corresponds to frequency domain base vectors 3 to 5. In this case, a codebook structure using which the terminal device performs PMI calculation based on the group configuration information is as follows:

layer! :

$$W = W_1 \tilde{W}_2 \mathbf{W}_f^H ,$$

where

$\mathbf{W}_f \in \square^{N3 \times Mv1}$, $M_{V1} \in [1,2,3]$;

layer2:

$$W = W_1 \tilde{W}_2 \mathbf{W}_f^H ,$$

where

$\mathbf{W}_f \in \square^{N3 \times Mv2}$, $M_{V2} \in [2,3,4]$; and

layer3 :

$$W = W_1 \tilde{W}_2 \mathbf{W}_f^H ,$$

where

$\mathbf{W}_f \in \square^{N3 \times Mv1}$, $M_{V3} \in [3,4,5]$.

In conclusion, the mapping relationship between the CSI-RS port and the layer is added according to a protocol, and signaling used by the network device to notify the terminal device of the mapping relationship may be added as one or more of RRC, a MAC CE, and DCI. In addition, in this embodiment of this application, the fixed codebook structure

$$W = W_1 \tilde{W}_2 \mathbf{W}_f^H$$ is required for the PMI that is fed back. $W_1 \in \Box^{PCSI\text{-}RS \times 2L0}$ is a corresponding port selection matrix fed back by the terminal device, $\tilde{W}_2 \in \Box^{2L0 \times 1}$ is a superposition coefficient matrix corresponding to a CSI-RS port selected by the terminal device, and $\mathbf{W}_f \in \Box^{Nf \times 1}$ is a frequency domain base vector matrix. Specific meanings have been described above. For brevity, details are not described herein again. It should be noted that, in this embodiment of this application, a dimension and an element value of $W_1$ are unique, that is, layer specific.

In conclusion, this embodiment, describes layer-specific angle and delay information indication implemented based on different components in $W_f$, so that processing complexity of the terminal device is reduced while precision of each layer is ensured.

It should be understood that the layer-specific angle and the delay information indication method provided in Embodiment 3 and Embodiment 4 may be applied separately, or may be applied in combination. In other words, a mapping relationship between a layer and a group of different components in the frequency domain base vector matrix and/or a group of CSI-RS ports may be randomly combined.

For example, if the network device selects the configuration 1 (configure1) in Table 1 and Table 2, the angle and the delay information of layer1 may be searched for and calculated in the frequency domain base vector matrix including the 1st vector and the 2nd vector, and/or the angle and the delay information of layer1 may be searched for and calculated in the ports 1 to 12. Similarly, the angle and the delay information of layer2 may be searched for and calculated in the ports 5 to 16, and/or the angle and the delay information of layer2 may be searched for and calculated in the frequency domain base vector matrix including the 1st vector and the 3rd vector.

Optionally, the network device may indicate, by using the first group configuration information, that layer1 corresponds to the CSI-RS ports 1 to 4 and the CSI-RS ports 5 to 12, and that layer2 corresponds to the CSI-RS ports 5 to 12 and the CSI-RS ports 13 to 16, and indicate, by using the second group configuration information, that layer1 corresponds to the frequency domain base vector 1 and the frequency domain base vector 2, and that layer2 corresponds to the frequency domain base vector 1 and the frequency domain base vector 3. In this case, the ports 1 to 4 and the frequency domain base vector 2 are dedicated group configuration information of layer1, the ports 13 to 26 and the frequency domain base vector 3 are dedicated group configuration information of layer2, and the ports 5 to 12 and the frequency domain base vector 1 are common group configuration information of layer1 and layer2. For layer1, the terminal device may perform PMI calculation by using only the ports 1 to 4 and 5 to 12, may perform PMI calculation by using the frequency domain base vector 1 and the frequency domain base vector 2, may perform PMI calculation by using the ports 1 to 4 and the frequency domain base vector 1, or may perform PMI calculation by using the ports 5 to 12 and the frequency domain base vector 2. Similarly, for layer2, the terminal device may perform PMI calculation by using only the ports 13 to 16 and 5 to 12, may perform PMI calculation by using the frequency domain base vector 1 and the frequency domain base vector 3, may perform PMI calculation by using the ports 13 to 16 and the frequency domain base vector 1, or may perform PMI calculation by using the ports 5 to 12 and the frequency domain base vector 3.

Therefore, a combined codebook structure using which the terminal device performs PMI calculation based on the group configuration information may be as follows:

layer! :

$$W = W_1 \tilde{W}_2 \mathbf{W}_f^H ,$$

where

$\mathbf{W}_f \in \Box^{N3 \times Mv1}, M_{v1} \in [1]$, and $W_1 \in \Box^{P1 \times K1}, P_1 \in [1,4]$; or

$$W = W_1 \tilde{W}_2 \mathbf{W}_f^H ,$$

where

$\mathbf{W}_f \in \Box^{N3 \times Mv1}, M_{v1} \in [2]$, and $W_1$ e $\Box^{P1 \times K1}, P_1 \in [5,12]$;

layer2:

$$W = W_1 \tilde{W}_2 \mathbf{W}_f^H ,$$

where

$W_1 \in \square^{P2 \times K2}$, $P_2 \in [13,16]$, and $\mathbf{W}_f \in \square^{N3 \times Mv2}$, $M_{v2} \in [1]$; or

$$W = W_1 \tilde{W}_2 \mathbf{W}_f^H,$$

where

$W_1 \in \square^{P2 \times K2}$, $P_2 \in [5,12]$, and $\mathbf{W}_f \mathbf{e} \square^{N3 \times Mv2}$, $M_{v2} \in [3]$.

In addition, in $W = W_1 \tilde{W}_2 \mathbf{W}_f^H$, $W_1$ and $W_f$ may be combined by using a current technical means or the technical means provided in this application, and are used for PMI quantization and reporting. The foregoing solutions may be used in any combination, or there may be more possible implementations. This is not specifically limited in this application.

It should be understood that the implementation solutions that are provided in FIG. 7 to FIG. 9 and that are based on the correspondence between the reference signal port and/or the frequency domain base vector matrix and the plurality of layers are merely examples for description, and should not constitute any limitation on this application. In addition, the foregoing specific implementations are described by using two layers layers as an example. The solutions in this application are also applicable to group configuration indication of more layers. This is not specifically limited in this application.

It should be understood that embodiments of this application are not only applicable to an FDD system, but also applicable to a TDD system in a case in which complete reciprocity is not true.

It should be noted that the precoding matrix determined by using the channel measurement method provided in the foregoing embodiments of this application may be a precoding matrix directly for downlink data transmission, or may be a final precoding matrix for downlink data transmission that is obtained by using some beamforming methods, such as zero forcing (zero forcing, ZF), a minimum mean squared error (minimum mean-squared error, MMSE), and a maximum signal-to-leakage-plus-noise ratio (signal-to-leakage-and-noise, SLNR). This is not limited in this application. In embodiments of this application, the precoding matrix involved below may be a precoding matrix determined based on the channel measurement method provided in this application.

It should be understood that, foregoing embodiments may be independent solutions, or may be combined based on internal logic. These solutions fall within the protection scope of this application. The terminal device and/or the network device may perform some or all of the steps in embodiments. These steps or operations are merely examples. In this application, other operations or variants of various operations may be further performed. In addition, the steps may be performed in different sequences presented in embodiments, and not all operations in embodiments of this application may need to be performed. In addition, the sequence numbers of the steps do not mean an order of execution, and the order of execution of each process should be determined according to functions and internal logic thereof, and should not constitute any limitation on the implementation processes of embodiments of this application.

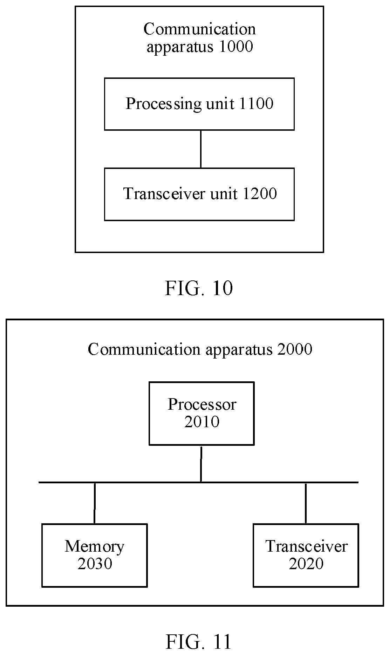

With reference to FIG. 3 to FIG. 9, the foregoing describes in detail embodiments of the communication method side provided in embodiments of this application. With reference to FIG. 10 to FIG. 13, the following describes in detail embodiments of apparatus in this application. It should be understood that the description of the method embodiments corresponds to the description of the apparatus embodiments. Therefore, for a part that is not described in detail, refer to the foregoing method embodiments.

The foregoing mainly describes the solutions provided in embodiments of this application from a perspective of interaction between network elements. It may be understood that, to implement the foregoing functions, each network element such as a transmitter device or a receiver device includes a corresponding hardware structure and/or software module for performing each function. A person skilled in the art may be aware that, in combination with the examples described in embodiments disclosed in this specification, units and algorithm steps can be implemented by hardware or a combination of computer software and hardware in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, functional modules of a transmitter device or a receiver device may be obtained through division based on the foregoing method examples. For example, each functional module may be obtained through division based on each function, or two or more functions may be integrated into one processing module. The integrated module may be implemented in a form of hardware, or may be implemented in a form of a software functional module. It should be noted that, in embodiments of this application, module division is an example, and is merely a logical function division. During actual implementation, another division manner may be used. The following provides descriptions by using an example in which each functional module is obtained through division based on each corresponding function.

FIG. 10 is a schematic block diagram of a communication apparatus according to an embodiment of this application. As shown in FIG. 10, the communication apparatus 1000 may include a processing unit 1100 and a transceiver unit 1200.

Optionally, the communication apparatus 1000 may correspond to the terminal device in the foregoing method embodiments, for example, may be a terminal device, or a component (such as a circuit, a chip, or a chip system) disposed in the terminal device.

For example, the transceiver unit 1200 is configured to receive first information, where the first information indicates first group configuration information and/or second group configuration information, the first group configuration information indicates a correspondence between P reference signal ports and Z layers, and the second group configuration information indicates a correspondence between N frequency domain base vectors and the Z layers, where P, N, and Z are all positive integers greater than or equal to 1.

The transceiver unit 1200 is further configured to send a precoding matrix indicator PMI corresponding to the Z layers, where the PMI is determined based on the first information.

For example, the processing unit 1100 is configured to generate first indication information, where the first indication information indicates quantized information of M jointly normalized weighting coefficient sets, each of the M weighting coefficient sets is determined by using a reference signal, the M weighting coefficient sets are in a one-to-one correspondence with M layers, and M is a positive integer greater than or equal to 2.

The transceiver unit 1200 is configured to send the first indication information.

It should be understood that the communication apparatus 1000 may correspond to the terminal device in the method 300, the method 700, the method 800, or the method 900 according to embodiments of this application. The communication apparatus 1000 may include units configured to perform the method performed by the terminal device in the method 300 in FIG. 3, the method 700 in FIG. 7, the method 800 in FIG. 8, or the method 900 in FIG. 9. In addition, the units in the communication apparatus 1000 and the foregoing other operations and/or functions are separately configured to implement a corresponding procedure of the method 300 in FIG. 3, the method 700 in FIG. 7, the method 800 in FIG. 8, or the method 900 in FIG. 9.

When the communication apparatus 1000 is configured to perform the method 300 in FIG. 3, the processing unit 1100 may be configured to perform step S310 in the method 300, and the transceiver unit 1200 may be configured to perform step S320 in the method 300. It should be further understood that a specific process in which the units perform the foregoing corresponding steps is described in detail in the foregoing method embodiments. For brevity, details are not described herein again.

When the communication apparatus 1000 is configured to perform the method 700 in FIG. 7, the processing unit 1100 may be configured to perform step S740 in the method 700, and the transceiver unit 1200 may be configured to perform step S720 and step S730 in the method 700. It should be further understood that a specific process in which the units perform the foregoing corresponding steps is described in detail in the foregoing method embodiments. For brevity, details are not described herein again.

When the communication apparatus 1000 is configured to perform the method 800 in FIG. 8, the processing unit 1100 may be configured to perform step S840 in the method 800, and the transceiver unit 1200 may be configured to perform step S820 and step S830 in the method 800.

It should be further understood that a specific process in which the units perform the foregoing corresponding steps is described in detail in the foregoing method embodiments. For brevity, details are not described herein again.

When the communication apparatus 1000 is configured to perform the method 900 in FIG. 9, the transceiver unit 1200 may be configured to perform step S910 and step S920 in the method 900. It should be further understood that a specific process in which the units perform the foregoing corresponding steps is described in detail in the foregoing method embodiments. For brevity, details are not described herein again.

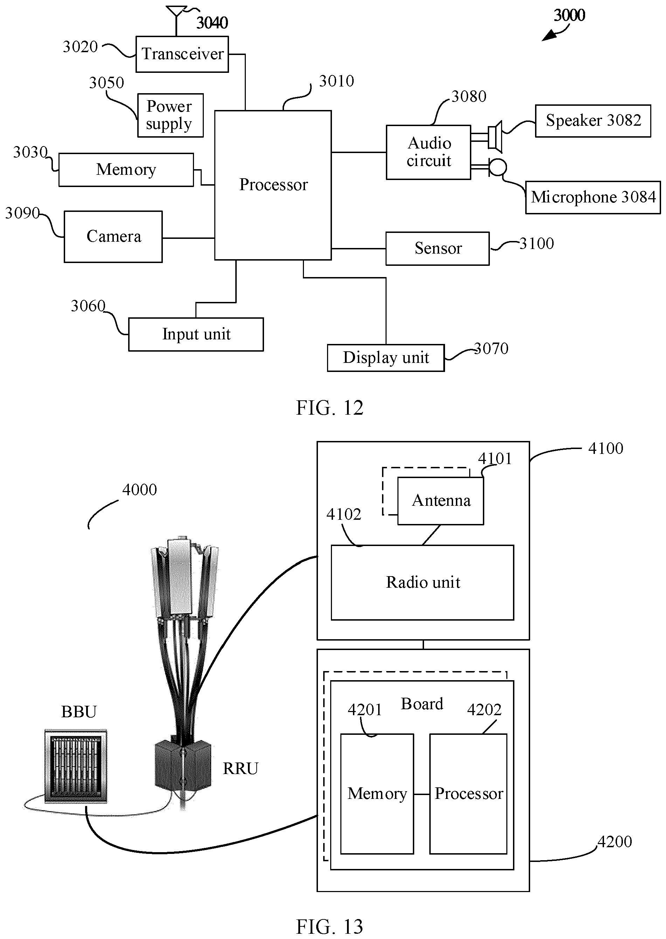

It should be further understood that when the communication apparatus 1000 is a terminal device, the transceiver unit 1200 in the communication apparatus 1000 may be implemented by a transceiver, for example, may correspond to a transceiver 2020 in a communication apparatus 2000 shown in FIG. 11 or a transceiver 3020 in a terminal device 3000 shown in FIG. 12. The processing unit 1100 in the communication apparatus 1000 may be implemented by at least one processor, for example, may correspond to a processor 2010 in the communication apparatus 2000 shown in FIG. 11 or a processor 3010 in the terminal device 3000 shown in FIG. 12.

It should be further understood that when the communication apparatus 1000 is a chip or a chip system disposed in a terminal device, the transceiver unit 1200 in the communication apparatus 1000 may be implemented by an input/output interface, a circuit, or the like, and the processing unit 1100 in the communication apparatus 1000 may be implemented by a processor, a microprocessor, an integrated circuit, or the like integrated on the chip or the chip system.

Optionally, the communication apparatus 1000 may correspond to the network device in the foregoing method embodiments, for example, may be a network device, or a component (such as a circuit, a chip, or a chip system) disposed in the network device.

For example, the transceiver unit 1200 is configured to send first information, where the first information indicates first group configuration information and/or second group configuration information, the first group configuration information indicates a correspondence between P reference signal ports and Z layers, and the second group configuration information indicates a correspondence between N frequency domain base vectors and the Z layers, where P, N, and Z are all positive integers greater than or equal to 1.

The transceiver unit 1200 is further configured to receive a precoding matrix indicator PMI corresponding to the Z layers, where the PMI is determined based on the first information.

For example, the transceiver unit 1200 is configured to receive first indication information, where the first indication information indicates quantized information of M jointly normalized weighting coefficient sets, each of the M weighting coefficient sets is determined by using a reference signal, the M weighting coefficient sets are in a one-to-one correspondence with M layers, and M is a positive integer greater than or equal to 2.

The processing unit 1100 is configured to determine a power difference between the M layers based on the first indication information.

It should be understood that the communication apparatus 1000 may correspond to the network device in the method 300, the method 700, the method 800, or the method 900 according to embodiments of this application. The communication apparatus 1000 may include units configured to perform the method performed by the network device in the method 300 in FIG. 3, the method 700 in FIG. 7, the method 800 in FIG. 8, or the method 900 in FIG. 9. In addition, the units in the communication apparatus 1000 and the foregoing other operations and/or functions are separately configured to implement a corresponding procedure of the method 300 in FIG. 3, the method 700 in FIG. 7, the method 800 in FIG. 8, or the method 900 in FIG. 9.

When the communication apparatus 1000 is configured to perform the method 300 in FIG. 3, the processing unit 1100 may be configured to perform step S330 in the method 300, and the transceiver unit 1200 may be configured to perform step S320 in the method 300. It should be further understood that a specific process in which the units perform the foregoing corresponding steps is described in detail in the foregoing method embodiments. For brevity, details are not described herein again.

When the communication apparatus 1000 is configured to perform the method 700 in FIG. 7, the processing unit 1100 may be configured to perform step S710 in the method 700, and the transceiver unit 1200 may be configured to perform step S720 and step S730 in the method 700. It should be further understood that a specific process in which the units perform the foregoing corresponding steps is described in detail in the foregoing method embodiments. For brevity, details are not described herein again.

When the communication apparatus 1000 is configured to perform the method 800 in FIG. 8, the processing unit 1100 may be configured to perform step S810 in the method 800, and the transceiver unit 1200 may be configured to perform step S820 and step S830 in the method 800. It should be further understood that a specific process in which the units perform the foregoing corresponding steps is described in detail in the foregoing method embodiments. For brevity, details are not described herein again.

When the communication apparatus 1000 is configured to perform the method 900 in FIG. 9, the transceiver unit 1200 may be configured to perform step S910 and step S920 in the method 900.

It should be further understood that a specific process in which the units perform the foregoing corresponding steps is described in detail in the foregoing method embodiments. For brevity, details are not described herein again.

It should be further understood that when the communication apparatus 1000 is a network device, the transceiver unit 1200 in the communication apparatus 1000 may be implemented by a transceiver, for example, may correspond to a transceiver 2020 in a communication apparatus 2000 shown in FIG. 11 or a remote radio unit (remote radio unit, RRU) 4100 in a network device 4000 shown in FIG. 13. The processing unit 1100 in the communication apparatus 1000 may be implemented by at least one processor, for example, may correspond to a processor 2010 in the communication apparatus 2000 shown in FIG. 11 or a processor 4200 or a processor 4202 in the network device 4000 shown in FIG. 13.

It should be further understood that when the communication apparatus 1000 is a chip or a chip system disposed in a network device, the transceiver unit 1200 in the communication apparatus 1000 may be implemented by an input/output interface, a circuit, or the like, and the processing unit 1100 in the communication apparatus 1000 may be implemented by a processor, a microprocessor, an integrated circuit, or the like integrated on the chip or the chip system.

FIG. 11 is a schematic block diagram of the communication apparatus 2000 according to an embodiment of this application. As shown in FIG. 11, the communication apparatus 2000 includes the processor 2010, the transceiver 2020, and a memory 2030. The processor 2010, the transceiver 2020, and the memory 2030 communicate with each other by using an internal connection path. The memory 2030 is configured to store instructions. The processor 2010 is configured to execute the instructions stored in the memory 2030, to control the transceiver 2020 to send a signal and/or receive a signal.

It should be understood that the communication apparatus 2000 may correspond to the network device in the foregoing method embodiments, and may be configured to perform the steps and/or the procedures performed by the network device in the foregoing method embodiments.

As an example rather than a limitation, the transceiver 2020 is configured to send first information, where the first information indicates first group configuration information and/or second group configuration information, the first group configuration information indicates a correspondence between P reference signal ports and Z layers, and the second group configuration information indicates a correspondence between N frequency domain base vectors and the Z layers, where P, N, and Z are all positive integers greater than or equal to 1.

The transceiver 2020 is further configured to receive a precoding matrix indicator PMI corresponding to the Z layers, where the PMI is determined based on the first information.

As an example rather than a limitation, the transceiver 2020 is configured to receive first indication information, where the first indication information indicates quantized information of M jointly normalized weighting coefficient sets, each of the M weighting coefficient sets is determined by using a reference signal, the M weighting coefficient sets are in a one-to-one correspondence with M layers, and M is a positive integer greater than or equal to 2.

The processor 2010 is further configured to determine a power difference between the M layers based on the first indication information.

Optionally, the memory 2030 includes a read-only memory and a random access memory, and provides instructions and data to the processor. A part of the memory may further include a nonvolatile random access memory. The memory 2030 may be an independent component, or may be integrated into the processor 2010. The processor 2010 may be configured to execute the instructions stored in the memory 2030. When the processor 2010 executes the instructions stored in the memory, the processor 2010 is configured to perform the steps and/or the procedures corresponding to the network device or the terminal device in the foregoing method embodiments. Optionally, the communication apparatus 2000 is the network device in the embodiment provided in the method 300 in FIG. 3, the method 700 in FIG. 7, the method 800 in FIG. 8, or the method 900 in FIG. 9.

The transceiver 2020 may include a transmitter and a receiver. The transceiver 2020 may further include an antenna, and there may be one or more antennas. The processor 2010, the memory 2030, and the transceiver 2020 may be components integrated on different chips. For example, the processor 2010 and the memory 2030 may be integrated into a baseband chip, and the transceiver 2020 may be integrated into a radio frequency chip. Alternatively, the processor 2010, the memory 2030, and the transceiver 2020 may be components integrated on a same chip. This is not limited in this application.

Optionally, the communication apparatus 2000 is a component disposed in a network device, for example, a circuit, a chip, or a chip system.

Alternatively, the transceiver 2020 may be a communication interface, such as an input/output interface or a circuit. The transceiver 2020, the processor 2010, and the memory 2030 may be integrated into a same chip, for example, integrated into a baseband chip.

It should be understood that the apparatus 2000 may further correspond to the terminal device (for example, UE) in the foregoing method embodiments, and may be configured to perform the steps and/or the procedures performed by the terminal device in the foregoing method embodiments.

As an example rather than a limitation, the transceiver 2020 is configured to receive first information, where the first information indicates first group configuration information and/or second group configuration information, the first group configuration information indicates a correspondence between P reference signal ports and Z layers, and the second group configuration information indicates a correspondence between N frequency domain base vectors and the Z layers, where P, N, and Z are all positive integers greater than or equal to 1.

The transceiver 2020 is further configured to send a precoding matrix indicator PMI corresponding to the Z layers, where the PMI is determined based on the first information.

As an example rather than a limitation, the processor 2010 is configured to generate first indication information, where the first indication information indicates quantized information of M jointly normalized weighting coefficient sets, each of the M weighting coefficient sets is determined by using a reference signal, the M weighting coefficient sets are in a one-to-one correspondence with M layers, and M is a positive integer greater than or equal to 2.

The transceiver 2020 is further configured to send the first indication information.

Optionally, the memory 2030 includes a read-only memory and a random access memory, and provides instructions and data to the processor. A part of the memory may further include a nonvolatile random access memory. The memory 2030 may be an independent component, or may be integrated into the processor 2010. The processor 2010 may be configured to execute the instructions stored in the memory 2030. When the processor 2010 executes the instructions stored in the memory, the processor 2010 is configured to perform the steps and/or the procedures corresponding to the terminal device in the foregoing method embodiments.

Optionally, the communication apparatus 2000 is the terminal device in the method 300, the method 700, the method 800, or the method 900 in the foregoing embodiments.

The transceiver 2020 may include a transmitter and a receiver. The transceiver 2020 may further include an antenna, and there may be one or more antennas. The processor 2010, the memory 2030, and the transceiver 2020 may be components integrated on different chips. For example, the processor 2010 and the memory 2030 may be integrated into a baseband chip, and the transceiver 2020 may be integrated into a radio frequency chip. Alternatively, the processor 2010, the memory 2030, and the transceiver 2020 may be components integrated on a same chip. This is not limited in this application.

Optionally, the apparatus 2000 is a component disposed in a terminal device, for example, a circuit, a chip, or a chip system.

Alternatively, the transceiver 2020 may be a communication interface, such as an input/output interface or a circuit. The transceiver 2020, the processor 2010, and the memory 2020 may be integrated into a same chip, for example, integrated into a baseband chip.

FIG. 12 is a schematic diagram of a structure of the terminal device 3000 according to an embodiment of this application. The terminal device 3000 may be used in the system shown in FIG. 1, to perform functions of the terminal device in the foregoing method embodiments. As shown in FIG. 12, the terminal device 3000 includes the processor 3010 and the transceiver 3020. Optionally, the terminal device 3000 further includes a memory 3030. The processor 3010, the transceiver 3020, and the memory 3030 may communicate with each other by using an internal connection path, to transfer a control signal and/or a data signal. The memory 3030 is configured to store a computer program. The processor 3010 is configured to invoke the computer program from the memory 3030 and run the computer program, to control the transceiver 3020 to receive and send a signal. Optionally, the terminal device 3000 may further include an antenna 3040, configured to send, by using a radio signal, uplink data or uplink control signaling output by the transceiver 3020.

The processor 3010 and the memory 3030 may be integrated into one processing apparatus. The processor 3010 is configured to execute program code stored in the memory 3030 to implement the foregoing functions. During specific implementation, the memory 3030 may also be integrated into the processor 3010, or may be independent of the processor 3010. The processor 3010 may correspond to the processing unit 1100 in FIG. 10 or the processor 2010 in FIG. 11.

The transceiver 3020 may correspond to the transceiver unit 1200 in FIG. 10 or the transceiver 2020 in FIG. 11. The transceiver 3020 may include a receiver (or referred to as a receiver machine or a receiver circuit) and a transmitter (or referred to as a transmitter machine or a transmitter circuit). The receiver is configured to receive a signal, and the transmitter is configured to transmit a signal.

As an example rather than a limitation, the transceiver 3020 is configured to receive first information, where the first information indicates first group configuration information and/or second group configuration information, the first group configuration information indicates a correspondence between P reference signal ports and Z layers, and the second group configuration information indicates a correspondence between N frequency domain base vectors and the Z layers, where P, N, and Z are all positive integers greater than or equal to 1.

The transceiver 3020 is further configured to send a precoding matrix indicator PMI corresponding to the Z layers, where the PMI is determined based on the first information.

As an example rather than a limitation, the processor 3010 is configured to generate first indication information, where the first indication information indicates quantized information of M jointly normalized weighting coefficient sets, each of the M weighting coefficient sets is determined by using a reference signal, the M weighting coefficient sets are in a one-to-one correspondence with M layers, and M is a positive integer greater than or equal to 2.

The transceiver 3020 is further configured to send the first indication information.

It should be understood that the terminal device 3000 shown in FIG. 12 can implement the processes related to the terminal device in the method embodiment shown in FIG. 3, FIG. 7, FIG. 8, or FIG. 9. The operations and/or the functions of the modules in the terminal device 3000 are intended to implement corresponding procedures in the foregoing method embodiments. For details, refer to the description in the foregoing method embodiments. To avoid repetition, detailed descriptions are appropriately omitted herein.

The processor 3010 may be configured to perform an action that is implemented inside the terminal device and that is described in the foregoing method embodiments. The transceiver 3020 may be configured to perform an action of sending by the terminal device to the network device or an action of receiving from the network device in the foregoing method embodiments. For details, refer to the description in the foregoing method embodiments. Details are not described herein again.

Optionally, the terminal device 3000 may further include a power supply 3050, configured to supply power to various components or circuits in the terminal device.

In addition, to improve functions of the terminal device, the terminal device 3000 may further include one or more of an input unit 3060, a display unit 3070, an audio circuit 3080, a camera 3090, a sensor 3100, and the like. The audio circuit may further include a speaker 3082, a microphone 3084, and the like.

FIG. 13 is a schematic diagram of a structure of a network device according to an embodiment of this application, for example, may be a schematic diagram of a structure of a base station. The base station 4000 may be used in the system shown in FIG. 1, to perform functions of the network device in the foregoing method embodiments. As shown in FIG. 13, the base station 4000 may include one or more radio units, such as a remote radio unit (remote radio unit, RRU) 4100 and one or more baseband units (BBU) (which may also be referred to as a distributed unit (DU)) 4200. The RRU 4100 may be referred to as a transceiver unit, and may correspond to the transceiver unit 1200 in FIG. 10 or the transceiver 2020 in FIG. 11.

Optionally, the RRU 4100 may also be referred to as a transceiver, a transceiver circuit, a transceiver, or the like, and may include at least one antenna 4101 and a radio unit 4102. Optionally, the RRU 4100 may include a receiving unit and a sending unit. The receiving unit may correspond to a receiver (or referred to as a receiver machine or a receiver circuit), and the sending unit may correspond to a transmitter (or referred to as a transmitter machine or a transmitter circuit). The RRU 4100 is mainly configured to receive and send a radio frequency signal and perform conversion between the radio frequency signal and a baseband signal, for example, configured to send indication information to a terminal device. The BBU 4200 is mainly configured to perform baseband processing, control the base station, and the like. The RRU 4100 and the BBU 4200 may be physically disposed together, or may be physically disposed separately, that is, a distributed base station.

The BBU 4200 is a control center of the base station, may also be referred to as a processing unit, may correspond to the processing unit 1100 in FIG. 10 or the processor 2010 in FIG. 11, and is mainly configured to complete a baseband processing function, such as channel coding, multiplexing, modulation, and spectrum spreading. For example, the BBU (the processing unit) may be configured to control the base station to perform an operation procedure related to the network device in the foregoing method embodiments, for example, generate the foregoing indication information.

In an example, the BBU 4200 may include one or more boards. A plurality of boards may jointly support a radio access network (for example, an LTE network) of a single access standard, or may separately support radio access networks (for example, an LTE network, a 5G network, or another network) of different access standards. The BBU 4200 further includes a memory 4201 and a processor 4202. The memory 4201 is configured to store necessary instructions and necessary data. The processor 4202 is configured to control the base station to perform a necessary action, for example, configured to control the base station to perform an operation procedure related to the network device in the foregoing method embodiments. The memory 4201 and the processor 4202 may serve one or more boards. In other words, a memory and a processor may be separately disposed on each board. Alternatively, a plurality of boards may share a same memory and a same processor. In addition, a necessary circuit may be further disposed on each board.

As an example rather than a limitation, the transceiver 4100 is configured to send first information, where the first information indicates first group configuration information and/or second group configuration information, the first group configuration information indicates a correspondence between P reference signal ports and Z layers, and the second group configuration information indicates a correspondence between N frequency domain base vectors and the Z layers, where P, N, and Z are all positive integers greater than or equal to 1.

The transceiver 4100 is further configured to receive a precoding matrix indicator PMI corresponding to the Z layers, where the PMI is determined based on the first information.

As an example rather than a limitation, the transceiver 4100 is configured to receive first indication information, where the first indication information indicates quantized information of M jointly normalized weighting coefficient sets, each of the M weighting coefficient sets is determined by using a reference signal, the M weighting coefficient sets are in a one-to-one correspondence with M layers, and M is a positive integer greater than or equal to 2.

The processor 4202 is configured to determine a power difference between the M layers based on the first indication information.

It should be understood that the base station 4000 shown in FIG. 13 can implement the processes related to the network device in the method embodiment shown in FIG. 3, FIG. 7, FIG. 8, or FIG. 9. The operations and/or the functions of the modules in the base station 4000 are intended to implement corresponding procedures in the foregoing method embodiments. For details, refer to the description in the foregoing method embodiments. To avoid repetition, detailed descriptions are appropriately omitted herein.

The BBU 4200 may be configured to perform an action that is implemented inside the network device and that is described in the foregoing method embodiments. The RRU 4100 may be configured to perform an action of sending by the network device to the terminal device or an action of receiving from the terminal device in the foregoing method embodiments. For details, refer to the description in the foregoing method embodiments. Details are not described herein again.

It should be understood that the base station 4000 shown in FIG. 13 is merely a possible form of the network device, and should not constitute any limitation on this application. The method provided in this application is applicable to a network device in another form. For example, the network device includes an AAU, and may further include a CU and/or a DU, or include a BBU and an adaptive radio unit (adaptive radio unit, ARU), or a BBU; may be customer premises equipment (customer premises equipment, CPE); or may be in another form. A specific form of the network device is not limited in this application.

The CU and/or the DU may be configured to perform an action that is implemented inside the network device and that is described in the foregoing method embodiments. The AAU may be configured to perform an action of sending by the network device to the terminal device or an action of receiving from the terminal device in the foregoing method embodiments. For details, refer to the description in the foregoing method embodiments. Details are not described herein again.

This application further provides a processing apparatus, including at least one processor. The at least one processor is configured to execute a computer program stored in a memory, so that the processing apparatus performs the method performed by the terminal device or the network device in any one of the foregoing method embodiments.

It should be understood that the processing apparatus may be one or more chips. For example, the processing apparatus may be a field programmable gate array (field programmable gate array, FPGA), an application-specific integrated circuit (application specific integrated circuit, ASIC), a system on chip (system on chip, SoC), a central processing unit (central processing unit, CPU), a network processor (network processor, NP), a digital signal processor (digital signal processor, DSP), a micro controller unit (micro controller unit, MCU), a programmable logic device (programmable logic device, PLD), or another integrated chip.

An embodiment of this application further provides a processing apparatus, including a processor and a communication interface. The communication interface is coupled to the processor. The communication interface is configured to input and/or output information. The information includes at least one of instructions and data. The processor is configured to execute a computer program, so that the processing apparatus performs the method performed by the terminal device or the network device in any one of the foregoing method embodiments.

An embodiment of this application further provides a processing apparatus, including a processor and a memory. The memory is configured to store a computer program. The processor is configured to invoke the computer program from the memory and run the computer program, so that the processing apparatus performs the method performed by the terminal device or the network device in any one of the foregoing method embodiments.

According to the methods provided in embodiments of this application, this application further provides a computer program product. The computer program product includes computer program code. When the computer program code is run on a computer, the computer is enabled to perform the method performed by the terminal device or the network device in the embodiment shown in FIG. 3, FIG. 7, FIG. 8, or FIG. 9.

According to the methods provided in embodiments of this application, this application further provides a computer-readable storage medium. The computer-readable storage medium stores program code. When the program code is run on a computer, the computer is enabled to perform the method performed by the terminal device or the network device in the embodiment shown in FIG. 3, FIG. 7, FIG. 8, or FIG. 9.

According to the methods provided in embodiments of this application, this application further provides a system. The system includes the foregoing one or more terminal devices and the foregoing one or more network devices.

The network device and the terminal device in the foregoing apparatus embodiments correspond to the network device or the terminal device in the method embodiments. A corresponding module or unit performs a corresponding step. For example, the communication unit (the transceiver) performs a receiving step or a sending step in the method embodiments, and the processing unit (the processor) may perform a step other than the sending step and the receiving step. For a function of a specific unit, refer to the corresponding method embodiments. There may be one or more processors.

In the foregoing embodiments, the terminal device may be used as an example of a receiving device, and the network device may be used as an example of a sending device. However, this should not constitute any limitation on this application. For example, both the sending device and the receiving device may be terminal devices. A specific type of the sending device and a specific type of the receiving device are not limited in this application.

It should be noted that, the processor in embodiments of this application may be an integrated circuit chip, and has a signal processing capability. In an implementation process, the steps in the foregoing method embodiments may be implemented by using an integrated logic circuit of hardware in the processor, or by using instructions in a form of software. The method disclosed with reference to embodiments of this application may be directly performed and completed by a hardware decoding processor, or may be performed and completed by using a combination of hardware and a software module in a decoding processor. The software module may be located in a mature storage medium in the art, such as a random access memory, a flash memory, a read-only memory, a programmable read-only memory, an electrically erasable programmable memory, a register, or the like. The storage medium is located in the memory, and a processor reads information in the memory and completes the steps in the foregoing methods in combination with hardware of the processor.

It should be understood that, the processor in embodiments of this application may be a central processing unit (central processing unit, CPU), or may be another general-purpose processor, a digital signal processor (digital signal processor, DSP), an application-specific integrated circuit (application specific integrated circuit, ASIC), a field programmable gate array (field programmable gate array, FPGA), or another programmable logic device, a discrete gate or transistor logic device, a discrete hardware component, or the like. It may implement or perform the methods, the steps, and logical block diagrams that are disclosed in embodiments of this application. The general purpose processor may be a microprocessor, or the processor may be any conventional processor or the like.

It may be further understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), which is used as an external cache. By way of example rather than limitation, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM). It should be noted that the memory in the system and method described in this specification includes but is not limited to these memories and any other memory of a proper type.

All or some of the foregoing embodiments may be implemented by using software, hardware, firmware, or any combination thereof. When software is used to implement embodiments, all or some of the foregoing embodiments may be implemented in a form of a computer program product. The computer program product includes one or more computer instructions or computer programs. When the computer instructions or the computer programs are loaded or executed on a computer, the procedures or functions according to embodiments of this application are all or partially generated. The computer may be a general-purpose computer, a dedicated computer, a computer network, or another programmable apparatus. The computer instructions may be stored on a computer-readable storage medium, or transmitted from one computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible to a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid state drive.

Terminologies such as "component", "module", and "system" used in this specification indicate computer-related entities, hardware, firmware, combinations of hardware and software, software, or software being executed. For example, a component may be, but is not limited to, a process that runs on a processor, a processor, an object, an executable file, a thread of execution, a program, and/or a computer. As shown in figures, both a computing device and an application that runs on a computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the internet interacting with other systems by using the signal).

A person of ordinary skill in the art may be aware that, in combination with examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for convenient and brief description, for a detailed working process of the foregoing system, apparatus, and units, refer to a corresponding process in the foregoing method embodiments, and details are not described herein again.

In the several embodiments provided in this application, it should be understood that the disclosed systems, apparatuses, and methods may be implemented in other manners. For example, the described apparatus embodiments are merely examples. For example, division into the units is merely logical function division, and there may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms. The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The software product is stored in a storage medium, and includes several instructions for instructing a computer device (which may be a personal computer, a server, or a network device) to perform all or some of the steps of the methods described in embodiments of this application. The storage medium includes any medium that can store program codes, such as a USB flash drive, a removable hard disk, a read-only memory (ROM), a random access memory (RAM), a magnetic disk, or an optical disk.

In embodiments of this application, the terminal device or the network device includes a hardware layer, an operating system layer running on the hardware layer, and an application layer running on the operating system layer. The hardware layer includes hardware such as a central processing unit CPU, a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not specifically limited in embodiments of this application, provided that a program that records code of the method provided in embodiments of this application can be run to perform communication according to the method provided in embodiments of this application. For example, the execution body of the method provided in embodiments of this application may be the terminal device or the network device, or a functional module that can invoke and execute the program in the terminal device or the network device.

In addition, aspects or features of this application may be implemented as a method, an apparatus, or a product that uses standard programming and/or engineering technologies. The term "product" used in this application covers a computer program that can be accessed from any computer-readable component, carrier or medium. For example, the computer-readable medium may include, but is not limited to, a magnetic storage device (for example, a hard disk, a floppy disk, or a magnetic tape), an optical disc (for example, a compact disc (compact disc, CD), or a digital versatile disk (DVD)), a smart card, and a flash storage device (for example, an erasable programmable read-only memory EPROM, a card, a stick or a key drive). In addition, various storage media described in this specification may represent one or more devices and/or other machine-readable media that are configured to store information. The term "machine-readable medium" may include but is not limited to a radio channel, and various other media that can store, include and/or carry instructions and/or data.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, comprising:

    receiving first information, wherein the first information indicates first group configuration information and/or second group configuration information, the first group configuration information indicates a correspondence between P reference signal ports and Z layers, and the second group configuration information indicates a correspondence between N frequency domain base vectors and the Z layers, wherein P, N, and Z are all positive integers greater than or equal to 1; and
    sending a precoding matrix indicator PMI corresponding to the Z layers, wherein the PMI is determined based on the first information.

2. The method according to claim 1, wherein each of the Z layers corresponds to one or more of the P reference signal ports.

3. The method according to claim 1 or 2, wherein ports corresponding to at least two of the Z layers are not completely the same.

4. The method according to any one of claims 1 to 3, wherein each of the Z layers corresponds to one or more of the N frequency domain base vectors.

5. The method according to any one of claims 1 to 4, wherein frequency domain base vectors corresponding to at least two of the Z layers are not completely the same.

6. The method according to any one of claims 1 to 5, wherein the first group configuration information and/or the second group configuration information are/is carried in at least one of the following signaling: radio resource control RRC, a media access control control element MAC CE, or downlink control information DCI; or
the first group configuration information and/or the second group configuration information are/is predefined in a protocol.

7. The method according to any one of claims 1 to 6, wherein the first group configuration information and/or the second group configuration information are/is determined based on K angle-delay pairs of uplink channel information, and K is a positive integer greater than or equal to 1.

8. A communication method, comprising:

sending first information, wherein the first information indicates first group configuration information and/or second group configuration information, the first group configuration information indicates a correspondence between P reference signal ports and Z layers, and the second group configuration information indicates a correspondence between N frequency domain base vectors and the Z layers, wherein P, N, and Z are all positive integers greater than or equal to 1; and
receiving a precoding matrix indicator PMI corresponding to the Z layers, wherein the PMI is determined based on the first information.

9. The method according to claim 8, wherein each of the Z layers corresponds to one or more of the P reference signal ports.

10. The method according to claim 8 or 9, wherein ports corresponding to at least two of the Z layers are not completely the same.

11. The method according to any one of claims 8 to 10, wherein each of the Z layers corresponds to one or more of the N frequency domain base vectors.

12. The method according to any one of claims 8 to 11, wherein frequency domain base vectors corresponding to at least two of the Z layers are not completely the same.

13. The method according to any one of claims 8 to 12, wherein the first group configuration information and/or the second group configuration information are/is carried in at least one of the following signaling: radio resource control RRC, a media access control control element MAC CE, or downlink control information DCI; or
the first group configuration information and/or the second group configuration information are/is predefined in a protocol.

14. The method according to any one of claims 8 to 13, wherein the first group configuration information and/or the second group configuration information are/is determined based on K angle-delay pairs of uplink channel information, and K is a positive integer greater than or equal to 1.

15. A communication method, comprising:

generating first indication information, wherein the first indication information indicates quantized information of M jointly normalized weighting coefficient sets, each of the M weighting coefficient sets is determined by using a reference signal, the M weighting coefficient sets are in a one-to-one correspondence with M layers, and M is a positive integer greater than or equal to 2; and
sending the first indication information.

16. The method according to claim 15, wherein each of the M weighting coefficient sets comprises a plurality of weighting coefficients, and the method further comprises:

normalizing all weighting coefficients in the M weighting coefficient sets based on a first weighting coefficient, to obtain the quantized information of the M jointly normalized weighting coefficient sets, wherein the first weighting coefficient is a weighting coefficient in an $L^{th}$ weighting coefficient set, the $L^{th}$ weighting coefficient set is any one of the M weighting coefficient sets, and L is a positive integer; and
sending a first message, wherein the first message indicates the first weighting coefficient.

17. The method according to claim 16, wherein the first weighting coefficient is a weighting coefficient with a maximum modulus value in the $L^{th}$ weighting coefficient set.

18. The method according to claim 16 or 17, wherein the $L^{th}$ weighting coefficient set is determined by a terminal device, or the $L^{th}$ weighting coefficient set is predefined in a protocol.

19. The method according to any one of claims 15 to 18, wherein the method further comprises:

performing first normalization on M-1 third weighting coefficients based on a second weighting coefficient, wherein the second weighting coefficient is a weighting coefficient in a $U^{th}$ weighting coefficient set, the $U^{th}$ weighting coefficient set corresponds to a $u^{th}$ layer, the third weighting coefficient is a weighting coefficient in each of M-1 weighting coefficient sets other than the $U^{th}$ weighting coefficient set in the M weighting coefficient sets, the M-1 weighting coefficient sets are in a one-to-one correspondence with M-1 layers other than the $u^{th}$ layer in the M layers, both U and u are positive integers, and the $u^{th}$ layer belongs to the M layers;
performing second normalization on all weighting coefficients in the $U^{th}$ weighting coefficient set based on the second weighting coefficient, and performing third normalization on all weighting coefficients in a weighting coefficient set corresponding to the third weighting coefficient;
obtaining the quantized information of the M jointly normalized weighting coefficient sets based on the first normalization, the second normalization, and the third normalization; and
sending a second message, wherein the second message indicates the second weighting coefficient and the M-1 third weighting coefficients.

20. The method according to claim 19, wherein the second weighting coefficient is a weighting coefficient with a maximum modulus value in the $U^{th}$ weighting coefficient set, and/or the third weighting coefficient is a weighting coefficient with a maximum modulus value in each of the M-1 weighting coefficient sets other than the $U^{th}$ weighting coefficient set in the M weighting coefficient sets.

21. The method according to any one of claims 15 to 20, wherein the method further comprises:

performing fourth normalization on M-1 fifth weighting coefficients based on a fourth weighting coefficient, wherein the fourth weighting coefficient is a weighting coefficient in an $X^{th}$ weighting coefficient set, the $X^{th}$ weighting coefficient set corresponds to an $x^{th}$ layer, the fifth weighting coefficient is a weighting coefficient in each of M-1 weighting coefficient sets other than the $X^{th}$ weighting coefficient set in the M weighting coefficient sets, the M-1 weighting coefficient sets are in a one-to-one correspondence with M-1 layers other than the $x^{th}$ layer in the M layers, both X and x are positive integers, and the $x^{th}$ layer belongs to the M layers;
performing fifth normalization on all weighting coefficients in the $X^{th}$ weighting coefficient set based on the fourth weighting coefficient;
performing, based on the fourth weighting coefficient and the fifth weighting coefficient respectively, sixth normalization and seventh normalization on all weighting coefficients in a weighting coefficient set corresponding to the fifth weighting coefficient;
obtaining the quantized information of the M jointly normalized weighting coefficient sets based on the fourth normalization, the fifth normalization, the sixth normalization, and the seventh normalization; and
sending a third message, wherein the third message indicates the fourth weighting coefficient and the M-1 fifth weighting coefficients.

22. The method according to claim 21, wherein the fourth weighting coefficient is a weighting coefficient with a maximum modulus value in the $X^{th}$ weighting coefficient set, and/or the fifth weighting coefficient is a weighting coefficient with a maximum modulus value in each of the M-1 weighting coefficient sets other than the $X^{th}$ weighting coefficient set in the M weighting coefficient sets.

**23.** A communication method, comprising:

receiving first indication information, wherein the first indication information indicates quantized information of M jointly normalized weighting coefficient sets, each of the M weighting coefficient sets is determined by using a reference signal, the M weighting coefficient sets are in a one-to-one correspondence with M layers, and M is a positive integer greater than or equal to 2.

**24.** The method according to claim 23, wherein each of the M weighting coefficient sets comprises a plurality of weighting coefficients, and the method further comprises:

receiving a first message, wherein the first message indicates a first weighting coefficient, the first weighting coefficient is for normalizing all weighting coefficients in the M weighting coefficient sets, the first weighting coefficient is a weighting coefficient in an $N^{th}$ weighting coefficient set, the $N^{th}$ weighting coefficient set is any one of the M weighting coefficient sets, and N is a positive integer.

**25.** The method according to claim 24, wherein the first weighting coefficient is a weighting coefficient with a maximum modulus value in the $L^{th}$ weighting coefficient set.

**26.** The method according to claim 24 or 25, wherein the $N^{th}$ weighting coefficient set is determined by a terminal device, or the $N^{th}$ weighting coefficient set is predefined in a protocol.

**27.** The method according to any one of claims 23 to 26, wherein the method further comprises:

receiving a second message, wherein the second message indicates a second weighting coefficient and M-1 third weighting coefficients, the second weighting coefficient is for performing first normalization on the M-1 third weighting coefficients, the second weighting coefficient is a weighting coefficient in a $U^{th}$ weighting coefficient set, the $U^{th}$ weighting coefficient set corresponds to a $u^{th}$ layer, the third weighting coefficient is a weighting coefficient in each of M-1 weighting coefficient sets other than the $U^{th}$ weighting coefficient set in the M weighting coefficient sets, the M-1 weighting coefficient sets are in a one-to-one correspondence with M-1 layers other than the $u^{th}$ layer in the M layers, both U and u are positive integers, and the $u^{th}$ layer belongs to the M layers; and the second weighting coefficient is further for performing second normalization on all weighting coefficients in the $U^{th}$ weighting coefficient set, the third weighting coefficient is for performing third normalization on all weighting coefficients in a weighting coefficient set corresponding to the third weighting coefficient, and the first normalization, the second normalization, and the third normalization are for obtaining the quantized information of the M jointly normalized weighting coefficient sets.

**28.** The method according to claim 27, wherein the second weighting coefficient is a weighting coefficient with a maximum modulus value in the $U^{th}$ weighting coefficient set, and/or the third weighting coefficient is a weighting coefficient with a maximum modulus value in each of the M-1 weighting coefficient sets other than the $U^{th}$ weighting coefficient set in the M weighting coefficient sets.

**29.** The method according to any one of claims 23 to 28, wherein the method further comprises:

receiving a third message, wherein the third message indicates a fourth weighting coefficient and M-1 fifth weighting coefficients, the fourth weighting coefficient is for performing fourth normalization on the M-1 fifth weighting coefficients, the fourth weighting coefficient is a weighting coefficient in an $X^{th}$ weighting coefficient set, the $X^{th}$ weighting coefficient set corresponds to an $x^{th}$ layer, the fifth weighting coefficient is a weighting coefficient in each of M-1 weighting coefficient sets other than the $X^{th}$ weighting coefficient set in the M weighting coefficient sets, the M-1 weighting coefficient sets are in a one-to-one correspondence with M-1 layers other than the $x^{th}$ layer in the M layers, both X and x are positive integers, and the $X^{th}$ layer belongs to the M layers; and the fourth weighting coefficient is further for performing fifth normalization on all weighting coefficients in the $X^{th}$ weighting coefficient set, the fourth weighting coefficient and the fifth weighting coefficient are further respectively for performing sixth normalization and seventh normalization on all weighting coefficients in a weighting coefficient set corresponding to the fifth weighting coefficient, and the four normalization, the fifth normalization, the sixth normalization, and the seventh normalization are for obtaining the quantized information of the M jointly normalized weighting coefficient sets.

**30.** The method according to claim 29, wherein the fourth weighting coefficient is a weighting coefficient with a maximum modulus value in the $X^{th}$ weighting coefficient set, and/or the fifth weighting coefficient is a weighting coefficient with a maximum modulus value in each of the M-1 weighting coefficient sets other than the $X^{th}$ weighting coefficient set in the M weighting coefficient sets.

**31.** A communication apparatus, comprising:

a transceiver unit, configured to receive first information, wherein the first information indicates first group configuration information and/or second group configuration information, the first group configuration information indicates a correspondence between P reference signal ports and Z layers, and the second group configuration information indicates a correspondence between N frequency domain base vectors and the Z layers, wherein P, N, and Z are all positive integers greater than or equal to 1, wherein

the transceiver unit is further configured to send a precoding matrix indicator PMI corresponding to the Z layers, wherein the PMI is determined based on the first information.

32. The apparatus according to claim 31, wherein each of the Z layers corresponds to one or more of the P reference signal ports.

33. The apparatus according to claim 31 or 32, wherein ports corresponding to at least two of the Z layers are not completely the same.

34. The apparatus according to any one of claims 31 to 33, wherein each of the Z layers corresponds to one or more of the N frequency domain base vectors.

35. The apparatus according to any one of claims 31 to 34, wherein frequency domain base vectors corresponding to at least two of the Z layers are not completely the same.

36. The apparatus according to any one of claims 31 to 35, wherein the first group configuration information and/or the second group configuration information are/is carried in at least one of the following signaling: radio resource control RRC, a media access control control element MAC CE, or downlink control information DCI; or

the first group configuration information and/or the second group configuration information are/is predefined in a protocol.

37. The apparatus according to any one of claims 31 to 36, wherein the first group configuration information and/or the second group configuration information are/is determined based on K angle-delay pairs of uplink channel information, and K is a positive integer greater than or equal to 1.

38. A communication apparatus, comprising:

a transceiver unit, configured to send first information, wherein the first information indicates first group configuration information and/or second group configuration information, the first group configuration information indicates a correspondence between P reference signal ports and Z layers, and the second group configuration information indicates a correspondence between N frequency domain base vectors and the Z layers, wherein P, N, and Z are all positive integers greater than or equal to 1, wherein

the transceiver unit is further configured to receive a precoding matrix indicator PMI corresponding to the Z layers, wherein the PMI is determined based on the first information.

39. The apparatus according to claim 38, wherein each of the Z layers corresponds to one or more of the P reference signal ports.

40. The apparatus according to claim 38 or 39, wherein ports corresponding to at least two of the Z layers are not completely the same.

41. The apparatus according to any one of claims 38 to 40, wherein each of the Z layers corresponds to one or more of the N frequency domain base vectors.

42. The apparatus according to any one of claims 38 to 41, wherein frequency domain base vectors corresponding to at least two of the Z layers are not completely the same.

43. The apparatus according to any one of claims 38 to 42, wherein the first group configuration information and/or the second group configuration information are/is carried in at least one of the following signaling: radio resource control RRC, a media access control control element MAC CE, or downlink control information DCI; or

the first group configuration information and/or the second group configuration information are/is predefined in a protocol.

**44.** The apparatus according to any one of claims 38 to 43, wherein the first group configuration information and/or the second group configuration information are/is determined based on K angle-delay pairs of uplink channel information, and K is a positive integer greater than or equal to 1.

**45.** A communication apparatus, comprising:

a processing unit, configured to generate first indication information, wherein the first indication information indicates quantized information of M jointly normalized weighting coefficient sets, each of the M weighting coefficient sets is determined by using a reference signal, the M weighting coefficient sets are in a one-to-one correspondence with M layers, and M is a positive integer greater than or equal to 2; and
a transceiver unit, configured to send the first indication information.

**46.** The apparatus according to claim 45, wherein

the processing unit is further configured to normalize all weighting coefficients in the M weighting coefficient sets based on a first weighting coefficient, to obtain the quantized information of the M jointly normalized weighting coefficient sets, wherein the first weighting coefficient is a weighting coefficient in an $L^{th}$ weighting coefficient set, the $L^{th}$ weighting coefficient set is any one of the M weighting coefficient sets, and L is a positive integer; and
the transceiver unit is further configured to send a first message, wherein the first message indicates the first weighting coefficient.

**47.** The apparatus according to claim 46, wherein the first weighting coefficient is a weighting coefficient with a maximum modulus value in the $L^{th}$ weighting coefficient set.

**48.** The apparatus according to claim 46 or 47, wherein the $L^{th}$ weighting coefficient set is determined by a terminal device, or the $L^{th}$ weighting coefficient set is predefined in a protocol.

**49.** The apparatus according to any one of claims 45 to 48, wherein the processing unit is further configured to:

perform first normalization on M-1 third weighting coefficients based on a second weighting coefficient, wherein the second weighting coefficient is a weighting coefficient in a $U^{th}$ weighting coefficient set, the $U^{th}$ weighting coefficient set corresponds to a $u^{th}$ layer, the third weighting coefficient is a weighting coefficient in each of M-1 weighting coefficient sets other than the $U^{th}$ weighting coefficient set in the M weighting coefficient sets, the M-1 weighting coefficient sets are in a one-to-one correspondence with M-1 layers other than the $u^{th}$ layer in the M layers, both U and u are positive integers, and the $u^{th}$ layer belongs to the M layers;
perform second normalization on all weighting coefficients in the $U^{th}$ weighting coefficient set based on the second weighting coefficient, and perform third normalization on all weighting coefficients in a weighting coefficient set corresponding to the third weighting coefficient; and
obtain the quantized information of the M jointly normalized weighting coefficient sets based on the first normalization, the second normalization, and the third normalization; and
the transceiver unit is further configured to send a second message, wherein the second message indicates the second weighting coefficient and the M-1 third weighting coefficients.

**50.** The apparatus according to claim 49, wherein the second weighting coefficient is a weighting coefficient with a maximum modulus value in the $U^{th}$ weighting coefficient set, and/or the third weighting coefficient is a weighting coefficient with a maximum modulus value in each of the M-1 weighting coefficient sets other than the $U^{th}$ weighting coefficient set in the M weighting coefficient sets.

**51.** The apparatus according to any one of claims 45 to 50, wherein the processing unit is further configured to:

perform fourth normalization on M-1 fifth weighting coefficients based on a fourth weighting coefficient, wherein the fourth weighting coefficient is a weighting coefficient in an $X^{th}$ weighting coefficient set, the $X^{th}$ weighting coefficient set corresponds to an $x^{th}$ layer, the fifth weighting coefficient is a weighting coefficient in each of M-1 weighting coefficient sets other than the $X^{th}$ weighting coefficient set in the M weighting coefficient sets, the M-1 weighting coefficient sets are in a one-to-one correspondence with M-1 layers other than the $x^{th}$ layer in the M layers, both X and x are positive integers, and the $x^{th}$ layer belongs to the M layers;
perform fifth normalization on all weighting coefficients in the $X^{th}$ weighting coefficient set based on the fourth weighting coefficient;

perform, based on the fourth weighting coefficient and the fifth weighting coefficient respectively, sixth normalization and seventh normalization on all weighting coefficients in a weighting coefficient set corresponding to the fifth weighting coefficient; and

obtain the quantized information of the M jointly normalized weighting coefficient sets based on the fourth normalization, the fifth normalization, the sixth normalization, and the seventh normalization; and

the transceiver unit is further configured to send a third message, wherein the third message indicates the fourth weighting coefficient and the M-1 fifth weighting coefficients.

52. The apparatus according to claim 51, wherein the fourth weighting coefficient is a weighting coefficient with a maximum modulus value in the $X^{th}$ weighting coefficient set, and/or the fifth weighting coefficient is a weighting coefficient with a maximum modulus value in each of the M-1 weighting coefficient sets other than the $X^{th}$ weighting coefficient set in the M weighting coefficient sets.

53. A communication apparatus, comprising:

a transceiver unit, configured to receive first indication information, wherein the first indication information indicates quantized information of M jointly normalized weighting coefficient sets, each of the M weighting coefficient sets is determined by using a reference signal, the M weighting coefficient sets are in a one-to-one correspondence with M layers, and M is a positive integer greater than or equal to 2.

54. The apparatus according to claim 53, wherein the transceiver unit is further configured to:

receive a first message, wherein the first message indicates a first weighting coefficient, the first weighting coefficient is for normalizing all weighting coefficients in the M weighting coefficient sets, the first weighting coefficient is a weighting coefficient in an $N^{th}$ weighting coefficient set, the $N^{th}$ weighting coefficient set is any one of the M weighting coefficient sets, and N is a positive integer.

55. The apparatus according to claim 54, wherein the first weighting coefficient is a weighting coefficient with a maximum modulus value in the $L^{th}$ weighting coefficient set.

56. The apparatus according to claim 54 or 55, wherein the $N^{th}$ weighting coefficient set is determined by a terminal device, or the $N^{th}$ weighting coefficient set is predefined in a protocol.

57. The apparatus according to any one of claims 53 to 56, wherein the transceiver unit is further configured to:

receive a second message, wherein the second message indicates a second weighting coefficient and M-1 third weighting coefficients, the second weighting coefficient is for performing first normalization on the M-1 third weighting coefficients, the second weighting coefficient is a weighting coefficient in a $U^{th}$ weighting coefficient set, the $U^{th}$ weighting coefficient set corresponds to a $u^{th}$ layer, the third weighting coefficient is a weighting coefficient in each of M-1 weighting coefficient sets other than the $U^{th}$ weighting coefficient set in the M weighting coefficient sets, the M-1 weighting coefficient sets are in a one-to-one correspondence with M-1 layers other than the $u^{th}$ layer in the M layers, both U and u are positive integers, and the $u^{th}$ layer belongs to the M layers; and the second weighting coefficient is further for performing second normalization on all weighting coefficients in the $U^{th}$ weighting coefficient set, the third weighting coefficient is for performing third normalization on all weighting coefficients in a weighting coefficient set corresponding to the third weighting coefficient, and the first normalization, the second normalization, and the third normalization are for obtaining the quantized information of the M jointly normalized weighting coefficient sets.

58. The apparatus according to claim 57, wherein the second weighting coefficient is a weighting coefficient with a maximum modulus value in the $U^{th}$ weighting coefficient set, and/or the third weighting coefficient is a weighting coefficient with a maximum modulus value in each of the M-1 weighting coefficient sets other than the $U^{th}$ weighting coefficient set in the M weighting coefficient sets.

59. The apparatus according to any one of claims 53 to 58, wherein the transceiver unit is further configured to:

receive a third message, wherein the third message indicates a fourth weighting coefficient and M-1 fifth weighting coefficients, the fourth weighting coefficient is for performing fourth normalization on the M-1 fifth weighting coefficients, the fourth weighting coefficient is a weighting coefficient in an $X^{th}$ weighting coefficient set, the $X^{th}$ weighting coefficient set corresponds to an $x^{th}$ layer, the fifth weighting coefficient is a weighting coefficient in each of M-1 weighting coefficient sets other than the $X^{th}$ weighting coefficient set in the M weighting coefficient sets, the M-1 weighting coefficient sets are in a one-to-one correspondence with M-1 layers other than the $x^{th}$ layer in the M layers, both X and x are positive integers, and the $X^{th}$ layer belongs to the M layers; and the fourth weighting coefficient is further for performing fifth normalization on all weighting coefficients in the $X^{th}$ weighting coefficient set, the fourth weighting coefficient and the fifth weighting coefficient are further for respectively performing sixth normalization and seventh normalization on all weighting coefficients in a weighting coefficient set corresponding to the fifth weighting coefficient, and the four normalization, the fifth normalization, the sixth normalization, and the seventh normalization are for obtaining the quantized information of the M jointly normalized weighting coefficient sets.

60. The apparatus according to claim 59, wherein the fourth weighting coefficient is a weighting coefficient with a maximum modulus value in the $X^{th}$ weighting coefficient set, and/or the fifth weighting coefficient is a weighting coefficient with a maximum modulus value in each of the M-1 weighting coefficient sets other than the $X^{th}$ weighting coefficient set in the M weighting coefficient sets.

61. A communication apparatus, comprising:

   a communication interface, configured to input and/or output information; and
   a processor, wherein the processor is coupled to a memory; and the processor is configured to execute a computer program stored in the memory, so that the apparatus performs the method according to any one of claims 1 to 7 or 15 to 22, or performs the method according to any one of claims 8 to 14 or 23 to 30.

62. A computer program product, wherein when the computer program product is executed on a computer,

   the computer is enabled to perform the method according to any one of claims 1 to 7 or 15 to 22; or
   the computer is enabled to perform the method according to any one of claims 8 to 14 or 23 to 30.

63. A computer-readable storage medium, wherein

   the computer-readable storage medium stores a computer program; and when the computer program is run,
   a computer is enabled to perform the method according to any one of claims 1 to 7 or 15 to 22; or
   a computer is enabled to perform the method according to any one of claims 8 to 14 or 23 to 30.

FIG. 1

$$C_{DL}^{p} = \sum_{s=1}^{N_{sb}} H_{eq}^{p,s}$$

FIG. 2

300

```
┌─────────────────┐                          ┌─────────────────┐
│    Terminal     │                          │     Network     │
│     device      │                          │     device      │
└────────┬────────┘                          └────────┬────────┘
         │                                            │
┌────────┴─────────────┐                              │
│ Generate first       │                              │
│ indication           │                              │
│ information           │                              │
└────────┬─────────────┘                              │
         │     Send the first indication information  │
         ├───────────────────────────────────────────>│
         │                              ┌──────────────┴───────────────┐
         │                              │ Determine a power difference │
         │                              │ between M layers based on    │
         │                              │ the first indication         │
         │                              │ information                  │
         │                              └──────────────┬───────────────┘
         │                                            │
```

FIG. 3

Exponent

$C_1 = [C_{11} \quad C_{12} \quad ... \quad C_{1K}]$

Coefficient                    Coefficient

$C_2 = [C_{21} \quad C_{22} ... \quad C_{2K}]$

Coefficient    Coefficient    Coefficient

FIG. 4

Exponent

$C_1 = [C_{11} \quad C_{12} \quad ... \quad C_{1K}]$

Coefficient                    Coefficient

Exponent

$C_2 = [C_{21} \quad C_{22} \quad ... \quad C_{2K}]$

Coefficient  Coefficient       Coefficient

FIG. 5

Exponent

$C_1 = [C_{11} \quad C_{12} \quad ... \quad C_{1K}]$

Coefficient                    Coefficient

Exponent

$C_2 = [C_{21} \quad C_{22} \quad ... \quad C_{2K}]$

Coefficient   Coefficient                Coefficient

FIG. 6

700

| Terminal device | | Network device |

S710. First information, indicating first group configuration information and second group configuration information

S720. Precoding matrix indicator PMI corresponding to Z layers

FIG. 7

800

```
┌──────────┐                                      ┌──────────┐
│ Terminal │                                      │ Network  │
│  device  │                                      │  device  │
└────┬─────┘                                      └────┬─────┘
     │                                                 │
     │                          ┌──────────────────────┴──────────┐
     │                          │ S810. Generate a first list      │
     │                          └──────────────────────┬──────────┘
     │                                                 │
     │       S820. Send the first list                 │
     │◄────────────────────────────────────────────────┤
     │                                                 │
     │       S830. Send indication information          │
     │◄────────────────────────────────────────────────┤
     │                                                 │
┌────┴───────────────────────────────────────┐         │
│ S840. Perform PMI quantization              │         │
│ feedback based on the indication            │         │
│ information                                 │         │
└────┬───────────────────────────────────────┘         │
     │                                                 │
```

FIG. 8

900

```
┌──────────┐                                      ┌──────────┐
│ Terminal │                                      │ Network  │
│  device  │                                      │  device  │
└────┬─────┘                                      └────┬─────┘
     │                                                 │
     │                          ┌──────────────────────┴──────────┐
     │                          │ S910. Generate a second list     │
     │                          └──────────────────────┬──────────┘
     │                                                 │
     │       S920. Send the second list                │
     │◄────────────────────────────────────────────────┤
     │                                                 │
     │       S930. Send indication information          │
     │◄────────────────────────────────────────────────┤
     │                                                 │
┌────┴───────────────────────────────────────┐         │
│ S940. Perform PMI quantization              │         │
│ feedback based on the indication            │         │
│ information                                 │         │
└────┬───────────────────────────────────────┘         │
     │                                                 │
```

FIG. 9

Communication
apparatus 1000

Processing unit 1100

Transceiver unit 1200

FIG. 10

Communication apparatus 2000

Processor
2010

Memory
2030

Transceiver
2020

FIG. 11

FIG. 12

FIG. 13

## INTERNATIONAL SEARCH REPORT

| International application No. |
|---|
| **PCT/CN2022/083305** |

| A. | CLASSIFICATION OF SUBJECT MATTER |
|---|---|
| | H04B 7/0452(2017.01)i |

According to International Patent Classification (IPC) or to both national classification and IPC

| B. | FIELDS SEARCHED |
|---|---|

Minimum documentation searched (classification system followed by classification symbols)

H04B H04L H04W

Documentation searched other than minimum documentation to the extent that such documents are included in the fields searched

Electronic data base consulted during the international search (name of data base and, where practicable, search terms used)

CNTXT; CNKI; ENTXT; WPABS; 3GPP: 参考信号, 端口, 频域向量, 频域基向量, 层, 流, 对应, 配置, 加权, 量化, 归一化, RS, reference signal, port, frequency domain vectors, layer, configuration, weight, normalization

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 110855336 A (HUAWEI TECHNOLOGIES CO., LTD.) 28 February 2020 (2020-02-28) description, paragraphs 243-310 | 1-6, 8-13, 31-36, 38-43, 61-63 |
| X | CN 111510189 A (HUAWEI TECHNOLOGIES CO., LTD.) 07 August 2020 (2020-08-07) description, paragraphs 178-184 and 192-321 | 15-18, 23-26, 45-48, 53-56, 61-63 |
| A | US 2019058517 A1 (LG ELECTRONICS INC.) 21 February 2019 (2019-02-21) entire document | 1-63 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 June 2022** | **23 June 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2022/083305**

| Patent document cited in search report | | | Publication date (day/month/year) | Patent family member(s) | | | Publication date (day/month/year) |
|---|---|---|---|---|---|---|---|
| CN | 110855336 | A | 28 February 2020 | EP | 3820054 | A1 | 12 May 2021 |
| | | | | US | 2021194547 | A1 | 24 June 2021 |
| | | | | WO | 2020038154 | A1 | 27 February 2020 |
| | | | | BR | 112021002889 | A2 | 11 May 2021 |
| | | | | JP | 2021534686 | A | 09 December 2021 |
| CN | 111510189 | A | 07 August 2020 | WO | 2020156103 | A1 | 06 August 2020 |
| US | 2019058517 | A1 | 21 February 2019 | EP | 3462664 | A1 | 03 April 2019 |
| | | | | US | 2020127723 | A1 | 23 April 2020 |
| | | | | US | 2020127724 | A1 | 23 April 2020 |
| | | | | KR | 20190010507 | A | 30 January 2019 |
| | | | | CN | 110959268 | A | 03 April 2020 |
| | | | | KR | 20190035633 | A | 03 April 2019 |
| | | | | WO | 2019017751 | A1 | 24 January 2019 |
| | | | | US | 2020127722 | A1 | 23 April 2020 |
| | | | | JP | 2020519214 | A | 25 June 2020 |

Form PCT/ISA/210 (patent family annex) (January 2015)

**EP 4 325 731 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110482373